Europäisches Patentamt

(19) European Patent Office

Office européen des brevets

(11) EP 0 779 631 A2

(12) **EUROPEAN PATENT APPLICATION**

(43) Date of publication:
18.06.1997 Bulletin 1997/25

(51) Int. Cl.⁶: **H01F 7/18**

(21) Application number: 96119873.6

(22) Date of filing: 11.12.1996

(84) Designated Contracting States:
DE GB

(30) Priority: 13.12.1995 JP 324421/95

(71) Applicant: SUMITOMO ELECTRIC INDUSTRIES, LTD.
Osaka-shi, Osaka 541 (JP)

(72) Inventor: Kubota, Masakazu,
c/o Itami Works of
Itami-shi, Hyogo (JP)

(74) Representative: Ritter und Edler von Fischern,
Bernhard, Dipl.-Ing. et al
Hoffmann, Eitle & Partner,
Patentanwälte,
Arabellastrasse 4
81925 München (DE)

(54) **Current control apparatus of pulse-width modulation and its method of controlling current**

(57) A current control apparatus has a pulse generator that generates a pulse signal, a duty instruction circuit that gives a duty cycle to the pulse generator, a driver that drives an inductive load by the pulse signal, a feedback sensor that feeds back the counter electromotive force induced in the inductive load, and a current detector that detects the current flowing in the inductive load and in which, during the non-drive time of the inductive load, the duty instructing circuit gives a non-drive duty for applying to the inductive load a current that does not activate the inductive load, and calculates a drive duty for applying a desired current to the inductive load during the drive time of the inductive load.

*Fig. 2*

Description

BACKGROUND OF THE INVENTION

1. Field of the Invention

The present invention relates to current control apparatus of pulse-width modulation and current control methods that can provide a current of stable values without using a dedicated circuit outputting a pulse signal, for example, in the drive circuit of the electromagnetic valve installed in an oil pressure control apparatus that varies oil pressure depending on the values of applied current.

2. Description of the Related Art

Current control circuits are roughly classified into those of the linear control method and those of the pulse-width modulation method. The linear control method provides switching elements of the circuit with a voltage or current corresponding to a target current to control current. The pulse control method switches two kinds of signals, complete on and complete off, at high speed to control current by varying the ratio of the length of the on period to the length of the off period. The pulse-width modulation method can save power consumption compared with the linear control method.

Consequently, in the linear control method, power consumption in the switching elements is large, so that stable current cannot be provided without the feedback of current values. In contrast, in the pulse-width modulation method, power consumption in switching elements is small, so that comparatively stable current can be provided without the feedback of current values.

However, in the pulse-width modulation method without the feedback of current values, if temperature rises in the load by the flow of current therein, so that the resistance value changes, or if the value of source voltage provided to the load fluctuates in the case of using batteries as in a vehicle-installed system, then the value of current flowing in the load fluctuates consequently.

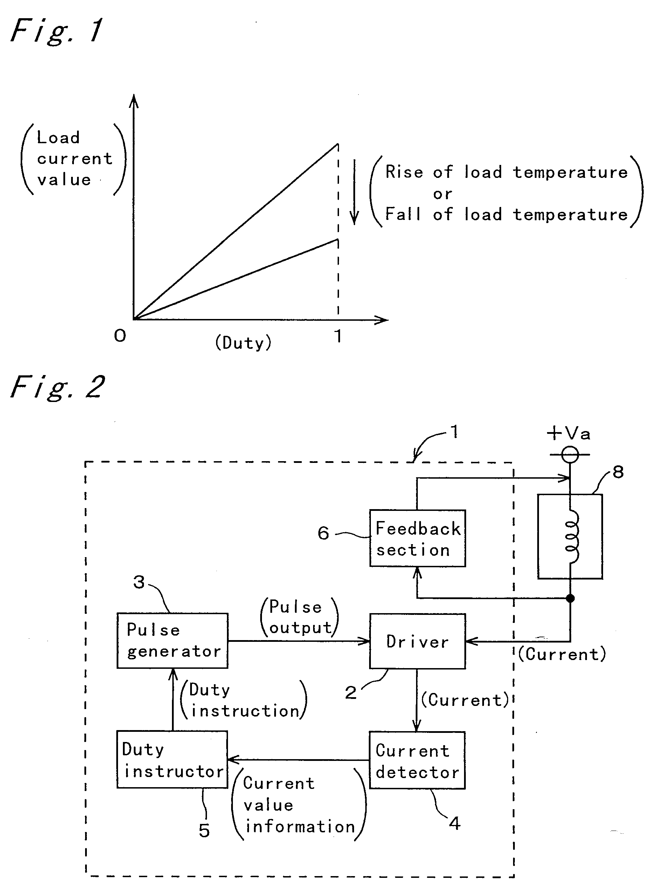

Fig. 1 is a graph showing the relation between the duty cycle (abbreviated to *duty* in the figure) of the pulse signal and the value of current flowing in the load in the case where current control of pulse-width modulation is performed for an inductive load. As shown in Fig. 1, in the case of a configuration in which the current control circuit does not feed back the value of the current in the load, when a current is continuously applied to the load, then the load resistance value rises by self-heating, so that the value of the load current becomes small. Similarly, in the case where the value of the source voltage provided to the load fluctuates, the value of the load current fluctuates. Here, a pulse signal may have a duty cycle between 0 and 1, and may have the duty cycle 0 or the duty cycle 1.

In order to solve these problems, a control circuit or control apparatus is disclosed in Japanese Pat. Publications Tokkai-Sho 60-132182 and Tokkai-Hei 5-213173. The control circuit or control apparatus disclosed in these publications uses a current detecting circuit that detects the value of the current flowing in the load, and performs feedback control that controls the current flowing in the load by feeding back the detected value of the load current.

The above method uses a dedicated circuit for outputting a pulse signal. However, many of the recent microcomputers have a function of generating a pulse signal. Therefore, for example, in a system apparatus such as an ABS controller, using the pulse signal generating function of a microcomputer is cost-effective.

However, the current feedback disclosed in the above Japanese Pat. publications becomes impossible, if the pulse signal generating function is used. Therefore, in the current feedback system, the current value fluctuates caused by fluctuations of the load resistance value or the source voltage value.

SUMMARY OF THE INVENTION

The present invention was made to solve the above problems. Its object is therefore to obtain a current control apparatus and a method of current control in which the load current does not fluctuate caused by fluctuations of the load resistance value or the source voltage value, and a microcomputer having a function of generating a pulse signal can be used.

In order to achieve the aforementioned objective, according to claim 1 of the present invention, in current control apparatus that performs current control for an inductive load with pulse-width modulation, there is provided a current control apparatus of pulse-width modulation comprising: a pulse generating means that generates and outputs a pulse signal, a duty instructing means that gives a duty cycle of the pulse signal to the pulse generating means, a drive means that drives an inductive load with the pulse signal output from the pulse generating means, a feedback means that feeds back the current generated by the counter electromotive force that occurs in the inductive load, and a current detecting means that detects current value information about the value of the current flowing in the inductive load.

The current control apparatus is characterized in that during the non-drive time of the inductive load, the duty instructing means gives to the pulse generating means a non-drive duty, which is a duty cycle for applying a current by which the inductive load does not operate into the inductive load, and calculates a drive duty, which is a duty cycle for applying a desired current into the inductive load during the drive time of the inductive load, from the current value information from the current detecting means and the non-drive duty.

In this way, during the non-drive time of the inductive load, the duty instructing means gives the non-drive duty to the pulse generating means and calculates the drive duty from the current value information about the current that flows in the inductive load by the non-drive duty and from the drive duty. Therefore, fluctuations in the current flowing in the inductive load caused by fluctuations in the load resistance value of the inductive load and fluctuations in the source voltage value can be eliminated, so that the accuracy of the current value of the current flowing in the inductive load is improved, and the operation of the inductive load is secured.

According to claim 2 of the present invention, during non-control time when current control is not performed, the duty instructing means in claim 1 gives the non-drive duty to the pulse generating means and calculates the drive duty for current control time from the non-drive duty and the current value information from the current detecting means about the saturation current flowing in the inductive load by the pulse signal of the non-drive duty. During non-control time when current control is not performed, the duty instructing means gives the non-drive duty and calculates the drive duty from the non-drive duty and the current value information about the current flowing in the inductive load by the pulse signal of the non-drive duty. Therefore, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 3 of the present invention, the current detecting means in claims 1 and 2 comprises a circuit that converts current into voltage and a low-pass filter circuit. The detected current value is converted into voltage, and the converted voltage is passed through a low-pass filter. Therefore, the load current value in the inductive load can be detected with arbitrary timing, and the current value can be received as a voltage value. Therefore, arithmetic processing can be simplified, and fluctuations in the current flowing in the inductive load caused by fluctuations in the load resistance value of the inductive load and fluctuations in the source voltage value can be eliminated.

According to claim 4 of the present invention, the duty instructing means in claims 1 to 3 gives the drive-duty to the pulse generating means during current control time and, if the period during which the duty cycle is constant is longer than the period taken by the current flowing in the inductive load to be in the saturation state, further calculates and renews a drive duty from the drive duty and the current information value about the saturation current flowing in the inductive load by the pulse signal of the drive duty. During current control time, the inductive load heats up by being driven, so that the load resistance value of the inductive load changes, and the source voltage value may change. Therefore, the drive duty has to be renewed from time to time. If the period during which the calculated drive duty is constant is longer than the time taken by the current flowing in the inductive load to be in the saturation state, then the drive duty is calculated and renewed by the same method as during non-control time when current control is not performed. Therefore, the operation of calculating the drive duty in the current control apparatus is simplified.

According to claim 5 of the present invention, in current control apparatus that performs current control for an inductive load with pulse-width modulation, there is provided a current control apparatus of pulse-width modulation comprising: a pulse generating means that generates and outputs a pulse signal and outputs signal information about the pulse signal, a duty instructing means that gives a duty cycle of the pulse signal to the pulse generating means, a drive means that drives an inductive load with the pulse signal output from the pulse generating means, a feedback means that feeds back the current generated by the counter electromotive force that occurs in the inductive load, and a current detecting means that detects current value information about the value of the current flowing in the inductive load.

The current control apparatus is characterized in that during the non-drive time of the inductive load, the duty instructing means gives to the pulse generating means a non-drive duty, which is a duty cycle for applying a current by which the inductive load does not operate into the inductive load, and calculates a drive duty, which is a duty cycle for applying a desired current into the inductive load during the drive time of the inductive load, from the signal information from the pulse generating means about the output pulse signal of the non-drive duty, the current value information from the current detecting means, and the non-drive duty.

In this way, the current caused by the counter electromotive force induced in the inductive load is fed back, and during the non-drive time of the inductive load, the duty instructing means gives the non-drive duty and calculates the drive duty from signal information about the pulse signal of the given non-drive duty, current value information about the current flowing in the inductive load by the pulse signal of the non-drive duty, and the non-drive duty, Therefore, fluctuations in the current flowing in the inductive load caused by fluctuations in the load resistance value of the inductive load and fluctuations in the source voltage value can be eliminated, so that the accuracy of the current value of the current flowing in the inductive load is improved, and the operation of the inductive load is secured.

According to claim 6 of the present invention, during non-control time when current control is not performed, the duty instructing means in claim 5 gives to the pulse generating means a non-drive duty, which is a duty cycle for applying a current by which the inductive load does not operate into the inductive load, and calculates the drive duty for current control time from the signal information for identifying, during one period of the pulse signal output from the pulse generating means, a period when a current flows in the inductive load by the drive means and a period when a current flows in the inductive load by the counter electromotive force induced in the inductive load, the current value information from the current detecting means at the saturation time when changes in the average current value of the current flowing in the inductive load by the pulse signal of the non-drive duty become small within a predetermined value, and the non-drive duty.

In this way, during non-control time when current control is not performed, the duty instructing means calculates the drive duty from the signal information for identifying, during one period of the pulse signal output from the pulse generating means, a period when a current flows in the inductive load by the drive means and a period when a current flows in the inductive load by the counter electromotive force induced in the inductive load, the current value information about the current in the saturation state, and the non-drive duty. Therefore, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 7 of the present invention, the feedback means in claims 5 and 6 is installed so that the feedback current by the feedback means is not detected by the current detecting means; the signal information in claims 5 and 6 is time information that expresses the elapsed time from the time when the level of the pulse signal of the non-drive duty changes so that a current starts to flow in the inductive load; and the duty instructing means in claims 5 and 6 detects, from the time information and the non-drive duty, a period when a current flows in the inductive load by the drive means, receives the current value information at the saturation time during the period from the current detecting means, calculates the average value of the current flowing in the inductive load during the period, from the current value information, the time information, and the non-drive duty, and calculates the drive duty for current control time from the average current value and the non-drive duty.

In this way, in the case where a current detecting means does not detect feedback current, during non-control time when current control is not performed, the duty instructing means detects a period when a current flows in the inductive load by the drive means from the time information and the non-drive duty, receives the current value information at the saturation time during the period from the current detecting means, calculates the average value of the current flowing in the inductive load during the period, from the current value information, the time information, and the non-drive duty, and calculates the drive duty for current control time from the average current value and the non-drive duty. Therefore, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 8 of the present invention, the feedback means in claims 5 and 6 is installed so that the feedback current by the feedback means is not detected by the current detecting means; the signal information in claims 5 and 6 is time information that expresses the elapsed time from the time when the level of the pulse signal of the non-drive duty changes so that a current starts to flow in the inductive load; and the duty instructing means in claims 5 and 6 detects, from the time information and the non-drive duty, a period when a current flows in the inductive load by the drive means, receives a plurality of times the current value information at the saturation time during the period from the current detecting means, receives, from the pulse generating means, the time information corresponding to the current value information, calculates the average value of the current value information and the average value of the time information, calculates the average value of the current flowing in the inductive load during the period, from the average value of the current value information, the average value of the time information, and the non-drive duty, and calculates the drive duty for current control time from the average current value and the non-drive duty.

In this way, in the case where a feedback means does not detect the feedback current, during non-control time when current control is not performed, the duty instructing means detects a period when a current flows in the inductive load by the drive means from the time information and the non-drive duty, receives the current value information several times after the saturation time during the period, receives the time information corresponding to the current value information, calculates the average value of the current value information and the average value of the time information, calculates the average value of the current flowing in the inductive load during the period, from the average value of the current value information, the average value of the time information, and the non-drive duty, and calculates the drive duty for current control time from the average current value and the non-drive duty. Therefore, fluctuations in the current flowing in the inductive load caused by fluctuations in the load resistance value of the inductive load and fluctuations in the source voltage value can be eliminated. Further, detection errors due to the noise of the current flowing in the inductive load can be made small. Further, in the starting time of current control, the accuracy of the current value of the current flowing in the inductive load is improved, and the operation of the inductive load is secured.

According to claim 9 of the present invention, the duty instructing means in claim 8 further monitors the source voltage value and calculates the average current value by giving weightings to the received current value information, if the source voltage value fluctuates during the time when the current value information is received from the current detecting means. If the duty instructing means detects fluctuations in the source voltage value during the time when it is receiving the current value information from the current detecting means, then the duty instructing means calculates the average current value by giving weightings to the received current value information. Therefore, errors of the current value information due to fluctuations in the source voltage value can be reduced in the case of sampling the current value information several times.

According to claim 10 of the present invention, the duty instructing means in claims 7 to 9 detects, from the time information, during one period of the pulse signal, the elapsed time from the time when a current starts to flow in the inductive load by the drive means to the time when the current value information is received, calculates the ratio of the elapsed time to the period when a current flows in the inductive load by the drive means during one period of the pulse signal, calculated from the non-drive duty, and calculates the average current value by correcting the received current value information based on the ratio.

In this way, during non-control time when current control is not performed, the duty instructing means detects, from the time information, during one period of the pulse signal, the elapsed time from the time when a current starts to flow in the inductive load by the drive means to the time when the current value information is received, calculates the ratio of the elapsed time to the period when a current flows in the inductive load during one period of the pulse signal, and calculates the average current value by correcting the received current value information based on the ratio. Therefore, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 11 of the present invention, the feedback means in claims 5 and 6 is installed so that the feedback current by the feedback means is also detected by the current detecting means; the signal information in claims 5 and 6 is time information that expresses the elapsed time from the time when the level of the pulse signal of the non-drive duty changes so that a current starts to flow in the inductive load; and the duty instructing means in claims 5 and 6 receives the current value information at the saturation time from the current detecting means, receives the time information from the pulse generating means, identifies the period to which the received current value information belongs, either as a period when a current flows in the inductive load by the drive means or as a period when a current flows in the inductive load by the counter electromotive force induced in the inductive load, calculates the average value of the current flowing in the inductive load over the identified period, and calculates a drive duty for current control time from the average current value and the non-drive duty.

In this way, in the case where a current detecting means also detects the feedback current, during non-control time when current control is not performed, the duty instructing means receives the current value information at the saturation time, receives the time information, identifies the period to which the received current value information belongs, either as a period when a current flows in the inductive load by the drive means or as a period when a current flows in the inductive load by the counter electromotive force induced in the inductive load, calculates the average value of the current flowing in the inductive load over the identified period, and calculates a drive duty for current control time from the average current value and the non-drive duty. Therefore, the current value information can be detected with arbitrary timing, so that the detection processing can be simplified. Further, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 12 of the present invention, the feedback means in claims 5 and 6 is installed so that the feedback current by the feedback means is also detected by the current detecting means; the signal information in claims 5 and 6 is time information that expresses the elapsed time from the time when the level of the pulse signal of the non-drive duty changes so that a current starts to flow in the inductive load; and the duty instructing means in claims 5 and 6 receives the current value information a plurality of times after the saturation time from the current detecting means with arbitrary timing, receives, from the pulse generating means, the time information corresponding to the current value information, classifies the received current value information, based on the time information and the non-drive duty, into the information during a period when a current flows in the inductive load by the driving means and the information during a period when a current flows in the inductive load by the counter electromotive force induced in the inductive load, calculates the average value of the received current value information and the average value of the time information for each period, calculates therefrom and from the non-drive duty the average value of the current flowing in the inductive load for each period, and calculates the drive duty for current control time, from the current value obtained by averaging the calculated average current values in both periods and from the non-drive duty.

In this way, in the case where a current detecting means also detects the feedback current, during non-control time when current control is not performed, the duty instructing means receives the current value information several times after the saturation time, receives the time information corresponding to the current value information, classifies the received current value information, based on the time information and the non-drive duty, into the information during a period when a current flows in the inductive load by the driving means and the information during a period when a current flows in the inductive load by the counter electromotive force induced in the inductive load, calculates the average value of the current flowing in the inductive load for each period, from the average value of the received current value information and the average value of the time information for each period and from the non-drive duty, and calculates the drive duty for current control time, from the current value obtained by averaging the calculated average current values in both periods and from the non-drive duty. Therefore, the current value information can be detected with arbitrary timing, so that the detection processing can be simplified. Further, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 13 of the present invention, the duty instructing means in claim 12 monitors the source voltage value and calculates the average current value by giving weightings to the received current value information, if the source voltage value fluctuates during the time when the current value information is received from the current detecting means. The duty instructing means monitors the source voltage value and calculates the average current value by giving weightings to the received current value information, if source voltage fluctuates during the time when the current value information is received. Therefore, errors of the current value information due to fluctuations in the source voltage value can be reduced in the case of sampling the current value information several times.

According to claim 14 of the present invention, the duty instruction means in claims 11 to 13 detects, from the time information, during one period of the pulse signal, the elapsed time from the beginning of the corresponding identified period to the time when the current value information is received, calculates the ratio of the elapsed time to the corresponding identified period, and calculates the average current value by correcting the received current value information based on the ratio.

In this way, during con-control time when current control is not performed, the duty instructing means detects, from the time information, during one period of the pulse signal, the elapsed time from the beginning of the corresponding identified period to the time when the current, value information is received, calculates the ratio of the elapsed time to the corresponding identified period, and calculates the average current value by correcting the received current value information based on the ratio. Therefore, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 15 of the present invention, the duty instructing means in claims 1 to 14 further monitors the source voltage value and corrects and gives the drive duty in inverse proportion to the difference between the monitored value and a predetermined value. Before giving the non-drive duty to the pulse generating means, the instructing means corrects the drive duty in proportion to the difference between the monitored value and a predetermined value. Therefore, the current flowing in the inductive load by a pulse signal of the non-drive duty does not fluctuate even if the source voltage value fluctuates. Therefore, the detection accuracy of the current value of the current flowing in the inductive load by the pulse signal of the non-drive duty can be optimized and improved.

According to claim 16 of the present invention, the duty instructing means of claim 5 monitors source voltage value, and during non-control time when current control is not performed, gives to the pulse generating means the duty cycle 1 for a time so that the inductive load does not operate, and calculates the drive duty for current control time from the signal information for identifying, in the pulse signal output from the pulse generating means, a period when a current flows in the inductive load by the drive means and a period when a current flows in the inductive load by the counter electromotive force induced in the inductive load, the current value information from the current detecting means, and the source voltage value at the time when the current value information was detected.

In this way, the duty instructing means monitors source voltage value, and during non-control time when current control is not performed, calculates the drive duty for current control time from the signal information for identifying, in the pulse signal output from the pulse generating means, a period when a current flows in the inductive load by the drive means and a period when a current flows in the inductive load by the counter electromotive force induced in the inductive load, the current value information from the current detecting means, and the source voltage value at the time when the current value information was detected. Therefore, during non-control time when current control is not performed, the duty instructing means can calculate the drive duty without waiting until the saturation time when changes in the average current value of the current flowing in the inductive load by the pulse signal of the non-drive duty become small within a predetermined value. Therefore, time until the drive duty is calculated can be shortened. Further, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 17 of the present invention, the signal information in claim 16 is time information that expresses the elapsed time from the time when the pulse generating means outputs a pulse signal of the duty 1 into the drive means, so that the level of the pulse signal changes and a current starts to flow in the inductive load; and the duty instructing means in claim 16 receives current value information from the current detecting means, receives the time information from the pulse generating means, identifies the period to which the received current value information belongs either as a period when a current flows in the inductive load by the drive means or as a period when a current flows in the inductive load by the counter electromotive force induced in the inductive load, based on the time information and the time when the duty 1 was given, calculates the load resistance value of the inductive load during the identified period from the time information, the received current value information, and the source voltage value at the time of receiving the current value information, and calculates the drive duty for current control time.

In this way, the duty instructing means monitors the source voltage value, and during non-control time when current control is not performed, receives the current value information and the time information, identifies the period to which the received current value information belongs either as a period when a current flows in the inductive load by the drive means or as a period when a current flows in the inductive load by the counter electromotive force induced in the inductive load, based on the time information and the time when the duty 1 was given, calculates the load resistance value of the inductive load during the identified period from the time information, the received current value information, and the source voltage value at the time of receiving the current value information, and calculates the drive duty for current control time. Therefore, during non-control time when current control is not performed, the duty instructing means can calculate the drive duty without waiting until the saturation time when changes in the average current value of the current flowing in the inductive load by the pulse signal of the non-drive duty become small within a predetermined value. Therefore, time until the drive duty is calculated can be shortened. Further, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 18 of the present invention, the current detecting means in claims 5 to 17 is a circuit that converts current into voltage. The current detecting means converts the current flowing in the inductive load into voltage, so that the duty instructing means can process the voltage value as the current value information. Therefore, a filter circuit becomes unnecessary, and cost reduction can be achieved.

According to claim 19 of the present invention, during current control time, the duty instructing means in claims 5 to 18 gives the drive-duty to the pulse generating means, if the period during which the duty cycle is constant is longer than the period taken by the current flowing in the inductive load to be in the saturation state, and further calculates and renews a drive duty from the signal information from the pulse generating means in a pulse signal of the drive duty, current value information about the saturation current flowing in the inductive load by the pulse signal of the drive duty, and the drive duty. In this way, during current control time, the inductive load heats up by being driven, so that the load resistance value of the inductive load changes, and the source voltage value may change. Therefore, the drive duty has to be renewed from time to time. If the period during which the calculated drive duty is constant is longer than the time taken by the current flowing in the inductive load to be in the saturation state, then the drive duty is calculated and renewed by the same method as during non-control time when current control is not performed. Therefore, the operation of calculating the drive duty in the current control apparatus is simplified.

According to claim 20 of the present invention, during current control time, the duty instructing means in claims 1 to 19 monitors the source voltage value and corrects and gives the calculated newest drive duty in inverse proportion to the difference between the monitored source voltage value and a predetermined value. In this way, if the duty instructing means detects fluctuations in the source voltage value, then it corrects the calculated newest drive duty in proportion to the fluctuations. Therefore, the accuracy of the current value of the current flowing in the inductive load by the calculated drive duty can be maintained, even if the source voltage value fluctuates.

According to claim 21 of the present invention, the duty instructing means in claims 1 to 21 corrects and gives the calculated newest drive duty depending on the rate of change in the load resistance value of the inductive load during current control time. In this way, during current control time, if the load resistance value of the inductive load fluctuates, the duty instructing means corrects the calculated newest drive duty depending on the rate of change in the load resistance value of the inductive load. Therefore, the accuracy of the current value of the current flowing in the inductive load by the calculated drive duty can be maintained, even if the source voltage value fluctuates.

According to claim 22 of the present invention, the duty instructing means monitors the source voltage value and calculates the rate of change in the load resistance value from currents having flowed in the inductive load by the drive duty calculated before correcting the drive duty, the time periods when currents flowed, and the average value of the source voltage monitored at these time periods. The duty instructing means calculates the rate of change in the load resistance value from the drive history of the inductive load before the correction of the drive duty is performed, and corrects the calculated newest drive duty depending on the rate of change in the load resistance value of the inductive load. Therefore, the accuracy of the current value of the current flowing in the inductive load by the calculated drive duty can be maintained.

According to claim 23 of the present invention, the inductive load in claims 1 to 22 is a three-position switching electromagnetic valve that changes its position corresponding to the values of applied current and is used for switching pressurization, holding, and decompression of brake fluid in an ABS control apparatus of a vehicle. In this way, the current control apparatus can improve the accuracy of the current value of the current provided to the three-position switching electromagnetic valve during ABS control time, and the operation of the electromagnetic valve can be secured. Therefore, the performance of ABS control can be improved.

According to claim 24 of the present invention, the set of the pulse generating means and duty instructing means in claims 1 to 23 is a microcomputer having an A/D converter. In this way, the current control apparatus can reduce the number of used parts by the use of an existing microcomputer, so that the costs can be reduced.

According to claim 25 of the present invention, in current control methods that perform current control for an inductive load with pulse-width modulation, there is provided a current control method of pulse-width modulation that, in non-drive time of an inductive load, generates a pulse signal of a non-drive duty that is a duty cycle for applying a current by which the inductive load does not operate into the inductive load, applys a current by the pulse signal into the inductive load feeds back the current caused by the counter electromotive force induced in the inductive load, detects current value information about the current flowing in the inductive load, and calculates a drive duty that is a duty cycle for applying a desired current into the inductive load during the drive time of the inductive load, from the non-drive duty and the current value information.

In this way, during non-control time when current control is not performed, the present method of current control gives the non-drive duty and calculates the drive duty from the current value information about the current flowing in the inductive load by the pulse signal of the non-drive duty and from the non-drive duty. Therefore, fluctuations in the current flowing in the inductive load caused by fluctuations in the load resistance value of the inductive load and fluctuations in the source voltage value can be eliminated, so that the accuracy of the current value of the current flowing in the inductive load is improved, and the operation of the inductive load is secured.

According to claim 26 of the present invention, during current control time, the current control method in claim 25 further calculates and renews a drive duty from the drive duty and the current information value about the saturation current flowing in the inductive load by the pulse signal of the drive duty, if the period during which the duty cycle is constant is longer than the period taken by the current flowing in the inductive load to be in the saturation state. During current control time, the inductive load heats up by being driven, so that the load resistance value of the inductive load changes, and the source voltage value may change. Therefore, the drive duty has to be renewed from time to time. If the period during which the calculated drive duty is constant is longer than the time taken by the current flowing in the inductive load to be in the saturation state, then the drive duty is calculated and renewed by the same method as during non-control time when current control is not performed. Therefore, the operation of calculating the drive duty in a current control apparatus is simplified.

According to claim 27 of the present invention, in current control methods that perform current control for an inductive load with pulse-width modulation, there is provided a current control method of pulse-width modulation that, during non-control time when current control is not performed, generates a pulse signal of a non-drive duty that is a duty cycle for applying a current by which the inductive load does not operate into the inductive load, applys a current by the pulse signal into the inductive load, feeds back the current caused by the counter electromotive force induced in the inductive load, detects current value information about the current flowing in the inductive load, and calculates a drive duty, which is a duty cycle for applying a desired current into the inductive load during current control time, from the non-drive duty, signal information about the pulse signal of the non-drive duty, and the current value information.

In this way, during non-control time when current control is not performed, the present method of current control calculates the non-drive duty from signal information about the pulse signal, the current value information about the saturation current flowing in the inductive load, and the non-drive duty. Therefore, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 28 of the present invention, the current control method defined in claim 27 is further characterized in that feedback current is not detected; the signal information is time information that expresses the elapsed time from the time when the level of the pulse signal of the non-drive duty changes so that a current starts to flow in the inductive load; and the current control method detects, from the time information and the non-drive duty, a period when a current from a current source flows in the inductive load, receives the current value information during that period and at the saturation time when changes in the average current value of the current flowing in the inductive load by the pulse signal of the non-drive duty become small within a predetermined value, calculates the average value of the current flowing in the inductive load during the period, from the current value information, the time information, and the non-drive duty, and calculates the drive duty for current control time from the average current value and the non-drive duty.

In this way, in the case where the feedback current is not detected as current value information, during non-control time when current control is not performed, the present method of current control detects, from the time information and the non-drive duty, a period when a current from a current source flows in the inductive load, receives the current value information at the saturation time during that period, calculates the average value of the current flowing in the inductive load during the period, from the current value information, the time information, and the non-drive duty, and calculates the drive duty for current control time from the average current value and the non-drive duty. Therefore, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 29 of the present invention, the current control method defined in claim 27 is further characterized in that the feedback current is not detected; the signal information is time information that expresses the elapsed time from the time when the level of the pulse signal of the non-drive duty changes so that a current starts to flow in the inductive load; and the current control method detects, from the time information and the non-drive duty, a period when a current from a current source flows in the inductive load, receives a plurality of times the current value information, during the period, after the saturation time when changes in the average current value of the current flowing in the inductive load by the pulse signal of the non-drive duty become small within a predetermined value, receives the time information corresponding to the current value information, calculates the average value of the current value information and the average value of the time information, calculates the average value of the time information, from the average value of the current value information, and the non-drive duty, the average value of the current flowing in the inductive load during the period, and calculates the drive duty for current control time from the average current value and the non-drive duty.

In this way, in the case where the feedback current is not detected as current value information, during non-control time when current control is not performed, the present method of current control detects, from the time information and the non-drive duty, a period when a current from a current source flows in the inductive load, receives the current value information several times after the saturation time during that period, receives the time information corresponding to the current value information, calculates the average value of the current value information and the average value of the time information, calculates the average value of the current flowing in the inductive load during the period, from the average value of the current value information, the average value of the time information, and the non-drive duty, and calculates the drive duty for current control time from the average current value and the non-drive duty. Therefore, fluctuations in the current flowing in the inductive load caused by fluctuations in the load resistance value of the inductive load and fluctuations in the source voltage value can be eliminated. Further, detection errors due to the noise of the current flowing in the inductive load can be made small. Further, in the starting time of current control, the accuracy of the current value of the current flowing in the inductive load is improved, and the operation of the inductive load is secured.

According to claim 30 of the present invention, the current control method defined in claim 29 monitors the source voltage value and calculates the average current value by giving weightings to the received current information, if the source voltage value fluctuates during the time when the current value information is received. The current control method monitors the source voltage value and calculates the average current value by giving weightings to the received current value information, if source voltage fluctuates during the time when the current value information is received. Therefore, errors of the current value information due to fluctuations in the source voltage value can be reduced in the case of sampling the current value information several times.

According to claim 31 of the present invention, the current control method defined in claims 28, 29, and 30 detects, from the time information, during one period of the pulse signal, the elapsed time from the time when a current from a current source starts to flow in the inductive load to the time when the current value information is received, calculates the ratio of the elapsed time to the period when a current from the current source flows in the inductive load during one period of the pulse signal, calculated from the non-drive duty, and calculates the average current value by correcting the received current value information based on the ratio.

In this way, during non-control time when current control is not performed, the current control method detects, from the time information, during one period of the pulse signal, the elapsed time from the time when a current from a current source starts to flow in the inductive load to the time when the current value information is received, calculates the ratio of the elapsed time to the period when a current from the current source flows in the inductive load during one period of the pulse signal, and calculates the average current value by correcting the received current value information based on the ratio. Therefore, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 32 of the present invention, the current control method defined in claim 27 is further characterized in that the feedback current is also detected as current value information; the signal information is time information that expresses the elapsed time from the time when the level of the pulse signal of the non-drive duty changes so that a current from the current source starts to flow in the inductive load; and the current control method receives the current value information at the saturation time when changes in the average current value of the current flowing in the inductive load by the pulse signal of the non-drive duty become small within a predetermined value, receives the time information, identifies the period to which the received current value information belongs either as a period when a current from the current source flows in the inductive load or as a period when a current flows in the inductive load by the counter electromotive force induced in the inductive load, calculates the average value of the current flowing in the inductive load over the identified period, from the time information, the non-drive duty, and the received current value information, and calculates a drive duty for current control time from the average current value and the non-drive duty.

In this way, in the case where the feedback current is also detected as current value information, during non-control time when current control is not performed, the current control method receives the current value information at the saturation time, receives the time information, identifies, from the time information and the non-drive duty, the period to which the received current value information belongs either as a period when a current from the current source flows in the inductive load or as a period when a current flows in the inductive load by the counter electromotive force induced in the inductive load, calculates the average value of the current flowing in the inductive load over the identified period, from the time information, the non-drive duty, and the received current value information, and calculates a drive duty for current control time from the average current value and the non-drive duty. Therefore, the current value information can be detected with arbitrary timing, so that the detection processing can be simplified. Further, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 33 of the present invention, the current control method defined in claim 27 is further characterized in that the feedback current is also detected as current value information; the signal information is time information that expresses the elapsed time from the time when the level of the pulse signal of the non-drive duty changes so that a current from the current source starts to flow in the inductive load; and the current control method receives, after the saturation time when changes in the average current value of the current flowing in the inductive load by the pulse signal of the non-drive duty become small within a predetermined value, the current value information a plurality of times from the current detecting means with arbitrary timing, receives the time information corresponding to the current value information, classifies the received current value information, based on the time information and the non-drive duty, into the information during a period when a current from the current source flows in the inductive load and the information during a period when a current flows in the inductive load by the counter electromotive force induced in the inductive load, calculates the average value of the received current value information and the average value of the time information for each period, calculates therefrom and from the non-drive duty the average value of the current flowing in the inductive load for each period, and calculates the drive duty for current control time, from the current value obtained by averaging the calculated average current values in both periods and from the non-drive duty.

In this way, in the case where the feedback current is also detected as current value information, during non-control time when current control is not performed, the current control method receives the current value information several times after the saturation time with arbitrary timing, receives the time information corresponding to the current value information, classifies the received current value information, based on the time information and the non-drive duty, into the information during a period when a current from the current source flows in the inductive load and the information during a period when a current flows in the inductive load by the counter electromotive force induced in the inductive load, calculates the average value of the current flowing in the inductive load for each period, from the calculated average value of the received current value information and average value of the time information for each period and the non-drive duty, and calculates the drive duty for current control time, from the current value obtained by averaging the calculated average current values in both periods and from the non-drive duty. Therefore, the current value information can be detected with arbitrary timing, so that the detection processing can be simplified. Further, detection errors due to the noise of the current flowing in the inductive load can be made small. Further, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 34 of the present invention, the current control method in claim 33 monitors the source voltage value and calculates the average current value by giving weightings to the received current information, if the source voltage value fluctuates during the time when the current value information is received. The current control method monitors the source voltage value and calculates the average current value by giving weightings to the received current value information, if source voltage fluctuates during the time when the current value information is received. Therefore, errors of the current value information due to fluctuations in the source voltage value can be reduced in the case of sampling the current value information several times.

According to claim 35 of the present invention, the current control method in claims 27 to 34 detects, from the time information, during one period of the pulse signal, the elapsed time from the beginning of the corresponding identified period to the time when the current value information is received, calculates the ratio of the elapsed time to the corresponding identified period, and calculates the average current value by correcting the received current value information based on the ratio.

In this way, during non-control time when current control is not performed, the current control method detects, from the time information, during one period of the pulse signal, the elapsed time from the beginning of the corresponding identified period to the time when the current value information is received, calculates the ratio of the elapsed time to the corresponding identified period, and calculates the average current value by correcting the received current value information based on the ratio. Therefore, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 36 of the present invention, the current control method in claims 26 to 35 monitors the source voltage value and corrects and gives the drive duty in proportion to the difference between the monitored source voltage value and a predetermined value. The current control method corrects the drive duty in inverse proportion to the fluctuations in the source voltage value. Therefore, the current value of the current flowing in the inductive load by the pulse signal of the non-drive duty does not fluctuate by the fluctuations in the source voltage value, so that the detection accuracy in the current value of the current flowing in the inductive load for the non-drive duty can be optimized and improved.

According to claim 37 of the present invention, in current control methods that perform current control for an inductive load with pulse-width modulation, there is provided a current control method of pulse-width modulation that, during non-control time when current control is not performed, monitors the source voltage value, applys a current into the inductive load, for a time so that the inductive load does not operate, by a pulse signal of duty 1, feeds back the current caused by the counter electromotive force induced in the inductive load, receives current value information about the current flowing in the inductive load, receives signal information for identifying a period when a current from a current source flows in the inductive load by the drive means and a period when a current flows in the inductive load by the counter electromotive force induced in the inductive load, and calculates, from the signal information, the current value information, and the source voltage value at the time when the current value information was received, a drive duty that is a duty cycle for applying a desired current into the inductive load during current control time.

In this way, the current control method feeds back the current caused by the counter electromotive force induced in the inductive load, monitors the source voltage value, and during non-control time when current control is not performed, calculates the non-drive duty for control time from the signal information for identifying a period when a current from a current source flows in the inductive load by the drive means and a period when a current flows in the inductive load by the counter electromotive force induced in the inductive load, the current value information, and the source voltage value at the time when the current value information was received. Therefore, during non-control time when current control is not performed, the duty instructing means can calculate the drive duty without waiting until the saturation time when changes in the average current value of the current flowing in the inductive load by the pulse signal of the non-drive duty become small within a predetermined value. Therefore, time until the drive duty is calculated can be shortened. Further, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 38 of the present invention, the signal information in claim 37 is time information that expresses the elapsed time from the time when the level of the pulse signal of the duty 1 changes so that a current from the current source starts to flow in the inductive load; and the current control method receives the current value information, receives the time information, identifies, from the time information and the time during which a current from the current source flows in the inductive load by the pulse signal of the duty 1, the period to which the received current value information belongs either as a period when a current from the current source flows in the inductive load or as a period when a current flows in the inductive load by the counter electromotive force induced in the inductive load, calculates, from the time information, the received current value information, and the source voltage value at the time the received current value information was received, the load resistance value of the inductive load during the identified period, and calculates the drive duty for current control time.

In this way, the current control method monitors the source voltage value, and during non-control time when current control is not performed, receives the current value information and the time information, identifies, from the time information and the time when the duty cycle 1 was given, the period to which the received current value information belongs either as a period when a current from the current source flows in the inductive load or as a period when a current flows in the inductive load by the counter electromotive force induced in the inductive load, calculates the load resistance value of the inductive load during the identified period, from the time information, the received current value information, and the source voltage value at the time the received current value information was received, and calculates the drive duty for current control time. Therefore, during non-control time when current control is not performed, the duty instructing means can calculate the drive duty without waiting until the saturation time when changes in the average current value of the current flowing in the inductive load by the pulse signal of the non-drive duty become small within a predetermined value. Therefore, time until the drive duty is calculated can be shortened. Further, fluctuations in the current flowing in the inductive load caused by fluctuations in the load resistance value of the inductive load and fluctuations in the source voltage value can be eliminated. Further, in the starting time of current control, the accuracy of the current value of the current flowing in the inductive load is improved, and the operation of the inductive load is secured.

According to claim 39 of the present invention, during current control time, if the period during which the duty cycle is constant is longer than the period taken by the current flowing in the inductive load to be in the saturation state, the current control method in claims 27 to 38 further calculates and renews a drive duty from the signal information in the pulse signal of the drive duty and the current information value about the saturation current flowing in the inductive load by the pulse signal of the drive duty. During current control time, the inductive load heats up by being driven, so that the load resistance value of the inductive load changes, and the source voltage value may change. Therefore, the drive duty has to be renewed from time to time. If the period during which the calculated drive duty is constant is longer than the time taken by the current flowing in the inductive load to be in the saturation state, then the drive duty is calculated and renewed by the same method as during non-control time when current control is not performed. Therefore, the operation of calculating the drive duty in a current control apparatus is simplified.

According to claim 40 of the present invention, during current control time, the current control method in one claims 25 to 40 monitors the source voltage value and corrects the drive duty in inverse proportion to the difference between the monitored source voltage value and a predetermined value. In this way, if the duty instructing means detects fluctuations in the source voltage value, then it corrects the calculated newest drive duty in proportion to the fluctuations. Therefore, the accuracy of the current value of the current flowing in the inductive load by the calculated drive duty can be maintained, even if the source voltage value fluctuates.

According to claim 41 of the present invention, during current control time, the current control method in claims 25 to 40 corrects the calculated newest drive duty depending on the rate of change in the load resistance value of the inductive load. The current control method corrects the calculated newest drive duty depending on the rate of change in the load resistance value of the inductive load. Therefore, the accuracy of the current value of the current flowing in the inductive load by the calculated drive duty can be maintained, even if the resistance value of the inductive load fluctuates during current control time.

According to claim 42 of the present invention, the current control method in claim 41 monitors the source voltage value and calculates the rate of change in the load resistance value from currents having flowed in the inductive load by the drive duty calculated before correcting the drive duty, the time periods when currents flowed, and the average value of the source voltage values monitored at these time periods. The current control method calculates the rate of change in the load resistance value from the drive history of the inductive load before the correction of the drive duty is performed, and corrects the calculated newest drive duty depending on the rate of change in the load resistance value of the inductive load. Therefore, the accuracy of the current value of the current flowing in the inductive load by the calculated drive duty can be maintained.

According to claim 43 of the present invention, in the current control method in claims 26 to 42, the inductive load is a three-position switching electromagnetic valve for switching pressurization, holding, and decompression of brake fluid in an ABS control apparatus of a vehicle. In this way, the current control method can improve the accuracy of the current value of the current provided to the three-position switching electromagnetic valve during ABS control time, and the operation of the electromagnetic valve can be secured. Therefore, the performance of ABS control can be improved.

## BRIEF DESCRIPTION OF THE DRAWINGS

These and other objects and features of the present invention will become clear from the following description taken in conjunction with the preferred embodiments thereof and the accompanying drawings throughout which like parts are designated by like reference numerals, and in which:

Fig. 1 is a graph showing the relation between the duty cycle of the pulse signal and the value of current flowing in the load.
Fig. 2 is a block diagram illustrating the configuration of a first embodiment in the current control apparatus of pulse-width modulation in accordance with the present invention.
Fig. 3 is a flowchart showing an operation example of the apparatus illustrated in Fig. 2.
Fig. 4 shows a circuit example of the current control apparatus illustrated in Fig. 2.
Fig. 5 is a timing chart in the circuit shown in Fig. 4.
Fig. 6 is a block diagram of an ABS control apparatus using the current control apparatus of Fig. 2.
Fig. 7 is a flowchart showing an example of the operation of the ABS control apparatus illustrated in Fig. 6.
Fig. 8 is a block diagram illustrating the configuration of a second embodiment in the current control apparatus of pulse-width modulation in accordance with the present invention.
Fig. 9 shows a circuit example of the current control apparatus illustrated in Fig. 8.
Fig. 10 is a timing chart in the circuit shown in Fig. 9.
Fig. 11 is a block diagram illustrating the configuration of a third embodiment in the current control apparatus of pulse-width modulation in accordance with the present invention.
Fig. 12 is a flowchart showing an operation example of the apparatus illustrated in Fig. 11.
Fig. 13 shows a circuit example of the current control apparatus illustrated in Fig. 11.
Fig. 14 is a timing chart in the circuit shown in Fig. 13.
Fig. 15 is a block diagram of an ABS control apparatus using the current control apparatus of Fig. 11.

Fig. 16 is a flowchart showing an example of the operation of the ABS control apparatus illustrated in Fig. 15.

Fig. 17 is a block diagram illustrating the configuration of a fourth embodiment in the current control apparatus of pulse-width modulation in accordance with the present invention.

Fig. 18 shows a circuit example of the current control apparatus illustrated in Fig. 17.

Fig. 19 is a timing chart in the circuit shown in Fig. 18.

Fig. 20 is a block diagram illustrating the configuration of a fifth embodiment in the current control apparatus of pulse-width modulation in accordance with the present invention.

Fig. 21 is a flowchart showing an operation example of the apparatus illustrated in Fig. 20.

Fig. 22 is a block diagram illustrating the configuration of a sixth embodiment in the current control apparatus of pulse-width modulation in accordance with the present invention.

Fig. 23 is a block diagram illustrating the configuration of a seventh embodiment in the current control apparatus of pulse-width modulation in accordance with the present invention.

Fig. 24 is a flowchart showing an operation example of the apparatus illustrated in Fig. 23.

Fig. 25 is a block diagram illustrating the configuration of an eighth embodiment in the current control apparatus of pulse-width modulation in accordance with the present invention.

Fig. 26 is a flowchart showing an operation example of the apparatus in a ninth embodiment in accordance with the present invention.

Fig. 27 is a flowchart showing an operation example of the apparatus in an eleventh embodiment in accordance with the present invention.

Fig. 28 is graph showing examples of timing in the source voltage and the sampling in the current control apparatus of the eleventh embodiment.

## DETAILED DESCRIPTION OF THE PREFERRED EMBODIMENTS

The preferred embodiments according to the present invention will be described below in conjunction with the attached drawings.

## FIRST EMBODIMENT

Fig. 2 is a block diagram illustrating the configuration of a first embodiment in the current control apparatus of pulse-width modulation in accordance with the present invention. In Fig. 2, a current control apparatus 1 comprises a driver 2 that controls the on-off of the current flowing into an inductive load 8, a pulse generator 3 that outputs a pulse signal for controlling the current flowing in inductive load 8 into driver 2, a current detector 4 that detects the value of the current flowing in inductive load 8, a duty instructor 5 that receives the current value information about the current value detected by current detector 4 and calculates the duty cycle of the pulse signal output from pulse generator 3 to make the value of the current flowing in inductive load 8 a target value, and a feedback section 6 that feeds back the current caused by the counter electromotive force occurring in inductive load 8. Here Driver 2 is a driving means, pulse generator 3 is a pulse generating means, current detector 4 is a current detecting means, duty instructor 5 is a duty instructing means, and feedback section 6 is a feedback means.

Inductive load 8 is activated by switching the values of the flowing current stepwise. Its one end is connected to the plus terminal +Va of a DC supply Va (not illustrated), and its other end is connected to driver 2. Feedback section 6 is connected in parallel to inductive load 8. Driver 2 is also connected to current detector 4 and pulse generator 3. Further, current detector 4 is connected to duty instructor 5, which is connected to pulse generator 3.

Driver 2 controls the current flowing in inductive load 8 by switching its on-off of the current based on the pulse signal input from pulse generator 3. For example, driver 2 makes the current provided through the +Va terminal of the DC supply Va flow in inductive load 8, when the level of the pulse signal input from pulse generator 3 is at "H." Driver 2 makes the current not flow in inductive load 8, when the signal level is at "L." Current detector 4 does not detect the feedback current of feedback section 6, and detects only the current flowing in inductive load 8 by driver 2. The current value information about the value of the detected current is output into duty instructor 5.

Duty instructor 5 gives a duty cycle (called *non-drive duty* hereafter) to pulse generator 3 during non-control time when current control is not performed so that the current value becomes a one by which inductive load 8 does not operate. Duty instructor 5 then instructs pulse generator 3 to output a pulse signal of the non-drive duty into driver 2. Pulse generator 3 outputs a pulse signal of the given non-drive duty into driver 2 so that a current (called *non-drive current* hereafter) in which inductive load 8 does not operate is made to flow in inductive load 8. Current detector 4 detects the value of the current made to flow in inductive load 8 by driver 2 and outputs current value information about the detected current value into duty instructor 5.

Next, duty instructor 5 calculates beforehand, during non-control time when current control is not performed, a drive duty, which is a duty cycle for applying a desired current into inductive load 8 during current control time by driver 2, from the current value information about the current value detected by current detector 4 and the non-drive duty. Duty instructor 5 then gives the calculated drive duty to pulse generator 3 during current control time. Pulse generator 3 outputs a pulse signal of the duty cycle given by duty instructor 5 into driver 2. Driver 2 performs drive control of inductive load 8 based on the pulse signal.

Here, the current value detected by current detector 4 is proportionate to the duty cycle of the pulse signal. Therefore, as a method of calculating the drive duty, drive duty instructor 5 calculates beforehand, by the following equation (1), the drive duty for control time when inductive load 8 is activated and current control is performed.

$$D_{op} = D_{nop} \times I_{op} / I_{nop},\qquad(1)$$

where $D_{op}$ denotes the drive duty, $D_{nop}$ denotes non-drive duty, $I_{op}$ denotes the target current value during current control time, and $I_{op}$ denotes the detected current value of the non-drive current.

Further, duty instructor 5 also determines a drive duty from time to time during current control time. The detected current value is proportionate to the duty cycle during current control time, if the period during which the duty cycle is constant (called *constant drive instruction time* hereafter) exceeds the period taken by the current flowing in inductive load 8 to be in the saturation state (called *current saturation time* hereafter). Therefore, duty instructor 5 calculates and renews the drive duty for current control time by the following equation (2) based on the above constant drive duty and the detected current value during the time when current flows in inductive load 8 by the pulse signal of the drive duty.

$$D_{op} = D_{op2} \times I_{op} / I_{op2},\qquad(2)$$

where $D_{op2}$ denotes the drive duty for current control time, and $I_{op2}$ is the detected current value during current control time.

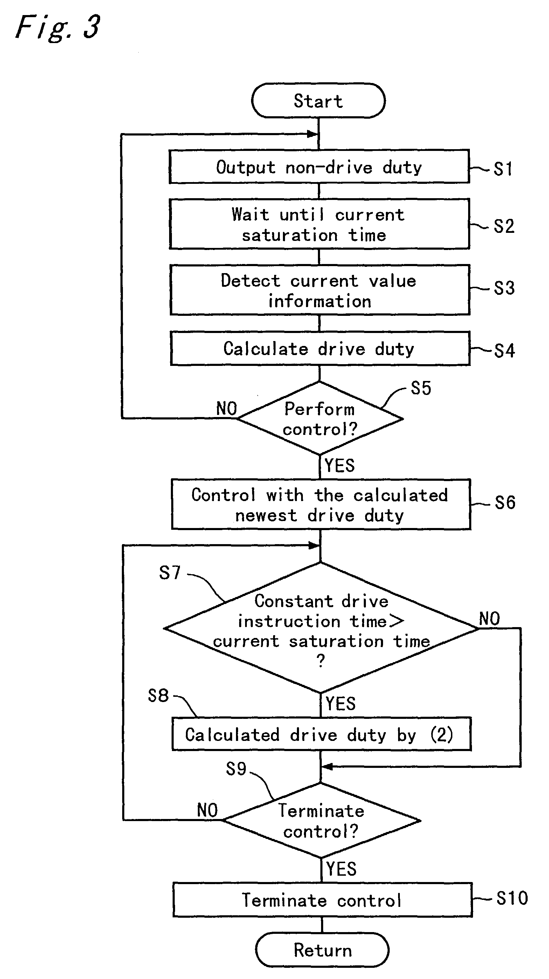

Fig. 3 is a flowchart showing an operation example of the apparatus illustrated in Fig. 2. The operation example of the current control apparatus in the first embodiment is described in the following in conjunction with Fig. 3.

In step S1 of Fig. 3, duty instructor 5 gives a predetermined non-drive duty to pulse generator 3, which outputs a pulse signal of the non-drive duty into driver 2. Next, in step S2, driver 2 performs drive control of inductive load 8 following the pulse signal input from pulse generator 3, and duty instructor 5 waits for a predetermined time, which is the period taken by the current flowing in inductive load 8 to be in the saturation state. In step S3, duty instructor 5 receives the current value information from current detector 4, which has detected the current value by monitoring the current flowing in inductive load 8.

In step S4, duty instructor 5 calculates, using the equation (1), the drive duty for control time when inductive load 8 is activated and current control is performed. In step S5, duty instructor 5 judges whether inductive load 8 should be activated with current control. If inductive load 8 should be activated with current control(YES), then the operation proceeds with step S6.

In step S6, duty instructor 5 gives pulse generator 3 a duty cycle corresponding to a desired current to be applied into inductive load 8 and obtained from the calculated newest duty and the current value information detected by current detector 4. Pulse generator 3 outputs a pulse signal of the duty cycle given by duty instructor 5 into driver 2, which drives inductive load 8. If inductive load 8 should not be activated with current control (NO), then the operation returns to step S1.

Next, in step S7, duty instructor 5 compares constant drive instruction time with current saturation time. If constant instruction time exceeds current saturation time (YES), then the operation proceeds with step S8. In step S8, duty instructor 5 calculates and renews the drive duty for current control time by the equation (2) from the above constant drive duty and the detected current value, since the detected current value is proportionate to the duty cycle. Then the operation proceeds with step S9. If, in step S7, constant instruction time does not exceed current saturation time (NO), then the operation proceeds with step S9. In step S9, if the current control is not finished (NO), then the operation returns to step S7. If the current control is finished (YES), then the operation proceeds with step S10. In step S10, duty instructor 5 stops the current control and the operation returns to step S1.

A series of operation described above is periodically performed with a predetermined period, and inductive load 8 is activated by the newest computation results in activating inductive load 8 and starting current control. Further, during the current control, the drive duty is updated as described above. Therefore, errors in the current flowing in inductive load 8 can be eliminated, so that the accuracy in the current value of the current flowing in inductive load 8 is improved for a target value.

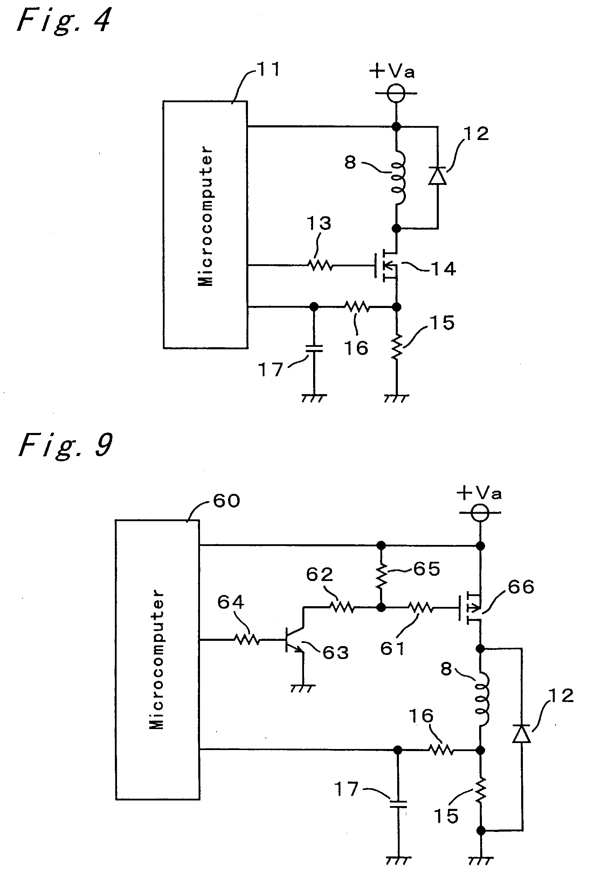

Fig. 4 shows a circuit example of the current control apparatus of Fig. 2. The same components as in Fig. 2 are denoted by the same symbols, and their descriptions are omitted here.

In Fig. 4, current control apparatus 1 comprises a microcomputer 11, a diode 12, resistors 13, 15, 16, an NMOSFET 14, and a capacitor 17. Inductive load 8 and diode 12 are connected in parallel, and the connection between the cathode of diode 12 and inductive load 8 is connected to the +Va terminal of the DC power supply Va and to microcomputer 11. Microcomputer 11 monitors the voltage of the DC power supply.

The connection between the anode of diode 12 and inductive load 8 is connected to the drain of NMOSFET 14.

The gate of NMOSFET 14 is connected to the pulse signal output terminal of microcomputer 11 through resistor 13. The source of NMOSFET 14 is grounded through resistor 15. The connection between the source of NMOSFET 14 and resistor 15 is connected to the A/D converter terminal of microcomputer 11 through resistor 16. Further, the A/D converter terminal is grounded through capacitor 17.

Here, resistor 16 and capacitor 17 constitute a low-pass filter, and resistor 15 functions as a shunt resistor. Further, in Fig. 4, microcomputer 11 functions as pulse generator 3 and duty instructor 5. NMOSFET 14 and resistor 13 constitute driver 2. Resistor 15, 16 and capacitor 17 constitute current detector 4. Diode 12 functions as feedback section 6.

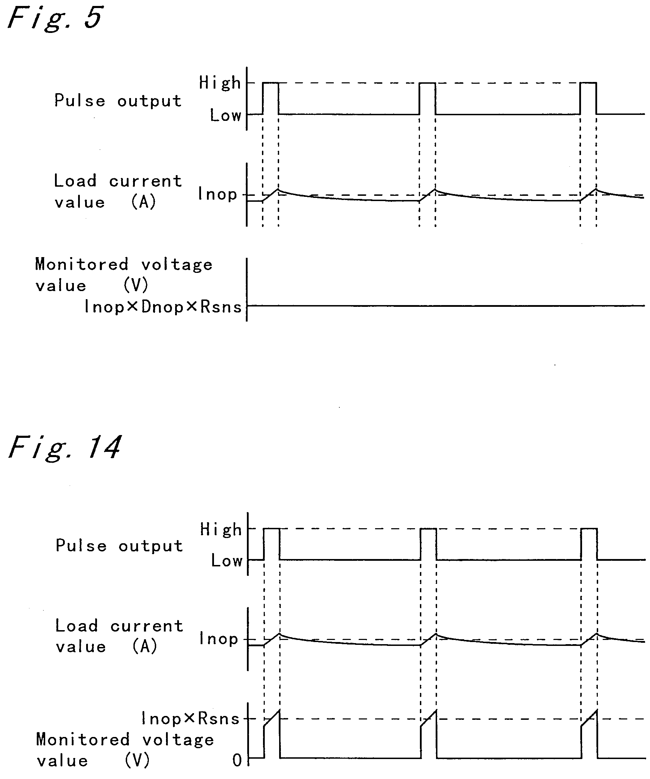

Fig. 5 is a timing chart in the circuit shown in Fig. 4. In Fig. 5, the *pulse output* means a pulse signal output from the pulse signal output terminal of microcomputer 11. The *load current value* means the value of the current flowing in inductive load 8. The *monitor voltage* means the voltage input to the A/D converter terminal of microcomputer 11 and becomes the current value information about the current value detected by current detector 4.

In Figs. 4 and 5, inductive load 8 is activated by the stepwise switching of the current flowing therein. Current control of pulse-width modulation is performed by using NMOSFET 14 together with the function of microcomputer 11 outputting a pulse signal. Diode 12 makes the duty cycle approximately proportionate to the current flowing in inductive load 8, and feeds back the current caused by the counter electromotive force induced in inductive load 8. When the signal level of the pulse signal output from microcomputer 11 is at "H," NMOSFET 14 is on. At this time, the value of current flowing in inductive load 8 is converted into voltage by the shunt resistor 15. The voltage is input to the A/D converter terminal of microcomputer 11 through the low-pass filter composed of resistor 16 and capacitor 17.

In such a configuration, microcomputer 11 outputs a pulse signal of a non-drive duty to NMOSFET 14 to apply a non-drive current into inductive load 8 during non-control time when current control is not performed for activated inductive load 8. The non-drive current is in the saturation state after a while by the shunt resistor 15 and the low-pass filter composed of resistor 16 and capacitor 17, and a resulting constant voltage is input to the A/D converter terminal of microcomputer 11. If the saturation voltage value input to the A/D converter terminal is a detected voltage value denoted by $V_{spl}$, and if the resistance value of shunt resistor 15 is denoted by $R_{sns}$, then

$$V_{spl} = I_{no\,p} \times R_{sns} \times D_{nop}.$$

From this equation and the equation (1), the following equation (3) is obtained.

$$D_{op} = (D_{nop})^2 \times I_{op} \times R_{sns} / V_{spl}. \tag{3}$$

Microcomputer 11 calculates beforehand from the above detected voltage value and the non-drive duty the drive duty at the time when current control is started for inductive load 8. Further, microcomputer 11 calculates the drive duty by the following equation (4), for the case where constant drive instruction time exceeds current saturation time during current control time.

$$D_{op} = (D_{op2})^2 \times I_{op} \times R_{sns} / V_{spl2}, \tag{4}$$

where $V_{spl2}$ denotes the detected voltage, which is the saturation voltage value input to the A/D converter terminal at the time when the drive duty is constant for more than a predetermined period during the current control. Then microcomputer 11 renews the latest drive duty to the calculated drive duty.

A series of operation described above is periodically performed with a predetermined period, and inductive load 8 is activated by the newest computation results in activating inductive load 8 and starting current control. Further, during current control time, the drive duty is updated as described above. Therefore, errors in the current flowing in inductive load 8 are eliminated, so that the accuracy in the current value of the current flowing in inductive load 8 is improved for a target value.

Further, the detected current is converted into voltage and the converted voltage is passed through a low-pass filter, so that the load current value of the inductive load can be detected with arbitrary timing. The current value is input as a voltage value, so that the arithmetic operation can be simplified, and the fluctuations of current flowing in the inductive load caused by fluctuations of the load resistance value and the source voltage value can be eliminated. Further, the number of used parts can be reduced by the use of an existing microcomputer, so that the costs can be reduced.

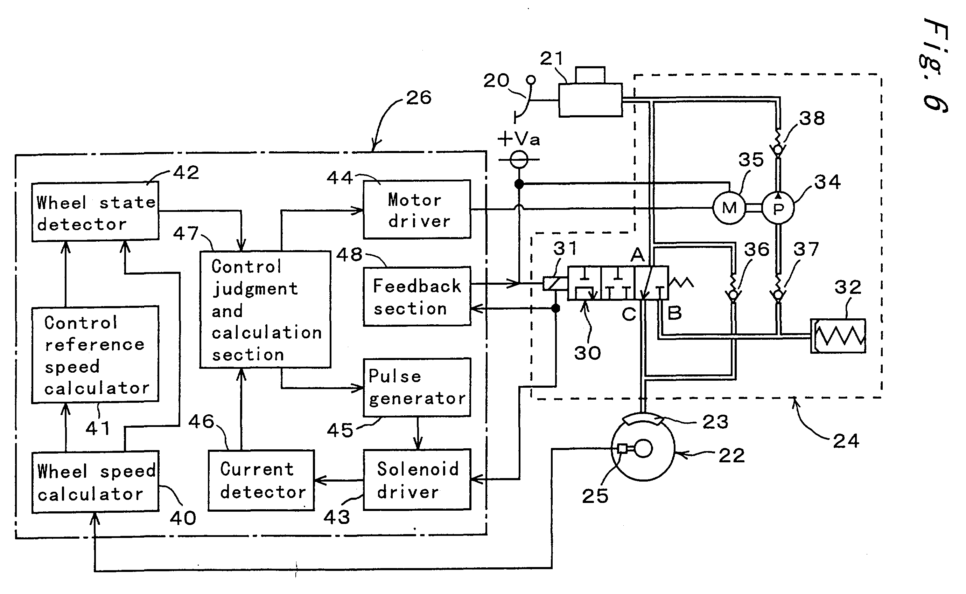

Fig. 6 is a block diagram of an ABS control apparatus using the current control apparatus of Fig. 2. In Fig. 6, a master cylinder 21 that converts the leg-power on a brake pedal 20 into brake fluid pressure is connected by a pipeline to a wheel cylinder 23 of a wheel brake 22 through an ABS actuator 24 that controls the braking effort by the decompression, holding, and pressurization of the brake fluid pressure on wheel cylinder 23.

Further, a wheel speed sensor 25 is installed in wheel brake 22. ABS actuator 24 is driven and controlled by a control signal output from an electronic control circuit 26, which performs various calculations and judgments based on the signal input from wheel speed sensor 25. The wheel brake including the wheel cylinder and the wheel speed sensor is installed for each wheel, but the following descriptions are given for a representative one wheel.

The above ABS actuator 24 comprises a solenoid valve 30 having a solenoid 31, a reservoir 32 that temporarily stores excessive brake fluid of wheel cylinder 23 occurring when the brake fluid pressure on wheel cylinder 23 is reduced, a pump 34 that transfers the brake fluid stored in reservoir 32 into master cylinder 21, a motor 35 that drives pump 34, and a check valves 36, 37, and 38.

The port A of the valve of solenoid valve 30 is connected to master cylinder 21 by a pipeline, the port B of the valve of solenoid valve 30 is connected to reservoir 32 by a pipeline, and the port C of the valve of solenoid valve 30 is connected to wheel cylinder 23 by a pipeline. Further, the port C of the valve of solenoid valve 30 is connected to the port A by a pipeline through check valve 36, which makes brake fluid flow only in the direction from the port C to port A.

Further, the connection between the port B of the valve of solenoid valve 30 and reservoir 32 is connected to one end of pump 34 by a pipeline through check valve 37. The other end of pump 34 is connected to master cylinder 21 by a pipeline through check valve 38. Check valve 37 makes brake fluid flow only in the direction from the connection between the port B and reservoir 32 to pump 34. Check valve 38 makes brake fluid flow only in the direction from pump 34 to master cylinder 21.

Here solenoid valve 30 is a three-position solenoid valve having the pressurization mode, holding mode, and decompression mode. In the pressurization mode, the port A and the port C are connected and the port C is blocked, so that brake fluid flows from the port A of solenoid valve 30 to the port C. In the holding mode, all of the port A, Port B, and port C are blocked. In the decompression mode, the port B and the port C are connected, and the port A is blocked, so that brake fluid flows in the direction from the port C to the port B.

Solenoid valve 30 switches the pressurization mode, holding mode, and decompression mode based on the value of the current flowing in solenoid 31. For example, if the current value is 0, then solenoid valve 30 is switched to the pressurization mode. If the current value is $I1$, then solenoid valve 30 is switched to the holding mode, and if the current value is $I2$, then solenoid valve 30 is switched to decompression mode, where $I2 > I1 > 0$.

Electronic control circuit 26 comprises a wheel speed calculator 40 that calculates wheel speed from the signal input from wheel sensor 25, a control reference speed calculator 41 that calculates a reference wheel speed for judging whether ABS control should be performed, a wheel state detector 42 that detects the wheel state such as whether the wheel is locked or not, a solenoid driver 43 that performs drive control of solenoid valve 30, a motor driver 44 that performs drive control of motor 35, a pulse generator 45 that outputs a pulse signal to solenoid driver 43 for the control of the current flowing in solenoid 31, a current detector 46 that detects the value of the current flowing in solenoid 31, a control judgment and calculation section 47 that receives the current value information about the current value detected by current detector 46 to calculate the duty cycle of the pulse signal output from pulse generator 45 so that the value of the current flowing in solenoid 31 becomes a target current value, and a feedback section 48 that feeds back the current caused by the counter electromotive force induced in solenoid 31.

Wheel speed calculator 40 is connected to control reference speed calculator 41 and wheel state detector 42. Control reference speed calculator 41 is connected to wheel state detector 42. Wheel state detector 42 is connected to control judgment and calculation section 47. Control judgment and calculation section 47 is connected to motor driver 44 and pulse generator 45. Pulse generator 45 is connected to solenoid driver 43. Solenoid driver 43 is connected to current detector 46. Current detector 46 is connected to control judgment and calculation section 47.

Further, solenoid driver 43 is connected to one end of solenoid 31 of solenoid valve 30. The other end of solenoid 31 is connected to the plus terminal +Va of the DC power supply. Motor driver 44 is connected to one end of motor 35. The other end of motor 35 is connected to the plus terminal +Va of the DC power supply. Further, feedback section 48 is connected in parallel to solenoid 31. Solenoid valve 30, more strictly speaking, solenoid 31 of solenoid valve 30, is inductive load 8 of Fig. 2. Solenoid driver 43 is driver 2 of Fig. 2. Pulse generator 45 is pulse generator 3 of Fig. 2. Current detector 46 is current detector 4 of Fig. 2. Control judgment and calculating section 47 is duty instructor 5 of Fig. 5. Feedback section 48 is feedback section 6 of Fig. 2.

In the above configuration, wheel speed calculator 40 shapes the waveform of the AC signal output from wheel sensor 25 into a rectangular wave and measures a period between the edges of the rectangular wave in which voltage changes. Wheel speed calculator 10 then calculates wheel speed based on the period to output the wheel speed into control reference speed calculator 41 and wheel state detector 42. Control reference speed calculator 41 calculates a control reference speed corresponding to the wheel speed input from wheel speed calculator 40 to output the control reference speed into wheel state detector 42.

Wheel state detector 42 judges that the wheel is not locked if the difference between the wheel speed input from wheel speed calculator 40 and the control reference speed input from control reference speed calculator 41 is less than a constant value. Wheel state detector 42 then outputs the judgment into control judgment and calculation section 47, which determines the non-execution of the ABS control to give a non-drive duty to pulse generator 45 so that the resulting current does not activate solenoid valve 30. Pulse generator 45 outputs a pulse signal based on the drive duty into solenoid driver 43 so that a current in which solenoid valve 30 does not operate flows in solenoid 31.

At this time, current detector 46 detects the value of the current applied by solenoid driver 43 and flowing in solenoid 31. Current detector 46 outputs the detected current value as current value information into control judgment and calculation section 47. Control judgment and calculation section 47 calculates beforehand the drive duty for ABS control time when solenoid valve 30 is activated and current control is performed, by the equation (1) from the non-drive duty and the current value information about the detected current value. Current detector 46 does not detect a current caused by the counter electromotive force induced in solenoid 31.

A series of operation described above is performed with a predetermined period. When solenoid valve 30 is activated and current control is started, solenoid valve 30 is activated with the newest computation results.

Further, wheel state detector 42 judges that the wheel is locked if the difference between the wheel speed input from wheel speed calculator 40 and the control reference speed input from control reference speed calculator 41 is greater than a constant value. Wheel state detector 42 then outputs the judgment to control judgment and calculation section 47, which determines the reduction of brake fluid pressure on wheel cylinder 23 to give an appropriate drive duty, in this case the duty cycle 1, to pulse generator 45 so that the current $I2$ flows in solenoid 31. Control judgment and calculation section 47 also instructs motor drive 44 to drive motor 35.

Pulse generator 45 outputs a pulse signal of the drive duty given by control judgment and calculation section 47 into solenoid driver 43. Solenoid driver 43 performs the decompression mode drive based on the pulse signal so that the current $I2$ flows in solenoid 31. Motor driver 44 drives motor 35 of pump 44 by applying a current into motor 35.

Then each port of solenoid valve 30 is connected for the decompression mode. The brake fluid supply route from master cylinder 21 is blocked, and the drain route of brake fluid is open, so that the brake fluid on the side of wheel cylinder 23 flows into reservoir 32, and the pressure of brake fluid declines. When the reduction of brake fluid pressure on wheel cylinder 23 starts, pump 34 operates to pump up the brake fluid in reservoir 32 and recirculates it to master cylinder 21.

Further, when determining to hold the brake fluid pressure on wheel cylinder 23, control judgment and calculation section 47 gives a drive duty to pulse generator 45, based on the newest computation results obtained during the time when ABS control was not performed, so that the current $I1$ flows in solenoid 31. Control judgment and calculation section 47 also instructs motor driver 44 to stop motor 35.

Pulse generator 45 outputs a pulse signal of the drive duty given by control judgment and calculation section 47 into solenoid driver 43. Following the pulse signal, solenoid driver 43 makes the current $I1$ flow in solenoid 31 of solenoid valve 30 to activate solenoid 31 in the holding mode. Motor driver 44 stops motor 35 of pump 34. In this way, each port of solenoid valve 30 is connected for the holding mode, and the brake fluid supply route from master cylinder 21 and the drain route of brake fluid are blocked, so that the brake fluid pressure on wheel cylinder 23 is maintained.

Further, when the difference between the wheel speed and the control reference speed becomes less than a constant value by the reduction and holding of the brake fluid pressure on wheel cylinder 23, wheel state detector 42 judges that wheel locking has been avoided, and outputs the judgment to control judgment and calculation section 47. When determining to terminate ABS control and pressurize the brake fluid on wheel cylinder 23, control judgment and calculation section 47 instructs motor driver 44 to stop motor 35 and gives a non-drive duty to pulse generator 45. Pulse generator 45 outputs a pulse signal of the given non-drive duty into solenoid driver 43. Solenoid driver 43 makes solenoid valve 30 operate in the pressurization mode, so that the brake fluid on wheel cylinder 23 is repressurized.

Further, control judgment and calculation section 47 also calculates and determines the drive-duty during ABS control. If constant drive instruction time exceeds the current saturation time during ABS control, the detected current value is proportionate to the duty cycle. Therefore, control judgment and calculation section 47 calculates and renews the drive duty by the equation (2) from the constant drive duty and the detected current value during the time when a current is flowing in solenoid 31 by a pulse signal of the drive duty.

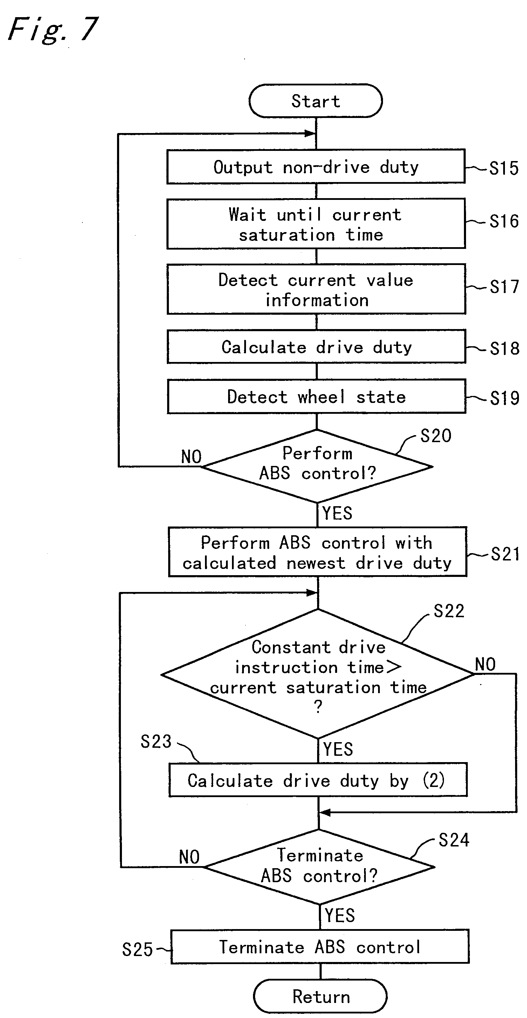

Fig. 7 is a flowchart showing an example of the operation of the ABS control apparatus illustrated in Fig. 6. In the first step S15 of Fig. 7, control judgment and calculation section 47 gives a predetermined non-drive duty to pulse generator 45. Pulse generator 45 outputs a pulse signal of the given non-drive duty into solenoid driver 43. Next, in step S16, solenoid driver 43 performs non-drive control of solenoid valve 30 following the pulse signal input from pulse generator 45. Control judgment and calculation section 47 waits for a predetermined time, which is the time taken by the current flowing in solenoid valve 30 to be in the saturation state. After the predetermined time, in step S17, control judgment and calculation section 47 receives current value information about the current flowing in solenoid 31 by solenoid driver 43.

In step S18, control judgment and calculation section 47 calculates a drive duty for control time when solenoid valve 30 is activated and current control is performed in the case of holding brake fluid pressure from the non-drive duty and the current value information by the equation (1). In step S19, wheel state detector 42 detects the wheel state from the wheel speed input from wheel speed calculator 40 and the control reference speed input from control reference speed calculator 41. In step S20, control judgment and calculation section 47 judges whether ABS control should be performed or not from the wheel state detected by wheel state detector 42. If ABS control should not be performed (No), then the operation returns to step 15. If ABS control should be performed (YES), then the operation proceeds with step S21.

In step S21, control judgment and calculation section 47 gives pulse generator 45 the duty cycle corresponding to a desired current flowing in solenoid 31 obtained from the calculated newest duty cycle. Pulse generator 45 outputs a pulse signal of the duty cycle given by control judgment and calculation section 47 into solenoid driver 43, which performs current control of solenoid 31. In step 22, control judgment and calculation section 47 compares constant drive instruction time with current saturation time. If constant instruction time exceeds current saturation time (YES), then the operation proceeds with step S23.

In step S23, since the detected current value is proportionate to the duty cycle, control judgment and calculation section 47 calculates and renews a drive duty by the equation (2) from the constant drive duty and the detected current value. Then the operation proceeds with step S24. If, in step S22, constant instruction time does not exceed current saturation time (NO), then the operation proceeds with step S24. In step S24, if ABS control is not finished (NO), then the operation returns to step S22. If, in step S24, ABS control is finished (YES), then the operation proceeds with step S25. In step S25, control judgment and calculation section 47 terminates ABS control, and the operation returns to step S15. The above series of operation is performed at a predetermined period.

As described above, if control judgment and calculation section 47 determines the reduction of the brake fluid pressure on wheel cylinder 23 from the wheel state detected by wheel state detector 42, then control judgment and calculation section 47 gives pulse generator 45 the duty cycle 1, so that the current $I2$ flows in solenoid 31. Pulse generator 45 outputs a pulse signal of the duty cycle 1 into solenoid driver 43. Solenoid driver 43 performs decompression drive of solenoid 31 of solenoid valve 30 following the pulse signal so that the current $I2$ flows in solenoid 31.

Similarly, if, from the wheel state detected by wheel state detector 42, control judgment and calculation section 47 determines to maintain the brake fluid pressure on wheel cylinder 23, then control judgment and calculation section 47 gives pulse generator 45 the drive duty calculated beforehand so that the current $I1$ flows in solenoid 31. Pulse generator 45 outputs a pulse signal of the drive duty into solenoid driver 43. Solenoid driver 43 drives solenoid 31 of solenoid valve 30 in the holding mode, following the pulse signal, so that the current $I1$ flows in solenoid 31.

Further, if, from the wheel state detected by wheel state detector 42, control judgment and calculation section 47 determines to terminate ABS control and the pressurization of the brake fluid on wheel cylinder 23, then control judgment and calculation section 47 gives pulse generator 45 a non-drive duty. Pulse generator 45 outputs a pulse signal of the non-drive duty into solenoid driver 43. Following the pulse signal, solenoid driver 43 applys a current in which solenoid valve 30 does not operate into solenoid valve 30. Control judgment and calculation section 47 calculates, from the current value information detected by current detector 46 and the non-drive duty, a drive duty of a pulse signal for driving solenoid valve 30 during ABS control.

In the case of using the current control apparatus of the present first embodiment for the ABS control apparatus, a pulse signal of the duty cycle 1 is used for applying the current $I2$ into solenoid 31. The duty cycle for applying the current $I2$ into solenoid 31 can also be calculated the same way as the duty cycle for applying the current $I1$.

In this way, the current control apparatus in the first embodiment of the present embodiment can be used for a drive and control apparatus for a solenoid valve in which three states are switched between the pressurization mode, holding mode, and decompression mode, based on the current flowing in the solenoid. As described above, at the start of the current control of the current flowing in the solenoid for activating solenoid valve, the solenoid valve can be activated with a drive duty obtained beforehand from the latest computation results.

Further, a drive duty can also be determined during current control time. A series of operation described above is performed with a predetermined period, so that the accuracy in the value of the current flowing in the solenoid compared with a target value can be improved. Consequently, the fluctuations of the current flowing in the solenoid caused by the fluctuations of resistance values and voltage value of the power supply can be prevented, and the operation of the solenoid valve can be stabilized, so that the performance of ABS control can be improved.

SECOND EMBODIMENT

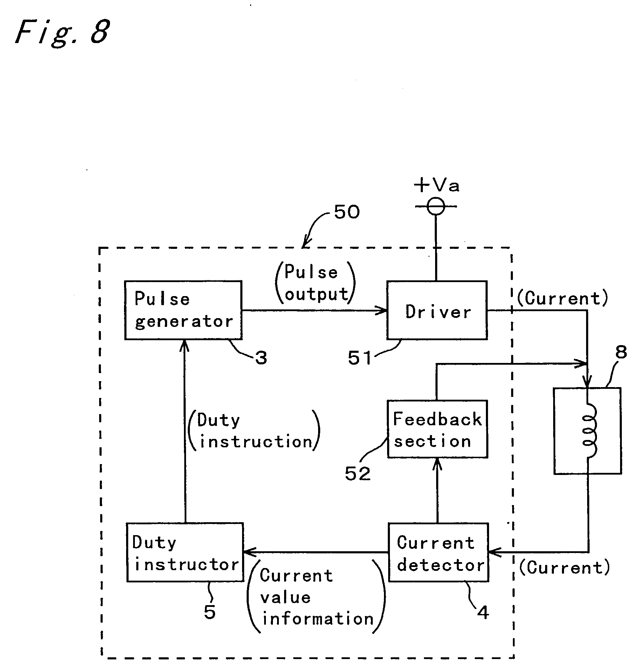

Fig. 8 is a block diagram illustrating the configuration of a second embodiment in the current control apparatus of pulse-width modulation in accordance with the present invention. In Fig. 8, the same components as in Fig. 2 are denoted by the same symbols, and their descriptions are omitted here.

The current control apparatus of Fig. 8 differs from that of Fig. 2 as follows. Driver 2 is newly denoted by 51, which is connected to pulse generator 3, the plus terminal +Va of a DC power supply Va (not illustrated), and inductive load 8. Inductive load 8 is connected to current detector 4. One end of feedback section 6 is connected to the connection between driver 51 and inductive load 8. The other end of feedback section 6 is connected to current detector 4. Consequently, the current caused by the counter electromotive force induced in inductive load 8 is fed back through current detector 4. Therefore, feedback section 6 of Fig. 2 is newly denoted by 52, and current control apparatus 1 is newly denoted by 50 with this change.

In Fig. 8, current control apparatus 50 comprises a driver 51 that controls the on-off of the current flowing into an inductive load 8, a pulse generator 3 that outputs a pulse signal for controlling the current flowing in inductive load 8 into driver 51, a current detector 4 that detects the value of the current flowing in inductive load 8, a duty instructor 5 that receives the current value information about the current value detected by current detector 4 and calculates the duty cycle of the pulse signal output from pulse generator 3 to make the value of the current flowing in inductive load 8 a target value, and a feedback section 52 that feeds back the current caused by the counter electromotive force occurring in inductive load 8. Here Driver 51 is a driving means, and feedback section 52 is a feedback means.

Inductive load 8 is driven by switching the values of the current flowing therein stepwise. Its one end is connected to the plus terminal +Va of a DC supply Va (not illustrated), and its other end is connected to current detector 4. One end of feedback section 52 is connected to the connection between driver 51 and inductive load 8. The other end of feedback section 52 is connected to current detector 4. Driver 51 is connected to pulse generator 3. Further, current detector 4 is connected to duty instructor 5, which is connected to pulse generator 3.

Driver 51 controls the current flowing in inductive load 8 by on-off of the current based on the pulse signal input from pulse generator 3. For example, driver 51 makes the current provided through the +Va terminal of the DC supply Va flow in inductive load 8, when the level of the pulse signal input from pulse generator 3 is at "H." Driver 2 makes the current not flow in inductive load 8, when the signal level is at "L." Current detector 4 does detect the feedback current of feedback section 52, and detects the current value of the current flowing in inductive load 8 to output the current value information about the detected current value into duty instructor 5. Pulse generator 3 outputs a pulse signal of the duty cycle calculated by duty instructor 5 into driver 51. Driver 51 performs drive control of inductive load 8 following the pulse signal.

Duty instructor 5 gives a non-drive duty to pulse generator 3 during non-control time when current control is not performed and instructs pulse generator 3 to output a pulse signal of the non-drive duty into driver 51. Pulse generator 3 outputs a pulse signal of the given drive duty into driver 51 so that a non-drive current is made to flow thereby in inductive load 8. Current detector 4 detects the value of the current flowing in inductive load 8 and outputs current value information about the detected current into duty instructor 5.

The method of calculating a drive duty by duty instructor 5 is the same as the one in the first embodiment, so that it is omitted here. Duty instructor 5 also determines a drive duty during current control time, and calculates and renews the drive duty during current control time as in the first embodiment.

A flowchart showing the operation of the apparatus of Fig. 8 is the same as that shown in Fig. 3. The description is omitted also, because they are the same except that driver 2 is replaced by driver 51.

Further, as in the first embodiment, a series of operation described above is periodically performed with a predetermined period, and similar effects can be obtained as in the first embodiment.

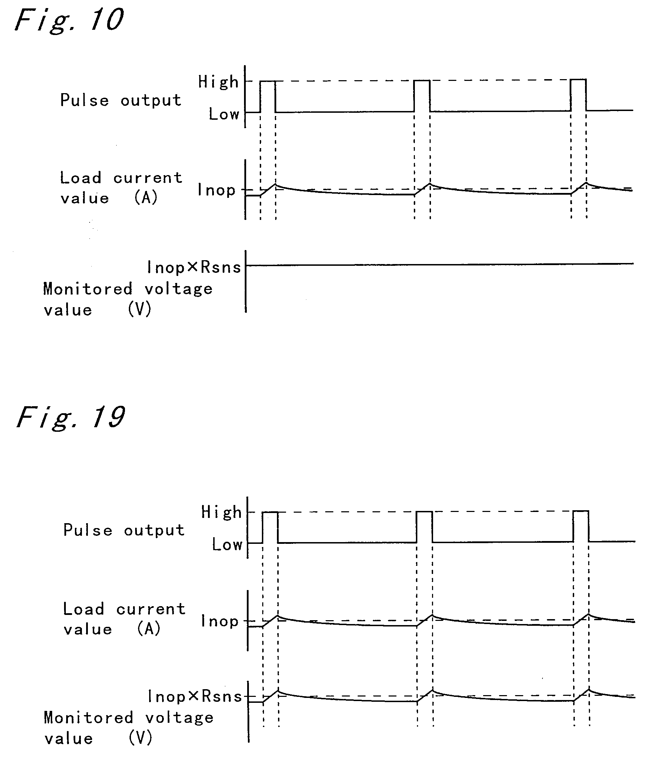

Fig. 9 shows a circuit example of the current control apparatus of Fig. 8. The same components as in Fig. 4 are denoted by the same symbols, and their descriptions are omitted here.

In Fig. 9, current control apparatus 50 comprises a microcomputer 60, a diode 12, resistors 15, 16, 61, 62, 64, 65, a capacitor 17, an NPN transistor 63, and a PMOSFET 66. Inductive load 8 and shunt resistor 15 are connected in series, and diode 12 is connected in parallel to the serial circuit. The connection between diode 12 and shunt resistor 15 is grounded.

The connection between the cathode of diode 12 and inductive load 8 is connected to the drain of PMOSFET 66. The source of PMOSFET 14 is connected to the +Va terminal of a DC power supply Va and to microcomputer 60. Microcomputer 60 monitors the source voltage of the DC power supply.

The gate of PMOSFET 66 is connected to the collector of NPN transistor 63 through the serial circuit of resisters 61 and 62. The emitter of NPN transistor 63 is grounded, and its base is connected to the pulse signal output terminal of microcomputer 60 through resistor 64. The connection between the resistors 61 and 62 is connected to the +VA terminal through resistor 65. Further, the connection between inductive load 8 and resistor 15 is connected to the A/D converter terminal of microcomputer 60 through resistor 16. Further, the A/D converter terminal is grounded through capacitor 17.

As in Fig. 4, resistor 16 and capacitor 17 constitute a Low-pass filter. Further, in Fig. 9, microcomputer 60 functions as pulse generator 3 and duty instructor 5 of Fig. 8. Resistors 61, 62, 64, 65, NPN transistor 63, and PMOSFET 66 constitute driver 51 of Fig. 8. Resistor 15, 16 and capacitor 17 constitute current detector 4 of Fig. 8. Diode 12 functions as feedback section 52 of Fig. 8.

Fig. 10 is a timing chart in the circuit shown in Fig. 9. In Fig. 10, the *pulse output* means a pulse signal output from the pulse signal output terminal of microcomputer 60. The *load current value* means the value of the current flowing in inductive load 8. This value is the same as the current value detected by shunt resistor 15. The *monitor voltage* means the voltage input to the A/D converter terminal of microcomputer 60 and becomes the current value information about the current value detected by current detector 4.

In Figs. 9 and 10, inductive load 8 is driven by the stepwise switching of the current flowing therein. Current control of pulse-width modulation is performed by using PMOSFET 66 together with the function of microcomputer 60 outputting a pulse signal and NPN transistor 63. Diode 12 makes the duty cycle approximately proportionate to the current in inductive load 8, and feeds back the current caused by the counter electromotive force induced in inductive load 8. If the signal level of the pulse signal output from microcomputer 60 is at "H," then NPN transistor 63 is turned on, and then PMOSFET 66 is turned on. At this time, the value of current flowing in inductive load 8 is converted into voltage by the shunt resistor 15. The voltage is input to the A/D converter terminal of microcomputer 60 through the low-pass filter composed of resistor 16 and capacitor 17.

In such a configuration, microcomputer 60 outputs a pulse signal of a non-drive duty to the base of NPN transistor 63 during non-control time when current control is not performed with activated inductive load 8. Following this move, PMOSFET 66 applys a non-drive current into inductive load 8. The non-drive current is in the saturation state after a while by the shunt resistor 15 and the low-pass filter composed of resistor 16 and capacitor 17, and a resulting constant voltage is input to the A/D converter terminal of microcomputer 60. If the saturation voltage value input to the A/D converter terminal is a detected voltage value denoted by $V_{spl}$, and if the resistance value of shunt resistor 15 is denoted by $R_{sns}$, then

$$V_{spl} = I_{nop} \times R_{sns}.$$

From this equation and the equation (1), the following equation (5) is obtained.

$$D_{op} = D_{nop} \times I_{op} \times R_{sns} / V_{spl}. \tag{5}$$

Microcomputer 60 calculates beforehand from the above detected voltage value and the non-drive duty the drive duty at the time when current control is started for inductive load 8. Further, microcomputer 60 calculates the drive duty by the above equation (4), for the case where constant drive instruction time exceeds current saturation time during current control time. Then microcomputer renews the latest drive duty to the calculated drive duty.

A series of operation described above is periodically performed with a predetermined period, and effects similar to those of the first embodiment can be obtained.

The apparatus of the second embodiment can be used for an ABS control apparatus as the first embodiment. For that purpose, solenoid driver 43 is connected pulse generator 45, the plus terminal +Va of the DC power supply Va (not illustrated), and one end of solenoid 31. The other end of solenoid 31 is connected to current detector 46. One end of feedback section 48 connected to the connection between solenoid driver 43 and inductive load 8. The other end of feedback section 48 is connected to current detector 46, so that the current caused by the counter electromotive force induced in solenoid 31 is fed back through current detector 46. The other part of the description is the same as in the first embodiment and omitted here.

### THIRD EMBODIMENT

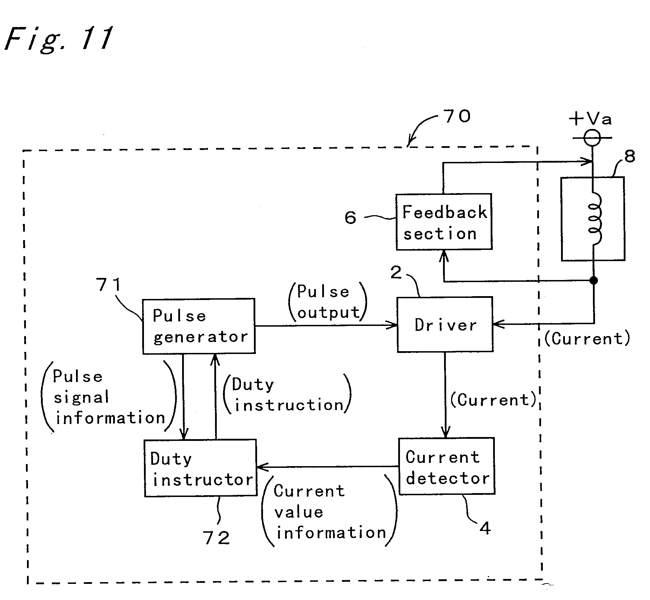

Fig. 11 is a block diagram illustrating the configuration of a third embodiment in the current control apparatus of pulse-width modulation in accordance with the present invention. In Fig. 11, the same components as in Fig. 2 are denoted by the same symbols, and their descriptions are omitted here. Only those points different from Fig. 2 are described in the following.

The current control apparatus of Fig. 11 differs from that of Fig. 2 as follows. A pulse timer (not illustrated) is installed in pulse generator of Fig. 2, so that the elapsed time from the time when the current provided through the +Va terminal of the DC power supply starts to flow in inductive load 8 is measured. Pulse generator 71 outputs the measured elapsed time into duty instructor 5 as pulse signal information. Duty instructor 5 detects the timing for monitoring the current value from current detector 4 based on the pulse signal information input from pulse generator 71 and the non-drive duty that duty instructor 3 has given to pulse generator 71. Duty instructor 5 then receives the current value information about the current value detected by current detector 4 following the detected timing. With these changes, pulse generator 71 is newly denoted by 71, and duty instructor 5 is newly denoted by 72, and current control apparatus 1 is newly denoted by 70.

In Fig. 11, current control apparatus 70 comprises a driver 2 that controls the on-off of the current flowing into an inductive load 8, a pulse generator 71 that outputs a pulse signal for controlling the current flowing in inductive load 8 into driver 2 and outputs pulse signal information about the pulse signal measured by the pulse timer into a duty instructor 72, a current detector 4 that detects the value of the current flowing in inductive load 8, the duty instructor 72 that detects the timing for monitoring the current value from current detector 4 based on the pulse signal information from pulse generator 71 and the non-drive duty given to pulse generator 71, receives current value information about the current value detected by current detector 4 following the detected timing, and calculates a duty cycle of the pulse signal output from pulse generator 71 so that the value of the current flowing in inductive load 8 becomes a target current value, and a feedback section 6 that feeds back the current caused by the counter electromotive force occurring in inductive load 8. Here pulse generator 71 is a pulse generating means, and duty instructor 72 is a duty instructing means.

Inductive load 8 is driven by switching the values of the current flowing therein stepwise. Its one end is connected to the plus terminal +Va of a DC supply Va (not illustrated), and its other end is connected to driver 2. Feedback section 6 is connected in parallel to inductive load 8. Driver 2 is connected to current detector 4 and pulse generator 71. Current detector 4 is connected to duty instructor 72. Duty instructor 72 is connected to pulse generator 71.

Driver 2 controls the current flowing in inductive load 8 by switching the on-off of the current based on the pulse signal input from pulse generator 71. For example, driver 2 makes the current provided through the +Va terminal of the DC supply Va flow in inductive load 8, when the level of the pulse signal input from pulse generator 71 is at "H". Driver 2 makes the current not flow in inductive load 8, when the signal level is at "L".

Duty instructor 72 gives a non-drive duty to pulse generator 71 during non-control time to make pulse generator 71 to output a pulse signal of the non-drive duty into driver 2. Pulse generator 71 outputs a pulse signal of the given drive duty into driver 2 so that a non-drive current is made to flow thereby in inductive load 8. Pulse generator 71 also measures, using the pulse timer, pulse signal information about the pulse signal output to driver 2, that is, the elapsed time from the time when the pulse signal of the non-drive duty output from pulse generator 71 into driver 2 is detected to become at "H" level, to output the measured time into duty instructor 72.

Next, duty instructor 72 detects the timing for receiving the current value information about the detected current value from current detector 4, that is, a period when a current flows in inductive load 8 by driver 2. Duty instructor 72 then receives the current value information from current detector 4, during the period, at the saturation time when the changes in the average value of the current flowing in inductive load 8 per unit time become small within a predetermined value. Duty instructor 72 then calculates a drive duty, which is a duty cycle for applying a desired current into inductive load 8 during current control time by driver 2, from the current value information and the non-drive duty. Duty instructor 72 then gives the calculated drive duty to pulse generator 71 during current control time. Pulse generator 71 outputs a pulse signal of the duty cycle given by duty instructor 72 into driver 2. Driver 2 performs drive control of inductive load 8 based on the pulse signal.

Here, the method of calculating the drive duty is as follows. Drive duty instructor 72 receives the current value information from current detector 4, during the period, at the saturation time when a current flows in inductive load 8 by driver 2. Drive duty instructor 72 then calculates, by the following equation (6), a drive duty for control time when inductive load 8 is activated and current control is performed.

$$D_{op} = D_{nop} \times I_{op} / F(I_{nop}, T_{spl}, D_{nop}), \tag{6}$$

where $T_{spl}$ is detection time and $F(I_{nop}, T_{spl}, D_{nop})$ is a function that gives the average current value from the detected current value, detection time, and the non-drive duty.

Further, duty instructor 72 also determines a drive duty during current control time. The detected current value is proportionate to the duty cycle during current control time, if constant drive instruction time exceeds current saturation time. Therefore, duty instructor 72 calculates and renews the drive duty for current control time by the following equation (7) based on the above constant drive duty, the detected current value during the time when current flows in inductive load 8 by the pulse signal of the drive duty, and detection time that is the elapsed time from a rise of the pulse signal to the receiving of the detected current value.

$$D_{op} = D_{op2} \times I_{op} / G(I_{op2}, T_{spl}, D_{op2}) \tag{7}$$

where $G(I_{op2}, T_{spl}, D_{op2})$ is a function that gives the average current value from the detected current value during current control time, detection time, and the drive duty.

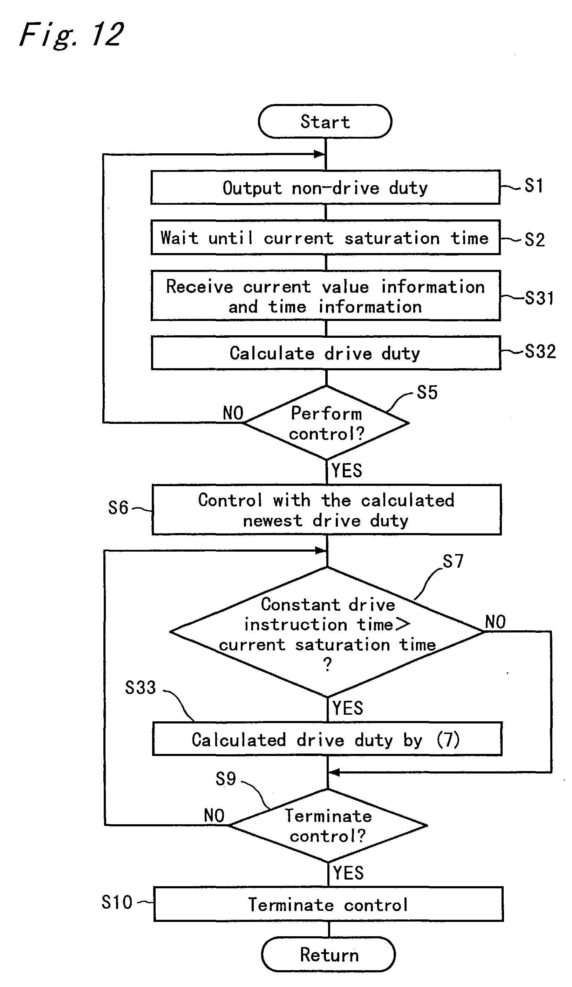

Fig. 12 is a flowchart showing an operation example of the apparatus illustrated in Fig. 11. The operation example of the current control apparatus in the third embodiment is described in the following in conjunction with Fig. 12. In the change from the first embodiment to the third embodiment, duty instructor 5 is changed into duty instructor 72, pulse generator 3 is changed into pulse generator 71, and current control apparatus 1 is changed into current control apparatus 70 with these changes. The same processing as in Fig. 3 with these changes is denoted by the same symbols, and their descriptions are omitted here, and only those different from Fig. 3 are described in the following.

The flowchart of Fig. 12 differs from the one of Fig. 3 in the following points. The processing of step S3 in Fig. 3 is replaced by the processing of step S31. The processing of step S4 in Fig. 3 is replaced by the processing of step S32. The processing of step S8 in Fig. 3 is replaced by the processing of step S33. Duty instructor 5 is changed into duty instructor 72, pulse generator 71 is changed into pulse generator 71, and current control apparatus 1 is changed into current control apparatus 70 with these changes.

In Fig. 12, after the processing of step S2, the operation proceeds with step S31. In step S31, duty instructor 72 detects a period when a current flows in inductive load 8 by driver 2 from the pulse signal information, that is, time information input from pulse generator 71, and the non-drive duty. Duty instructor 72 then receives the detected current value information from current detector 4 during the detected period. Next, in step S32, duty instructor 72 calculates a drive duty for control time when inductive load 8 is activated and current control is performed, using the equation (6), from the non-drive duty, the current value about the detected current value, and detection time that is the time information. Then the processing from step S5 to S7 in Fig. 3 is performed.

A series of operation described above is periodically performed with a predetermined period, and inductive load 8 is driven by the newest computation results in activating inductive load 8 and starting current control. Further, during the current control, the drive duty is updated as described above. Therefore, errors in the current flowing in inductive load 8 are eliminated, so that the accuracy in the current value of the current flowing in inductive load 8 is improved for a target value.

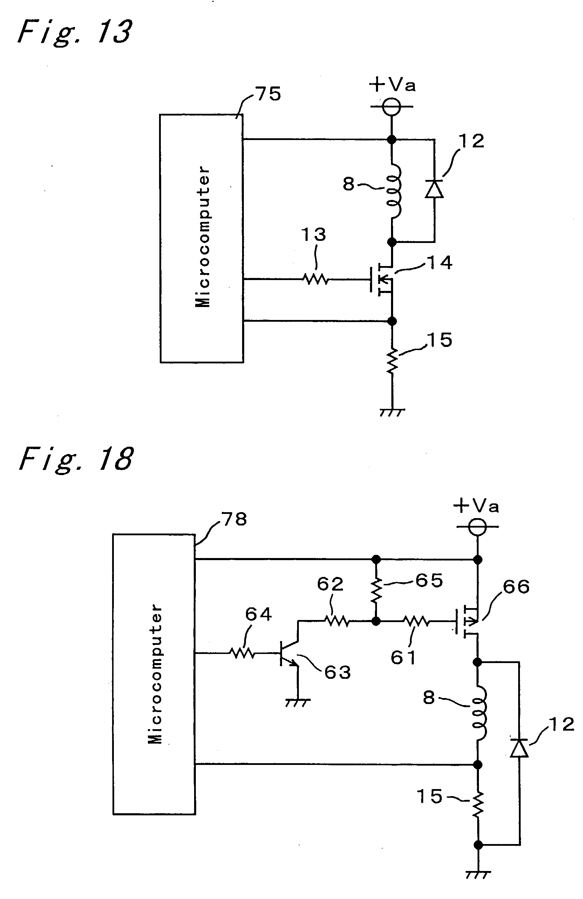

Fig. 13 shows a circuit example of the current control apparatus of Fig. 11. The same components as in Fig. 4 are denoted by the same symbols, their descriptions are omitted here, and only points different from Fig. 4 are described in the following.

Fig. 13 differs from Fig. 4 in that the filter circuit composed of resistor 16 and capacitor 17 is discarded, and microcomputer 11 in Fig. 4 is changed into microcomputer 75 with this change. The connection between the source of NMOSFET 14 and resistor 15 is connected to the A/D converter terminal of microcomputer 75.

Here, in Fig. 13, resistor 15 functions as a shunt resistor. Microcomputer 75 functions as pulse generator 71 and duty instructor 72. NMOSFET 14 and resistor 13 constitute driver 2. Resistor 15 functions as current detector 4.

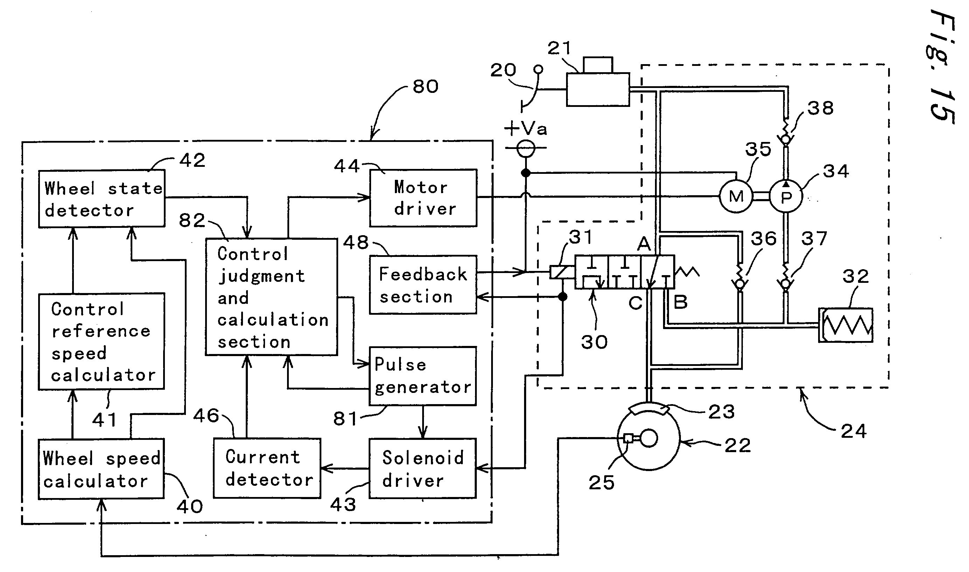

Fig. 14 is a timing chart in the circuit shown in Fig. 13. In Fig. 14, the *pulse output* means a pulse signal output from the pulse signal output terminal of microcomputer 75. The *load current value* means the value of the current flowing in inductive load 8. The *monitor voltage* means the voltage input to the A/D converter terminal of microcomputer 75 and becomes the current value information about the current value detected by current detector 4.

In Figs. 13 and 14, inductive load 8 is driven by the stepwise switching of the current flowing therein. Current control of pulse-width modulation is performed by using NMOSFET 14 together with the function of microcomputer 75 outputting a pulse signal. Diode 12 makes the duty cycle approximately proportionate to the current in inductive load 8, and feeds back the current caused by the counter electromotive force induced in inductive load 8. If the signal level of the pulse signal output from microcomputer 75 is at "H," then NMOSFET 14 is on. At this time, the value of current flowing in inductive load 8 is converted into voltage by the shunt resistor 15. The voltage is input to the A/D converter terminal of microcomputer 75.

In such a configuration, microcomputer 75 outputs a pulse signal of a constant non-drive duty to NMOSFET 14 through resistor 13 to apply a non-drive current into inductive load 8 during non-control time when current control is not performed for activated inductive load 8. At this time, microcomputer 75 measures the elapsed time from a rise of the signal output to NMOSFET 14, using a built-in timer (not illustrated). Microcomputer 75 then obtains the timing for receiving the detected voltage value, which has been converted into voltage from the non-drive current by shunt resistor 15, from the measured time and the non-drive duty. That is, microcomputer 75 detects a period when a current flows in inductive load 8 by NMOSFET 14.

Microcomputer 75 waits for a predetermined time, which is the time taken by the current flowing in inductive load 8 to be in the saturation state after changes in the average current value during the detected period become small within a predetermined value. After the predetermined time, microcomputer 75 then receives the detected voltage value during the period.

In this way, the timing for microcomputer 75 to receive the detected voltage value is limited to the time when the signal input to the gate of NMOSFET 14 is at "H." Further, the detected voltage does not become constant. Therefore, the detected voltage $V_{spl}$ depends on time, so that the detected current value $I_{nop}$ becomes

$$I_{nop} = H_1(V_{spl}, T_{spl}, D_{nop}) / R_{sns},$$

where $H_1(V_{spl}, T_{spl}, D_{nop})$ is a function that gives the average voltage value from the detected voltage value, detection time, and the non-drive duty. Therefore, the following equation (8) is derived from this equation and the equation (1).

$$D_{op} = D_{nop} \times I_{op} \times R_{sns} / H_1(V_{spl}, T_{spl}, D_{nop}). \tag{8}$$

Microcomputer 75 calculates beforehand from the above detected voltage value and the non-drive duty the drive duty at the time when inductive load 8 is activated and current control is performed.

Further, microcomputer 75 calculates the drive duty by the following equation (9), for the case where constant drive instruction time exceeds current saturation time during current control time. Then microcomputer renews the latest drive duty to the calculated drive duty.

$$D_{op} = D_{op2} \times I_{op} \times R_{sns} / H_2(V_{spl}, T_{spl}, D_{op2}), \tag{9}$$

where $H_2(V_{spl}, T_{spl}, D_{op2})$ is a function that gives the average current value from the detected voltage value, detection time, and the drive duty for current control time.

A series of operation described above is periodically performed with a predetermined period, and inductive load 8 is activated by the newest computation results in activating inductive load 8 and starting current control. Further, during the current control, the drive duty is updated as described above. Therefore, errors in the current flowing in inductive load 8 are eliminated, so that the accuracy in the current value of the current flowing in inductive load 8 is improved for a target value. Further, the current detector does not require a filter circuit, and the number of used parts can be reduced by the use of an existing microcomputer, so that the costs can be reduced.

The function $H_1$ in the equation (8) is originally an exponential function, but it can be regarded as a linear function if the pulse period of the pulse signal is sufficiently small. If changes in the detected voltage are approximated by a linear function, then the ratio of detection time to the period of "H" in the pulse signal can be calculated to correct the detected voltage based on the ratio. Therefore, for example, the difference between the center value of a period of "H" in the pulse signal and detection time is multiplied by a proportional coefficient to be added to the detected current value to obtain the following equation (10).

$$H_1(V_{spl}, T_{spl}, D_{nop}) = V_{spl} + \alpha \times (T_{pwm} \times D_{nop}/2 - T_{spl}), \tag{10}$$

where $0 \leq T_{spl} \leq T_{pwm}$; $\alpha$ is the slope of detected voltage; and $T_{pwm}$ is the period of the pulse signal.

As described above, a drive duty is calculated based on one-time sampling data. If the drive duty is calculated based on multiple sampling data as shown in the following equations (11) and (12), errors due to noise in detected voltage values can be made small.

$$V_{spl} = \sum_{i=1}^{m} V_{spli}/m \tag{11}$$

$$T_{spl} = \sum_{i=1}^{m} T_{spli}/m \tag{12}$$

Next, Fig. 15 is a block diagram of an ABS control apparatus that uses the current control apparatus of Fig. 11. In Fig. 15, the same components as in Fig. 6 are denoted by the same symbols, and their descriptions are omitted here. Only points different from Fig. 6 are described here.

Fig. 15 differs from Fig. 6 in that a pulse timer (not illustrated) for measuring the period of the pulse signal output to solenoid driver 43 is installed in pulse generator 45. Then, pulse generator measures the elapsed time from a rise to a fall of the pulse signal to output the measured time into control judgment and calculation section 47 as pulse signal information. Control judgment and calculation section 47 detects the timing for monitoring the current value from current detector based on the pulse signal information input from pulse generator 45. Control judgment and calculation section 47 receives the current value information about the current value detected by current detector 46 following the detected timing. Therefore, pulse generator 45 is changed into pulse generator 81, control judgment and calculation section 47 is changed into control judgment and calculation section 82, and electronic control circuit 26 is changed into electronic control circuit with these changes.

In Fig. 15, ABS actuator 24 is driven and controlled by a control signal output from an electronic control circuit 80, which performs various calculations and judgments based on the signal input from wheel speed sensor 25. The wheel brake including the wheel cylinder and the wheel speed sensor is installed for each wheel, but the following descriptions are given for a representative one wheel.

Electronic control circuit 80 comprises a wheel speed calculator 40, a control reference speed calculator 41, a wheel state detector 42, a solenoid driver 43, a motor driver 44, a pulse generator 81 that outputs a pulse signal to solenoid driver 43 for control of the current flowing in solenoid 31 and outputs into a control judgment and calculation section 82 the pulse signal information about the pulse signal detected by the pulse timer, a current detector 46, the control judgment and calculation section 82 that detects the timing for monitoring the current value from current detector 46, receives the current value information about the current value detected by current detector 46 following the detected timing, and calculates the duty cycle of the pulse signal output from pulse generator 45 so that the value of the current flowing in solenoid 31 becomes a target current value, and a feedback section 48 that feeds back the current caused by the counter electromotive force induced in solenoid 31.

Wheel state detector 42 is connected to control judgment and calculation section 82. Control judgment and calculation section 82 is connected to motor driver 44 and pulse generator 81. Pulse generator 81 is connected to solenoid driver 43. Solenoid driver 43 is connected to current detector 46. Current detector 46 is connected to control judgment and calculation section 82. Solenoid valve 30, more strictly speaking, solenoid 31 of solenoid valve 30, is inductive load 8 of Fig. 11. Solenoid driver 43 is driver 2 of Fig. 11. Pulse generator 81 is pulse generator 41 of Fig. 11. Current detector 46 is current detector 4 of Fig. 11. Control judgment and calculating section 82 is duty instructor 72 of Fig. 11. Feedback section 48 is feedback section 6 of Fig. 11.

In the above configuration, wheel state detector 42 judges that the wheel is not locked if the difference between the wheel speed input from wheel speed calculator 40 and the control reference speed input from control reference speed calculator 41 is less than a constant value. Wheel state detector 42 then outputs the judgment to control judgment and calculation section 82, which determines the non-execution of ABS control to give a constant non-drive duty to pulse generator 81 so that the resulting current does not activate solenoid valve 30. Pulse generator 81 outputs a pulse signal of a constant drive-duty into solenoid driver 43 so that a current by which solenoid valve 30 does not operate flows in solenoid 31.

At this time, current detector 46 detects the value of the current flowing in solenoid 31. Current detector 46 outputs the detected current value as current value information into control judgment and calculation section 82. Control judgment and calculation section 82 detects the timing for receiving the current value information from current detector 46, that is, a period when a current flows in solenoid 31 by solenoid driver 43. Control judgment and calculation section 82 then receives the current value information from current detector 46, during the period, at the saturation time when the changes in the average value of the current flowing in solenoid 31 per unit time become small within a predetermined value. Control judgment and calculation section 82 then, using the equation (4), calculates beforehand a drive duty, which is a duty cycle for applying a desired current into solenoid 31 during current control time by solenoid driver 43, from the current value information, detection time that is the elapsed time from a rise of the pulse signal to the receiving of the current value information, and the non-drive duty.

The above series of operation is performed with a predetermined period. When solenoid valve 30 is activated and current control is started, solenoid valve 30 is activated with the newest computation results.

Further, wheel state detector 42 judges that the wheel is locked if the difference between the wheel speed input from wheel speed calculator 40 and the control reference speed input from control reference speed calculator 41 is greater than a constant value. Wheel state detector 42 then outputs the judgment to control judgment and calculation section 82, which determines the reduction of brake fluid pressure on wheel cylinder 23 to give an appropriate drive duty, in this case the duty cycle 1, to pulse generator 81 so that the current $I2$ flows in solenoid 31. Control judgment and calculation section 82 also instructs motor drive 44 to drive motor 35.

Pulse generator 81 outputs a pulse signal of the drive duty given by control judgment and calculation section 82 into solenoid driver 43. Solenoid driver 43 performs the decompression mode drive based on the pulse signal so that the current $I2$ flows in solenoid 31. Motor driver 44 drives motor 35 of pump 44 by applying a current into motor 35.

Further, when determining to hold the brake fluid pressure on wheel cylinder 23, control judgment and calculation section 82 gives a drive duty to pulse generator 81 based on the newest computation results obtained during the time when ABS control was not performed so that the current $I1$ flows in solenoid 31. Control judgment and calculation section 82 also instructs motor driver 44 to stop motor 35.

Pulse generator 81 outputs a pulse signal of the drive duty given by control judgment and calculation section 82 into solenoid driver 43. Solenoid driver 43 makes the current $I1$ flow in solenoid 31 of solenoid valve 30 following the pulse signal to activate solenoid 31 in the holding mode. Motor driver 44 stops motor 35 of pump 34.

Further, when the difference between the wheel speed and the control reference speed becomes less than a constant value by the reduction and holding of the brake fluid pressure on wheel cylinder 23, wheel state detector 42 judges that wheel locking has been avoided, and outputs the judgment to control judgment and calculation section 82. When determining to terminate ABS control and pressurize the brake fluid on wheel cylinder 23, control judgment and calculation section 82 instructs motor driver 44 to stop motor 35 and gives a non-drive duty to pulse generator 81. Pulse generator 81 outputs a pulse signal of the given non-drive duty into solenoid driver 43. Solenoid driver 43 makes solenoid valve 30 operate in the pressurization mode, so that the brake fluid on wheel cylinder 23 is repressurized.

Further, control judgment and calculation section 82 also calculates and determines the drive-duty during ABS control. If constant drive instruction time exceeds current saturation time during ABS control, the detected current value is proportionate to the duty cycle. Therefore, control judgment and calculation section 47 calculates and renews the drive duty by the equation (7) from the constant drive duty, the detected current value during the time when a current is flowing in solenoid 31 by a pulse signal of the drive duty, and detection time that is the elapsed time from a rise of the pulse signal of the drive duty to the receiving of the detected current value.

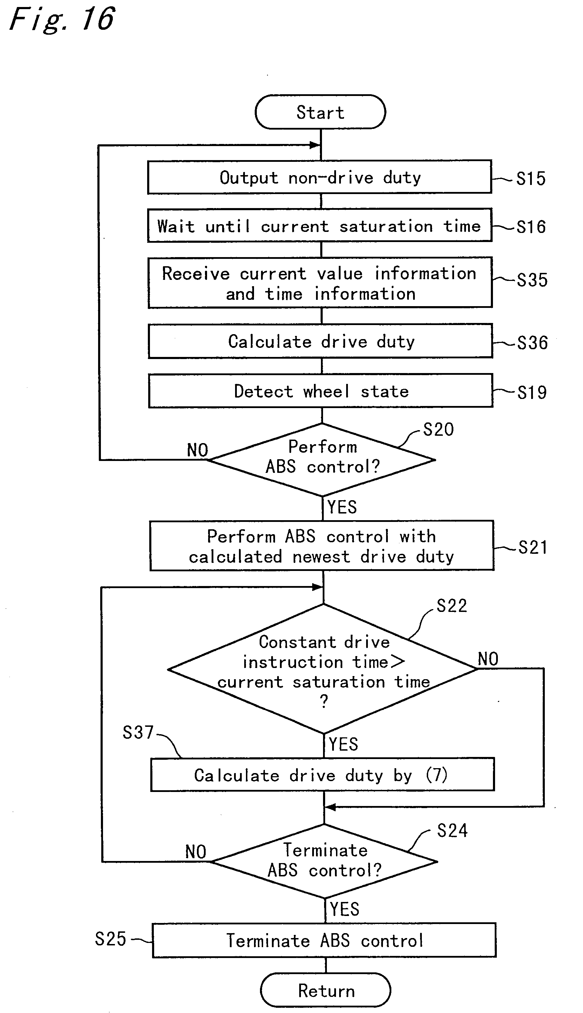

Fig. 16 is a flowchart showing an example of the operation of the ABS control apparatus illustrated in Fig. 15. In the following description of Fig. 16, control judgment and calculation section 47 is changed into control judgment and calculation section 82, pulse generator 45 is changed into pulse generator 81, and electronic control circuit 26 is changed into electronic control circuit 80 with these changes. The same processing as in Fig. 7 is denoted by the same symbol, and its description is omitted here. Only those points different from Fig. 7 are described here.

Fig. 16 differs from Fig. 7 as follows. The processing of step S17 in Fig. 7 is replaced by the processing of step S35. The processing step S18 in Fig. 7 is replaced by the processing of step S36. The processing step of S23 in Fig. 7 is replaced by the processing of step S37. Control judgment and calculation section 47 is changed into control judgment and calculation section 82. Pulse generator 45 is changed into pulse generator 81, and electronic control circuit 26 is changed into electronic control circuit 80 with these changes.

In Fig. 16, after the processing of step S16, the operation proceeds with step S35. In step 35, control judgment and calculation section 82 detects, from the pulse signal information input from pulse generator 81, that is, time information, and the non-drive duty, the period when a current flows in solenoid 31 by solenoid driver 43. Control judgment and calculation section 82 then receives, during the detected period, the detected current value from current detector 46 as current value information. Next, in step S36, control judgment and calculation section 82 calculates, from the non-drive duty, the current value information about the detected current value, and detection time that is the time information, a drive duty for control time when solenoid valve 30 is activated and current control is performed. Then the operation proceeds with the processing from step S19 to step S22.

Next, in step S22, if constant instruction time exceeds current saturation time (YES), then the operation proceeds with step S37. In step S37, control judgment and calculation section 82 calculates a drive duty from the equation (7) and performs the same processing as step S24 on in Fig. 7.

As described above, if control judgment and calculation section 82 determines the reduction of the brake fluid pressure on wheel cylinder 23 from the wheel state detected by wheel state detector 42, control judgment and calculation section 47 gives pulse generator 81 the duty cycle 1, so that the current $I2$ flows in solenoid 31. Pulse generator 81 outputs a pulse signal of the duty cycle 1 into solenoid driver 43. Solenoid driver 43 performs decompression drive of solenoid 31 of solenoid valve 30 following the pulse signal so that the current $I2$ flows in solenoid 31.

Similarly, if, from the wheel state detected by wheel state detector 42, control judgment and calculation section 82 determines to maintain the brake fluid pressure on wheel cylinder 23, then control judgment and calculation section 47 gives pulse generator 81 the drive duty calculated beforehand so that the current $I1$ flows in solenoid 31. Pulse generator 81 outputs a pulse signal of the drive duty into solenoid driver 43. Solenoid driver 43 drives solenoid 31 of solenoid valve 30 in the holding mode, following the pulse signal, so that the current $I1$ flows in solenoid 31.

Further, if, from the wheel state detected by wheel state detector 42, control judgment and calculation section 82 determines to terminate ABS control and the pressurization of the brake fluid on wheel cylinder 23, then control judgment and calculation section 82 gives pulse generator 81 a non-drive duty. Pulse generator 81 outputs a pulse signal of the non-drive duty into solenoid driver 43. Following the pulse signal, solenoid driver 43 applys a current in which solenoid valve 30 does not operate into solenoid valve 30. Control judgment and calculation section 82 calculates a drive duty of a pulse signal for driving solenoid valve 30 during ABS control, from the current value information detected by current detector 46 and the non-drive duty.

In the case of using the current control apparatus of the present third embodiment for ABS control apparatus, a pulse signal of the duty cycle 1 is used for applying the current $I2$ into solenoid 31. The duty cycle for applying the current $I2$ into solenoid 31 can also be calculated the same way as the duty cycle for applying the current $I1$.

In this way, the current control apparatus in the third embodiment of the present embodiment can be used for a drive and control apparatus for a solenoid valve in which three states are switched between the pressurization mode, holding mode, and decompression mode based on the current flowing in the solenoid. As described above, at the start of the current control of the current flowing in the solenoid for activating solenoid valve, the solenoid valve can be driven with a drive duty obtained beforehand from the latest computation results.

Further, a drive duty can also be determined during current control time. A series of operations described above is performed with a predetermined period, so that the accuracy in the value of the current flowing in the solenoid compared with a target value can be improved. Consequently, the fluctuations of the current flowing in the solenoid caused by the fluctuations in the resistance value of the solenoid and the voltage value of the power supply can be prevented, and the operation of the solenoid valve can be stabilized, so that the performance of ABS control can be improved.

FOURTH EMBODIMENT

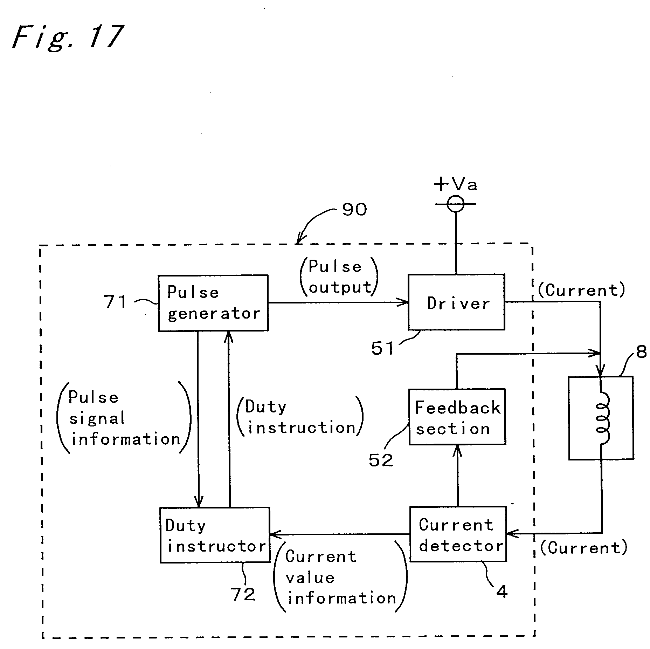

Fig. 17 is a block diagram illustrating the configuration of a fourth embodiment in the current control apparatus of pulse-width modulation in accordance with the present invention. In Fig. 17, the same components as in Figs. 8 and 11 are denoted by the same symbols, and their descriptions are omitted here. Only those points different from Fig. 11 are described in the following.

The current control apparatus of Fig. 17 differs from that of Fig. 11 as follows. Driver 2 in Fig. 11 is changed into driver 51, which is connected to pulse generator 71, the plus terminal +Va of the DC power supply Va (not illustrated), and inductive load 8. Inductive load 8 is connected to current detector 4. One end of feedback section 6 in Fig. 11 is connected to the connection between driver 51 and inductive load 8. The other end of feedback section 6 is connected to current detector 4, and the current caused by the counter electromotive force induced in inductive load 8 is fed back through current detector 4. Feedback section 6 of Fig. 11 is changed into feedback section 52, and current control apparatus 70 is changed into 90 with these changes.

In Fig. 17, current control apparatus 90 comprises a driver 51 that controls the on-off of the current flowing into an inductive load 8, a pulse generator 71 that outputs a pulse signal for controlling the current flowing in inductive load 8 into driver 51 and outputs pulse signal information about the pulse signal measured by a pulse timer into duty instructor 72, a current detector 4 that detects the value of the current flowing in inductive load 8, a duty instructor 72 that judges, based on the pulse signal information from pulse generator 71, whether the current value information input from current detector with arbitrary timing is the information during the time when a current due to the counter electromotive force is flowing in inductive load 8 or not, and calculates, based on the judgment, a duty cycle of the pulse signal output from pulse generator 71 so that the value of the current flowing in inductive load 8 becomes a target current value, and a feedback section 52 that feeds back the current caused by the counter electromotive force occurring in inductive load 8. Here pulse generator 71 is a pulse generating means, and duty instructor 72 is a duty instructing means.

Driver 51 controls the current flowing in inductive load 8 by the on-off of the current based on the pulse signal input from pulse generator 71. For example, driver 51 makes the current provided through the +Va terminal of the DC supply Va flow in inductive load 8, when the level of the pulse signal input from pulse generator 71 is at "H". Driver 2 makes the current not flow in inductive load 8, when the signal level is at "L".

Duty instructor 72 gives a non-drive duty to pulse generator 71 during non-control time to instruct pulse generator 71 to output a pulse signal of the non-drive duty into driver 51. Pulse generator 71 outputs a pulse signal of the given drive duty into driver 51 so that a non-drive current is made to flow thereby in inductive load 8. Pulse generator 71 also measures, using the pulse timer, pulse signal information about the pulse signal to be output to driver 51, that is, the elapsed time from the time when the pulse signal of the non-drive duty output from pulse generator 71 into driver 51 is detected to become at "H" level, to output the measured time into duty instructor 72.

Next, duty instructor 72 receives current value information about the detected current value from current detector 4 at the saturation time when changes in the average value of the current flowing in inductive load 8 per unit time become small within a predetermined value, and receives time information about the time when the current value was received, from pulse generator 71. Duty instructor 72 then detects whether the time it received the current value information was a period when a current flows in inductive loads 8 by driver 51 or a period when a current flows by the counter electromotive force induced in inductive load 8. Duty instructor 72 then calculates a drive duty, which is a duty cycle for applying a desired current into inductive load 8 during current control time by driver 2, from the current value information, the time information, and the non-drive duty, using a predetermined equation corresponding to the detected period. Duty instructor 72 then gives the calculated drive duty to pulse generator 71 during current control time. Pulse generator 71 outputs a pulse signal of the duty cycle given by duty instructor 72 into driver 51. Driver 51 performs drive control of inductive load 8 based on the pulse signal.

Here, the method of calculating the drive duty is as follows. Drive duty instructor 72 calculates the drive duty using the equation (6). However, the function $F(I_{nop}, T_{spl}, D_{nop})$ is replaced by appropriate ones corresponding to a period when a current flows in inductive loads 8 by driver 51 and a period when a current flows by the counter electromotive force induced in inductive load 8.

A flowchart showing an operation example of the apparatus illustrated in Fig. 17 is the same as the flowchart shown in Fig. 12. However, the description of the operation is modified as follows. Driver 2 is changed into driver 51. In calculating a drive duty, the function $F(I_{nop}, T_{spl}, D_{nop})$ is replaced by appropriate ones corresponding to a period when a current flows in inductive loads 8 by driver 51 and a period when a current flows by the counter electromotive force induced in inductive load 8.

A series of operation described above is periodically performed with a predetermined period, and inductive load 8 is driven by the newest computation results in activating inductive load 8 and starting current control. Further, during current control time, the drive duty is updated as in the third embodiment. Therefore, errors in the current flowing in inductive load 8 are eliminated, so that the accuracy in the current value of the current flowing in inductive load 8 is improved for a target value. Further, current value information can be received with arbitrary timing to perform calculation, so that arithmetic processing can be simplified.

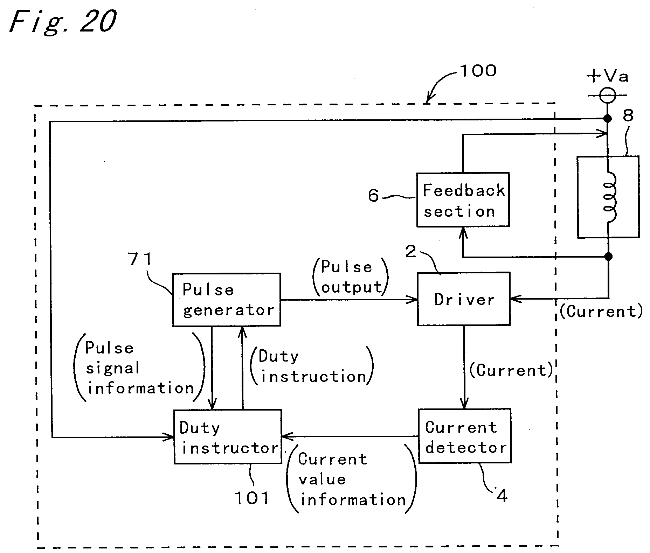

Fig. 18 shows a circuit example of the current control apparatus of Fig. 17. The same components as in Fig. 9 are denoted by the same symbols, their descriptions are omitted here, and only points different from Fig. 9 are described in the following.

Fig. 18 differs from Fig. 9 in that the filter circuit composed of resistor 16 and capacitor 17 is discarded, and microcomputer 60 in Fig. 9 is changed into microcomputer 78 with this change. The connection between inductive load 8 and resistor 15 is connected to the A/D converter terminal of microcomputer 78.

In Fig. 18, resistor 15 functions as a shunt resistor. Microcomputer 78 functions as pulse generator 71 and duty instructor 72. Resistors 61, 62, 64, 65, NPN transistor 63, and PMOSFET 66 constitute driver 51. Resistor 15 functions as current detector 4. Diode 12 functions as feedback section 52.

Fig. 19 is a timing chart in the circuit shown in Fig. 18. In Fig. 19, the *pulse output* means a pulse signal output from the pulse signal output terminal of microcomputer 78. The *load current value* means the value of the current flowing in inductive load 8. This value is the same as the current value detected by shunt resistor 15. The *monitor voltage* means the voltage input to the A/D converter terminal of microcomputer 78 and becomes the current value information about the current value detected by current detector 4.

In Figs. 18 and 19, inductive load 8 is driven by the stepwise switching of the current flowing therein. Current control of pulse-width modulation is performed by using PMOSFET 66 together with the function of microcomputer 78 outputting a pulse signal and NPN transistor 63. Diode 12 makes the duty cycle approximately proportionate to the current flowing in inductive load 8, and feeds back the current caused by the counter electromotive force induced in inductive load 8. If the signal level of the pulse signal output from microcomputer 78 is at "H," then NPN transistor 63 is turned on, and then PMOSFET 66 is turned on. At this time, the value of current flowing in inductive load 8 is converted into voltage by the shunt resistor 15. The voltage is input to the A/D converter terminal of microcomputer 78.

In such a configuration, microcomputer 78 outputs a pulse signal of a constant non-drive duty to the base of NPN transistor 63 through resistor 64 during non-control time when current control is not performed with activated inductive load 8. Following this move, PMOSFET 66 applys a non-drive current into inductive load 8. At this time, microcomputer 75 measures the elapsed time from a rise of the signal output to NPN transistor 63, using a built-in timer (not illustrated). Microcomputer 78 then judges, from the measured time and the non-drive duty, whether the time when the detected voltage value is input therein belongs to a period when a current flows in inductive load 8 by PMOSFET 66 or a period when a current flows by the counter electromotive force induced in inductive load 8.

Microcomputer 78 waits for a predetermined time, which is the time taken by the current flowing in inductive load 8 to be in the saturation state after changes in the average current value during the detected period become small within a predetermined value. After the predetermined time, microcomputer 78 then receives the detected voltage value with arbitrary timing. Further, microcomputer 78 identifies the period when it received the detected voltage value as one of the above two periods. Using the equation corresponding to the identified period, microcomputer 78 then calculates, from the current value information, the time information about the time when the current value information was received, and the non-drive duty, a drive duty that is a duty cycle for applying a current of a desired value into inductive load 8 by PMOSFET 66 during current control time.

Then microcomputer 78 outputs a pulse signal of the calculated drive duty for current control time to the base of NPN transistor 63 through resistor 64. PMOSFET 66 then applys desired current into inductive load 8.

In this way, the timing for microcomputer 78 to receive the detected voltage value is not limited to the time when the signal input to the base of NPN transistor 63 is at "H" level. Further, the detected voltage does not become constant, since the non-drive current is converted into voltage by shunt resistor 15 only. Therefore, the detected voltage value $V_{spl}$ depends on time, so that the detected current value $I_{nop}$ becomes

$$I_{nop} = J(V_{spl}, T_{spl}, D_{nop}) / R_{sns},$$

where $H(V_{spl}, T_{spl}, D_{nop})$ is a function that gives the average voltage value from the detected voltage value, the detection time, and the non-drive duty, and is different corresponding to the identified period. Therefore, the following equation (13) is derived from this equation and the equation (1).

$$D_{op} = D_{nop} \times I_{op} \times R_{sns} / J(V_{spl}, T_{spl}, D_{nop}). \tag{13}$$

Microcomputer 78 calculates beforehand from the above detected voltage value and the non-drive duty the drive duty at the time when inductive load 8 is activated and current control is performed.

Further, microcomputer 78 calculates a drive duty by the above equation (9), for the case where constant drive instruction time exceeds current saturation time during current control time. Then microcomputer renews the latest drive duty to the calculated drive duty.

A series of operation described above is periodically performed with a predetermined period, and inductive load 8 is activated by the newest computation results in activating inductive load 8 and starting current control. Further, during current control time, the drive duty is also updated from time to time as in the third embodiment. Therefore, errors in the current flowing in inductive load 8 are eliminated, so that the accuracy in the current value of the current flowing in inductive load 8 is improved for a target value. Further, the current detector does not require a filter circuit, and the number of used parts can be reduced by the use of an existing microcomputer, so that the costs can be reduced. Further, current value information can be received with arbitrary timing to perform calculation, so that arithmetic processing can be simplified.

The function $J$ in the equation (13) is originally an exponential function, but it can be regarded as a linear function if the pulse period of the pulse signal is sufficiently small. If changes in the detected voltage are approximated by a linear function, then the ratio of detection time to the period of "H" in the pulse signal, or the ratio of detection time to the period of "L" in the pulse signal, can be calculated to correct the detected voltage based on the ratio. Therefore, for example, the difference between the center value of a period of "H" in the pulse signal and detection time is multiplied by a proportional coefficient to be added to the detected current value to obtain the following equations (14) and (15).

$$J(V_{spl}, T_{spl}, D_{nop}) = V_{spl} + \alpha \times (T_{pwm} \times D_{nop}/2 - T_{spl}), \tag{14}$$

where $0 \le T_{spl} \le T_{pwm} \times D_{nop}$.

$$J(V_{spl}, T_{spl}, D_{nop}) = V_{spl} + \beta \times \{T_{pwm} - (1 - D_{nop}) \times T_{pwm}/2 - T_{spl}\}, \tag{15}$$

where $T_{pwm} \times D_{nop} \le T_{spl} \le T_{pwm}$, $\beta$ is the slope of the detected voltage during the time when PMOSFET 66 is off.

As described above, a drive duty is calculated based on one-time sampling data. If the drive duty is calculated based on multiple sampling data as shown in the following equation (16), errors due to noise in detected voltage values can be made small. Here the average value of the multiple sampling data is calculated for the time when PMOSFET 66 is on and for the time when PMOSFET 66 is off.

$$J(V_{spl}, T_{spl}, D_{nop}) = \{J_{on}(V_{spl\_on}, T_{spl\_on}, D_{nop}) \times a + J_{off}(V_{spl\_off}, T_{spl\_off}, D_{nop}) \times b\} / (a + b), \qquad (16)$$

where $J_{on}$ ($V_{spl\_on}$, $T_{spl\_on}$, $D_{nop}$) is the average voltage value during the time when PMOSFET 66 is on; $J_{off}$($V_{spl\_off}$, $T_{spl\_off}$, $D_{nop}$) is the average voltage value during the time when PMOSFET 66 is off; $a$ is the number of samples during the time when PMOSFET 66 is on; and $b$ is the number of sumples during the time when PMOSFET 66 is off. Further, $V_{spl\_on}$, $T_{spl\_on}$, $V_{spl\_off}$, $T_{spl\_off}$ in the equation (16) can be expressed by the following equations (17) to (20).

$$V_{spl\_on} = \sum_{i=1}^{a} V_{spli}/a \qquad (17)$$

$$T_{spl\_on} = \sum_{i=1}^{a} T_{spli}/a \qquad (18)$$

$$V_{spl\_off} = \sum_{i=1}^{b} V_{spli}/b \qquad (19)$$

$$T_{spl\_off} = \sum_{i=1}^{b} T_{spli}/b \qquad (20)$$

The apparatus of the present fourth embodiment can be used for an ABS control apparatus as the third embodiment. For that purpose, solenoid driver 43 is connected to pulse generator 81, the plus terminal +Va of the DC power supply (not illustrated), and one end of solenoid 31. The other end of solenoid 31 is connected to current detector 46. One end of feedback section 48 is connected to the connection between solenoid driver 43 and solenoid 31. The other end of feedback section 48 is connected to current detector 46. In this way, a current caused by the counter electromotive force induced in solenoid 31 is fed back through current detector 46. The other points are the same as in the third embodiment and omitted here.

<u>FIFTH EMBODIMENT</u>

In the current control apparatus of the third embodiment, a pulse signal of a constant non-drive duty is output to apply a non-drive current that does not activate the inductive load. However, in the current control apparatus of the third embodiment, a pulse signal of the duty cycle 1 may be output during a period to apply a non-drive current that does not activate the inductive load. A current control apparatus obtained by such modifications is the fifth embodiment in the current control apparatus of pulse-width modulation in accordance with the present embodiment.

Fig. 20 is a block diagram illustrating the configuration of a fifth embodiment in the current control apparatus of pulse-width modulation in accordance with the present invention. In Fig. 20, the same components as in Fig. 11 are denoted by the same symbols, and their descriptions are omitted here. Only those points different from Fig. 11 are described in the following.

The current control apparatus of Fig. 20 differs from that of Fig. 11 as follows. Duty instructor 72 of Fig. 11 is connected to the plus terminal +Va of the DC power supply (not illustrated), so that the voltage value of the DC power supply Va is monitored by duty instructor 72. Duty instructor 72 is changed into duty instructor 101, and current control apparatus 70 is changed into 100 with this change.

In Fig. 20, current control apparatus 100 comprises a driver 2, a pulse generator 71 that outputs a pulse signal for controlling the current flowing in inductive load 8 into driver 2 and outputs pulse signal information about the pulse signal measured by a pulse timer into a duty instructor 101, a current detector 4, feedback section 6, and the duty instructor 101 that detects the timing for monitoring the current value from current detector 4 based on the pulse signal information from pulse generator 71 and the non-drive duty given to pulse generator 71, receives, following the detected timing, current value information about the current value detected by current detector 4, monitors the voltage value of the DC power supply Va, and calculates a duty cycle of the pulse signal output from pulse generator 71 so that the value of the current flowing in inductive load 8 becomes a target current value, and a feedback section 6 that feeds back the current caused by the counter electromotive force occurring in inductive lead 8. Here duty instructor 101 is a duty instructing means.

Current detector 4 is connected to duty instructor 101. Duty instructor 101 is connected to pulse generator 71.

Duty instructor 101 detects the timing for monitoring current value information about the detected current value from current detector 4 based on the pulse signal information input from pulse generator 71. Duty instructor 101 then receives the current value information from current detector following the detected timing and detects the voltage value of the power supply at that time. Duty instructor 101 then calculates a duty cycle of the pulse signal output from pulse generator 71 so that the value of the current flowing in inductive load 8 becomes a target current value. Duty instructor 101 then gives the calculated duty to pulse generator 71. Pulse generator 71 outputs a pulse signal of the duty cycle given by duty instructor 101 into driver 2 and outputs the pulse signal information about the pulse signal into duty instructor 101.

In the configuration described above, duty instructor 101 instructs pulse generator 71, during non-control time when current control is not performed, to output a pulse signal of the duty cycle 1 for a time so that inductive load 8 does not operate. Pulse generator 71 outputs a pulse signal, based on the instruction, into driver 2 to control the current so that a non-drive current flows in inductive load 8. Pulse generator 71 also measures the pulse signal information about the pulse signal output into driver 2, that is, the elapsed time from the time when the pulse signal of duty 1 output into driver 2 from pulse generator 71 was detected to become "H," using the pulse timer. Pulse generator 71 outputs the information about the measured time into duty instructor 101.

Next, duty instructor 101 detects, from the output period for the pulse signal of the duty cycle 1, the timing for receiving the current value information about the detected current value from current detector 4, that is, the period when a current flows in inductive load 8 by driver 2. Duty instructor 101 then receives the current value information from current detector 4 during the period and detects the voltage value $V_{ig}$ of the DC power supply Va. Duty instructor 101 then calculates from the detected current value $I_{nop}$ obtained from the current value information, detection time that is the period from a rise of the pulse signal output from pulse generator 71 to the time when the current value information is received, by the following equation (21), a drive duty for control time when inductive load 8 is activated and current control is performed.

$$D_{op} = I_{op} / K(I_{nop}, T_{spl}, V_{ig}), \tag{21}$$

where $K(I_{nop}, T_{spl}, V_{ig})$ is a function that gives the saturation current value from the detected current value, the detection time, and the voltage value of the power supply. A series of operation described above is periodically performed with a predetermined period, and inductive load 8 is driven by the newest computation results in activating inductive load 8 and starting current control.

Further, duty instructor 101 calculates beforehand a drive duty for renewal by the equation (7), if constant drive instruction time exceeds current saturation time. If constant drive instruction time does not exceed current saturation time and if the drive duty is constant, then the voltage value of the power supply and the detected current value are proportionate. Therefore, in order to make the current flowing in inductive load 8 constant, it is necessary to vary the value of the drive duty with changes in the voltage value of the power supply. Duty instructor 101 corrects the drive duty using the following equation (22) for changes in the source voltage value. If the resistance value of the load resistance of inductive load 8 varies with a rise in the temperature of inductive load 8, then duty instructor 101 corrects the drive duty using the following equation (23) for a change in the load resistance.

$$D_{op} = (VG0/VG1) \times D_{op2}, \tag{22}$$

where $VG0$ is the voltage value of the power supply at the time when $D_{op2}$ is determined, and $VG1$ is the change amount of source voltage.

$$D_{op} = (R_{cil1}/R_{cil0}) \times D_{op2}, \tag{23}$$

where $VG0$ where $R_{cil0}$ is the value of the load resistance at the time when $D_{op2}$ is determined, and $R_{cil1}$ is the change amount of the load resistance.

Further, if $D_{op2}$ is a drive duty at the starting time of current control, then $R_{cil0}$ and $R_{cil1}$ are expressed by the following equations (24) to (26).

$$R_{cil0} = V_{ig} \times D_{nop}/I_{nop}, \tag{24}$$

$$R_{cil1} = R_{typ} \times \{1 + \varepsilon \times (t_{cil} + P \times \theta - 25)/100\}, \tag{25}$$

$$t_{cil} = 25 + (100 \times V_{ig} \times D_{nop})/(R_{typ} \times \varepsilon \times I_{nop}) - 100/\varepsilon, \tag{26}$$

where $R_{typ}$ is the value of the load resistance at 25 °C; $\varepsilon$ is the temperature coefficient of the load resistance; $t_{cil}$ is the temperature of the load at the starting time of current control; $P$ is the power consumption by the load; and $\theta$ is the transient thermal resistance of the load.

Here, the above power consumption $P$ by the load can be calculated by the following equation (27).

$$P = V_{av} \times I_{av},\qquad\qquad(27)$$

where $V_{av}$ is the average voltage value of the power supply, that is, the average value of source voltage over the period to the time when the drive duty is corrected, and $I_{av}$ is the average value of load current, that is, the average value of the current flowing in load 8 over the time taken until the drive duty is corrected. For example, if inductive load 8 is supplied with currents of three values, $I0$, $I1$, $I2$, then the average value $I_{av}$ of the load current can be expressed by the following equation (28).

$$I_{av} = (I0 \times f + I1 \times g + I2 \times h)/(f + g' + h),\qquad\qquad(28)$$

whee $f$ is the period when the current $I0$ flows in inductive load 8; $g$ is the period when the current $I1$ flows in inductive load 8; and $h$ is the period when the current $I2$ flows in inductive load 8.

The power consumption $P$ can be calculated from the operation history of inductive load 8 by the equation (27) and (28). The product of the power consumption $P$ and the transient thermal resistance $\theta$ becomes the value of the temperature rise, so that the change in the load resistance value can be calculated from the operation history of inductive load 8 by the equation (25). Therefore, the drive duty can be calculated by the equation (23) to determine the correction.

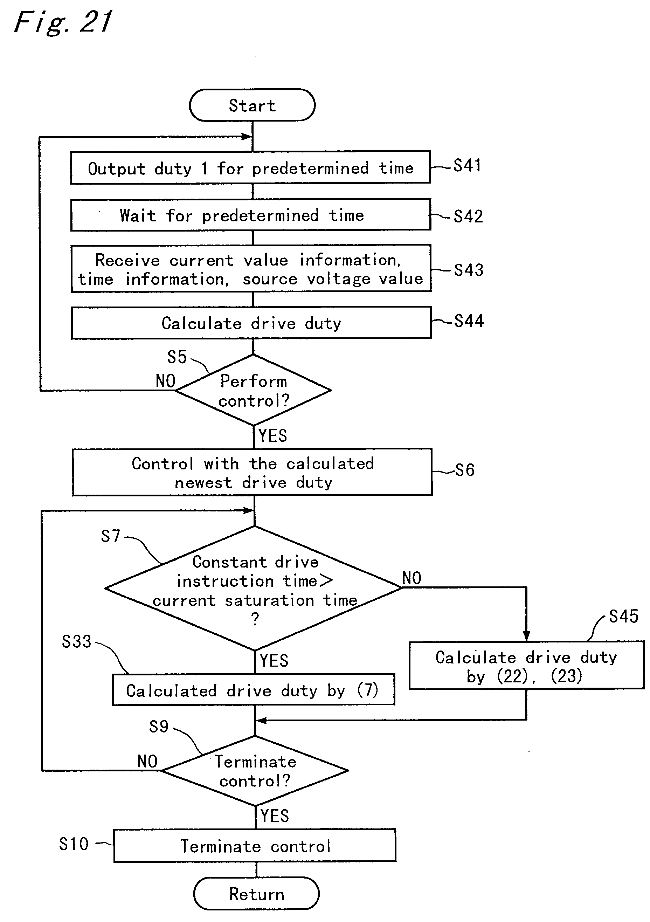

Fig. 21 is a flowchart showing an operation example of the apparatus illustrated in Fig. 20. The operation example of the current control apparatus in the fifth embodiment is described in the following in conjunction with Fig. 21. In the change from the third embodiment to the fifth embodiment, duty instructor 72 is changed into duty instructor 101, and current control apparatus 70 is changed into current control apparatus 100 with this change. The same processing as in Fig. 12 with these changes is denoted by the same symbols, and its description is omitted here, and only points different from Fig. 12 are described in the following.

The flowchart of Fig. 21 differs from the one of Fig. 12 in the following points. The processing of step S1 in Fig. 12 is replaced by the processing of step S41. The processing of step S2 in Fig. 12 is replaced by the processing of step S42. The processing of step S31 in Fig. 12 is replaced by the processing of step S43. The processing of step S32 in Fig. 12 is replaced by the processing of step S44. The processing of step S45 is added between step S7 and step S9 in Fig. 12. Duty instructor 72 is changed into duty instructor 101, and current control apparatus 70 is changed into current control apparatus 100 with this change.

In Fig. 21, first in step S41, duty instructor 101 gives the duty cycle 1 to pulse generator 71 for a predetermined time. Pulse generator 71 outputs a pulse signal of the duty cycle 1 into driver 2 for the predetermined time. Next in step S42, driver 2 performs drive control of inductive load 8 following the pulse signal input from pulse generator 71. Then, after waiting for a predetermined time, the operation proceeds with step S43.

In step S43, duty instructor 101 detects a period when a current flows in inductive load 8 by driver 2 from pulse signal information, that is, information about the time when the pulse signal of the duty cycle 1 was output. Duty instructor 101 then receives the detected current value information from current detector 4 during the detected period and also detects the source voltage value at that time. Next, in step S44, duty instructor 72 calculates a drive duty for control time when inductive load 8 is activated and current control is performed, using the equation (6), from the non-drive duty, the current value about the detected current value, and detection time that is time information. Then the processing from step S5 to S7 in Fig. 12 is performed.

A series of operation described above is periodically performed with a predetermined period, and inductive load 8 is driven by the newest computation results in activating inductive load 8 and starting current control. Also, the above drive duty is calculated without waiting until the saturation time when changes in the average current value of the current flowing in inductive load 8 by a pulse signal of a non-drive duty become small within a predetermined value. Therefore, the time required for waiting for calculation of the drive duty can be shortened.

Further, during current control time, the drive duty is also determined from time to time as described above. If constant drive instruction time is longer than current saturation time, then the drive duty is calculated and renewed in the same way as during non-control time when current control is not performed. Therefore, the operation of calculating the drive duty is simplified. If constant drive instruction time is not longer than current saturation time, and if changes in the voltage value of the power supply and the load resistance value of the inductive load occur, the accurate value of the current flowing in the inductive load by the calculated drive duty can be maintained. Therefore, errors in the current flowing in inductive load 8 are eliminated. Consequently, accuracy in the current value of the current flowing in inductive load 8 is improved for a target value.

A circuit example of the current control apparatus of Fig. 20 is the same as Fig. 13. Therefore, the circuit example of the current control apparatus illustrated in Fig. 20 is described in the following in conjunction with Fig. 13.

During non-control time when current control is not performed, microcomputer 75 outputs a pulse signal of the duty cycle 1 to NMOSFET 14 through resistor 13 for a time so that inductive load 8 does not operate to apply a non-drive current into inductive load 8 during non-control time when current control is not performed for activated inductive load 8. At this time, microcomputer 75 measures the elapsed time from a rise of the signal output to NMOSFET 14, using a built-in timer (not illustrated). Microcomputer 75 then obtains the timing for receiving the detected voltage value, which has been converted into voltage from the non-drive current by shunt resistor 15, from the measured time. That is, microcomputer 75 detects a period when a current flows in inductive load 8 by NMOSFET 14. Then at the time when the detected voltage value is received during the period, microcomputer 75 reads in the voltage value of the DC power supply Va and receives, as detection time, the measured time when the detected voltage value was received.

In this way, the timing for microcomputer 75 to receive the detected voltage value is limited to the time when the signal input to the gate of NMOSFET 14 is at "H." Further, the detected voltage does not become constant. Therefore, using the following equation (29), microcomputer 75 calculates beforehand a drive duty for control time when inductive load 8 is activated and current control is performed, from the source voltage value $V_{ig}$, the detected voltage value $V_{spl}$, and detection time $T_{spl}$. First,

$$K(I_{nop}, T_{spl}, V_{ig}) = M(V_{spl}, T_{spl}, V_{ig}) / R_{sns},$$

where $M(V_{spl}, T_{spl}, V_{ig})$ is a function that gives the detected saturation voltage value from the detected voltage value, the detection time, and the source voltage value $V_{ig}$. Therefore, by substituting the above equation for $K(I_{nop}, T_{spl}, V_{ig})$ in the equation (21), we obtain

$$D_{op} = I_{op} \times R_{sns} / M(V_{spl}, T_{spl}, V_{ig}). \tag{29}$$

Microcomputer 75 periodically performs a series of operation described above with a predetermined period, and drives inductive load 8 using the newest computation results in activating inductive load 8 and starting current control.

Further the function in the equation (29) can be expressed by the following equation (30).

$$M(V_{spl}, T_{spl}, V_{ig}) = R_{sns} \times V_{ig} / R_{cil}, \tag{30}$$

where $0 \leq T_{spl} \leq n \times T_{pwm}$, $R_{cil}$ is the resistance value of inductive load 8, and $n$ is the output period of the pulse signal of the duty cycle 1.

Further, if the detected voltage value $V_{spl}$ can be expressed for the time coordinate $t$ by

$$V_{spl} = R_{sns} \times V_{ig} / R_{cil} \times \{1 - \exp(-R_{cil}/L \times t)\},$$

where $L$ is the inductance of inductive load 8, then $V_{spl}$ in the above equation (30) can be expressed by the following equation, by which the value of the variable $R_{cil}$ can be obtained.

$$V_{spl} = R_{sns} \times V_{ig} / R_{cil} \times \{1 - \exp(-R_{cil}/L \times T_{spl})\}.$$

Further, microcomputer 75 calculates a drive duty by the above equation (9), for the case where constant drive instruction time exceeds current saturation time during current control time. Then microcomputer renews the latest drive duty to the calculated drive duty.

A series of operation described above is periodically performed with a predetermined period, and inductive load 8 is activated by the newest computation results in activating inductive load 8 and starting current control. Also, the above drive duty is calculated without waiting until the saturation time when changes in the average current value of the current flowing in inductive load 8 by a pulse signal of a non-drive duty become small within a predetermined value. Therefore, the time required for waiting for calculation of the drive duty can be shortened. Also, the current detector does not require a filter circuit, and the number of used parts can be reduced by the use of an existing microcomputer, so that the costs can be reduced.

Further, during current control time, the drive duty is also determined from time to time as described above. If constant drive instruction time is longer than current saturation time, then the drive duty is calculated and renewed in the same way as during non-control time when current control is not performed. Therefore, the operation of calculating the drive duty is simplified. If constant drive instruction time is not longer than current saturation time, and if changes in the voltage value of the power supply and the load resistance value of the inductive load occur, an accurate value of the current flowing in the inductive load by the calculated drive duty can be maintained. Therefore, errors in the current flowing in inductive load 8 are eliminated. Consequently, accuracy in the current value of the current flowing in inductive load 8 is improved for a target value.

SIXTH EMBODIMENT

In the current control apparatus of the fourth embodiment, a pulse signal of a constant non-drive duty is output to apply a non-drive current that does not activate the inductive load. However, in the current control apparatus of the fourth embodiment, a pulse signal of the duty cycle 1 may be output during a period to apply a non-drive current that does not activate the inductive load. A current control apparatus obtained by such modifications is the sixth embodiment in the current control apparatus of pulse-width modulation in accordance with the present embodiment.

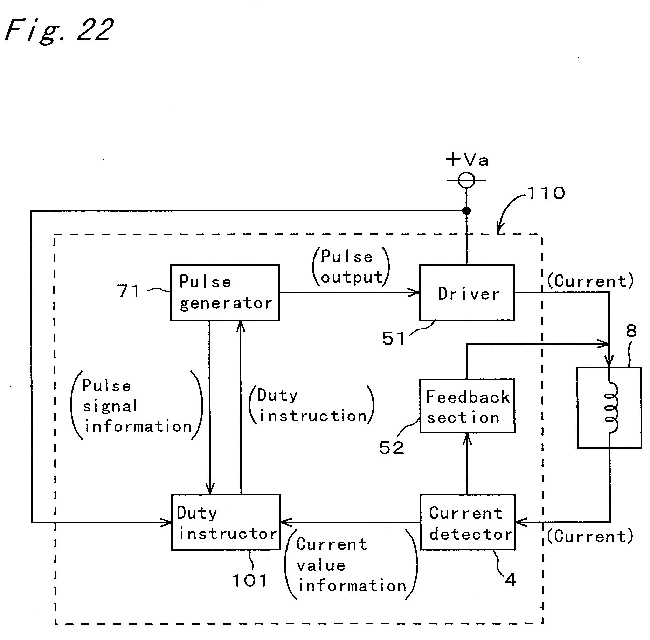

Fig. 22 is a block diagram illustrating the configuration of a sixth embodiment in the current control apparatus of pulse-width modulation in accordance with the present invention. In Fig. 22, the same components as in Figs. 17 and 20 are denoted by the same symbols, and their descriptions are omitted here. Only those points different from Fig. 17 are described in the following.

The current control apparatus of Fig. 22 differs from that of Fig. 17 as follows. Duty instructor 72 of Fig. 17 is connected to the plus terminal +Va of the DC power supply (not illustrated), so that the voltage value of the DC power supply Va is monitored by duty instructor 72. Duty instructor 72 is changed into duty instructor 101, and current control apparatus 90 is changed into 110 with this change.

In Fig. 22, current control apparatus 110 comprises a driver 51, a pulse generator 71 that outputs a pulse signal for controlling the current flowing in inductive load 8 into driver 51 and outputs pulse signal information about the pulse signal measured by a pulse timer (not illustrated) into duty instructor 101, a current detector 4, a feedback section 52, the duty instructor 101 that detects the timing for monitoring the current value from current detector 4 based on the pulse signal information from pulse generator 71, receives current value information about the current value detected by current detector 4 following the detected timing, monitors the voltage value of the DC power supply Va, and calculates a duty cycle of the pulse signal output from pulse generator 71 so that the value of the current flowing in inductive load 8 becomes a target current value.

Current detector 4 is connected to duty instructor 101. Duty instructor 101 is connected to pulse generator 71.

Duty instructor 101 instructs pulse generator 71, during non-control time when current control is not performed, to output a pulse signal of the duty cycle 1 for a time so that inductive load 8 does not operate. Pulse generator 71 outputs a pulse signal based on the instruction into driver 2 to control the current so that a non-drive current flows in inductive load 8. Pulse generator 71 also measures pulse signal information about the pulse signal output into driver 2, that is, the elapsed time from the time when the pulse signal of duty 1 output into driver 2 from pulse generator 71 was detected to become "H," using the pulse timer. Pulse generator 71 outputs the information about the measured time into duty instructor 101.

Next, duty instructor 101 receives the current value information from current detector with arbitrary timing, receives the voltage value of the power supply at that time, and receives time information about the time when the current value was received, from pulse generator 71. Duty instructor 72 then detects whether the time it received the current value information was a period when a current flows in inductive loads 8 by driver 51 or a period when a current flows by the counter electromotive force induced in inductive load 8. Duty instructor 72 then calculates a drive duty, which is a duty cycle for applying a desired current into inductive load 8 during current control time by driver 2, from the current value information, the time information, and the source voltage value, using a predetermined equation corresponding to the detected period.

Here, as a method of calculating the drive duty, duty instructor 101 uses the above equation (21). However, the function $K(I_{nop}, T_{spl}, D_{nop})$ in (21) is replaced by appropriate ones corresponding to a period when a current flows in inductive loads 8 by driver 51 and a period when a current flows by the counter electromotive force induced in inductive load 8.

A series of operation described above is periodically performed with a predetermined period, and inductive load 8 is driven by the newest computation results in activating inductive load 8 and starting current control.

Further, duty instructor 101 calculates beforehand a drive duty for renewal by the equation (7), if constant drive instruction time exceeds current saturation time. If constant drive instruction does not exceed current saturation time, duty instructor 101 corrects the drive duty using the following equation (22) for changes in the source voltage. If the resistance value of the load resistance of inductive load 8 varies with a rise in the temperature of inductive load 8, then duty instructor 101 corrects the drive duty using the following equation (23) for changes in the load resistance.

A flowchart showing an operation example of the apparatus illustrated in Fig. 22 is obtained by modifying the flowchart of Fig. 21 as follows. Driver 2 is changed into driver 51. The drive duty is calculated depending on whether the time the current value information was received was a period when a current flows in inductive loads 8 by driver 51 or a period when a current flows by the counter electromotive force induced in inductive load 8. The other part of the operation is the same as in Fig. 21, and its description is omitted here.

A series of operation described above is periodically performed with a predetermined period, and similar effects as of the fifth embodiment are obtained. Further, the current value information is received and processed with arbitrary timing, so that arithmetic processing can be simplified.

A figure showing a circuit example of the current control apparatus of Fig. 22 is the same as Fig. 18. Therefore, the circuit example of the current control apparatus illustrated in Fig. 22 is described in the following in conjunction with Fig. 18.

Microcomputer 78 outputs a pulse signal of the duty cycle 1 to the base of NPN transistor 63 through resistor 64 for a time so that inductive load 8 does not operate to apply a non-drive current into inductive load 8 during non-control time when current control is not performed for activated inductive load 8. Then PMOSFET 66 applys a non-drive current into inductive load 8.

At this time, microcomputer 78 outputs a pulse signal of the duty cycle 1, receives the detected voltage value, which is converted from a non-drive current flowing in inductive current 8 into voltage by shunt resistor 15, with arbitrary timing, and receives the voltage value of the DC power supply Va. Further, microcomputer 78 measures the elapsed time from a rise of the signal output into NPN transistor 63, using a built-in timer (not illustrated), and judges, from the measured time and the time when the pulse signal of the duty cycle 1 was output, whether the time when the detected voltage value was received was a period when a current flows in inductive loads 8 by PMOSFET 66 or a period when a current flows by the counter electromotive force induced in inductive load 8. Microcomputer 78 calculates a drive duty, from the received detected voltage value, source voltage at the time when the detected voltage value was received, and the measured time that is detection time, using predetermined equations corresponding to the above periods.

In this way, the timing for microcomputer 78 to receive the detected voltage value is not limited to the time when the signal input to the base of NPN transistor 63 is at "H" level. Further, the detected voltage does not become constant, since the non-drive current is converted into voltage by shunt resistor 15 only. Therefore, microcomputer calculates beforehand a drive duty for control time when inductive load 8 is activated and current control is performed, from the source voltage value $V_{ig}$, the detected voltage value $V_{spl}$, and the detection time $T_{spl}$, by the following equation (31).

First,

$$K(I_{nop}, T_{spl}, V_{ig}) = N(V_{spl}, T_{spl}, V_{ig}) / R_{sns},$$

where $N(V_{spl}, T_{spl}, V_{ig})$ is a function that gives the detected saturation voltage value from the detected voltage value, the detection time, and the source voltage value $V_{ig}$. Therefore, by substituting the above equation for $K(I_{nop}, T_{spl}, V_{ig})$ in the equation (21), we obtain

$$D_{op} = I_{op} \times R_{sns} / N(V_{spl}, T_{spl}, V_{ig}). \tag{31}$$

Microcomputer 78 periodically performs a series of operation described above with a predetermined period, and drives inductive load 8 using the newest computation results in activating inductive load 8 and starting current control.

Further the function in the equation (31) can be expressed by the following equation (32).

$$N(V_{spl}, T_{spl}, V_{ig}) = R_{sns} \times V_{ig} / R_{cil}, \tag{32}$$

Further, the detected voltage value $V_{spl}$ can be expressed for the time coordinate $t$ by

$$V_{spl} = R_{sns} \times V_{ig} / R_{cil} \times \{1 - \exp(-R_{cil}/L \times t)\},$$

as the equation (30) of the fifth embodiment, if $0 \le T_{spl} \le n \times T_{pwm}$, that is, when PMOSFET 66 is on. Therefore, the value of the variable $R_{cil}$ at $t = T_{spl}$ can be obtained from this equation.

If $n \times T_{pwm} \le T_{spl}$, that is, when PMOSFET 66 is off, then the detected voltage value $V_{spl}$ can be expressed by

$$V_{spl} = R_{sns} \times V_{ig} / R_{cil} \times \exp(-R_{cil}/L \times t).$$

In this case, if PMOSFET 66 is turned off from on, at $t = n \times T_{pwm}$, then

$$R_{sns} \times V_{ig} / R_{cil} \times \{1 - \exp(-R_{cil}/L \times n \times T_{pwm})\} = R_{sns} \times V_{ig} / R_{cil} \times \exp(-R_{cil}/L \times t).$$

Therefore,

$$1 - \exp(-R_{cil}/L \times n \times T_{pwm}) = \exp(-R_{cil}/L \times t).$$

Hence

$$t = -L/R_{cil} \times \log\{1 - \exp(-R_{cil}/L \times n \times T_{pwm})\},$$

so that $V_{spl}$ at $t$ such that $n \times T_{pwm} \le t \le T_{spl}$ becomes

$$V_{spl} = R_{sns} \times V_{ig} / R_{cil} \times \exp\{-R_{cil}/L \times (t + T_{spl} - n \times T_{pwm})$$
$$= R_{sns} \times V_{ig} / R_{cil} \times \exp[-R_{cil}/L \times (T_{spl} - n \times T_{pwm}) + \log\{1 - \exp(-R_{cil}/L \times n \times T_{pwm})\}].$$

From this equation, the value of $R_{cil}$ can be obtained.

Microcomputer 75 periodically performs a series of operation described above with a predetermined period, and drives inductive load 8 using the newest computation results in activating inductive load 8 and starting current control.

Further, microcomputer 78 calculates the drive duty by the above equation (9), for the case where constant drive instruction time exceeds current saturation time during current control time. Then microcomputer renews the latest drive duty to the calculated drive duty.

A series of operation described above is periodically performed with a predetermined period, and effects similar to those of the fifth embodiment can be obtained. Also, the current value information is received and processed with arbitrary timing, so that arithmetic processing can be simplified.

SEVENTH EMBODIMENT

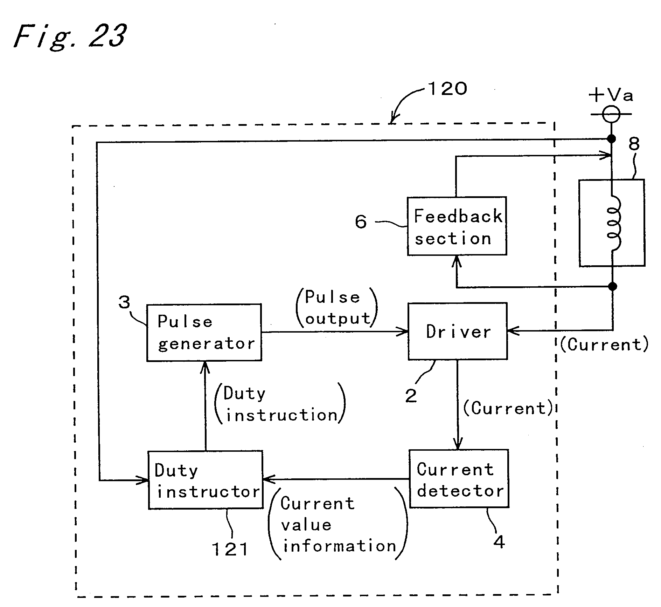

In the current control apparatus of the first embodiment, when a non-drive current is made to flow in the inductive load with a constant non-drive duty, the value of the non-drive current changes as source voltage changes. Therefore, the detection accuracy of the current flowing in the inductive load varies with source voltage. To solve this problem, source voltage may be monitored, and the value of the non-drive duty may be made small if the source voltage value is large. A seventh embodiment in the current control apparatus of pulse-width modulation in accordance with the present invention realizes these modifications. Fig. 23 is a block diagram illustrating the configuration of the seventh embodiment. In Fig. 23, the same components as in Fig. 2 are denoted by the same symbols, and their descriptions are omitted here. Only those points different from Fig. 2 are described in the following.

The current control apparatus of Fig. 23 differs from that of Fig. 2 as follows. Duty instructor 5 of Fig. 2 is connected to the plus terminal +Va of the DC power supply (not illustrated), so that the voltage value of the DC power supply Va is monitored by duty instructor 5. Duty instructor 5 is changed into duty instructor 121, and current control apparatus 1 is changed into 120 with this change.

In Fig. 23, current control apparatus 120 comprises a driver 2, a pulse generator 3, a current detector 4, a feedback section 6, and a duty instructor 121 that receives current information about the detected current value from current detector 4, calculates a duty cycle of the pulse signal output from pulse generator 3 so that the value of the current flowing in inductive load 8 becomes a target current value, and monitors the voltage value of the DC power supply to correct the non-drive duty depending on changes in the voltage. Duty instructor 121 is a duty instruction means.

Duty instructor 121 monitors source voltage during non-control time when current control is not performed, corrects the value of the non-drive duty depending on changes in the voltage value to output into pulse generator 3. Duty instructor 121 then instructs pulse generator 3 to output a pulse signal of the non-drive duty into driver 2. Pulse generator 3 outputs a pulse signal based on the instruction into driver 2 to control the current so that a non-drive current flows in inductive load 8. Duty instructor receives current value information about the non-drive current detected by current detector 4.

Next, duty instructor 121 calculates beforehand, during non-control time when current control is not performed, a drive duty, which is a duty cycle for applying a desired current into inductive load 8 during current control time by driver 2, from the current value information about the current value detected by current detector 4 and the non-drive duty. Duty instructor 101 then gives the calculated drive duty to pulse generator 3 during current control time. Pulse generator 3 outputs a pulse signal of the duty cycle given by duty instructor 121 into driver 2. Driver 2 performs drive control of inductive load 8 based on the pulse signal.

Here, duty instructor 121 monitors source voltage. Then, when giving the non-drive duty to pulse generator 3, duty instructor 121 corrects the non-drive duty, if the monitored source voltage value is smaller than a predetermined value, by making the drive duty larger in proportion to the difference between the monitored value and the predetermined value. If the monitored source voltage is larger than a predetermined value, then duty instructor 121 makes the drive duty smaller in proportion to the difference between the monitored value and the predetermined value.

Further, duty instructor 121 also determines a drive duty during current control time. Duty instructor 121 calculates and renews the drive duty for current control time by the above equation (2), if constant drive instruction time exceeds current saturation time. If constant drive instruction time does not exceed current saturation time, then duty instructor 101 corrects the drive duty using the above equation (21) for changes in source voltage and corrects the drive duty using the above equation (23) for changes in the load resistance of inductive load 8.

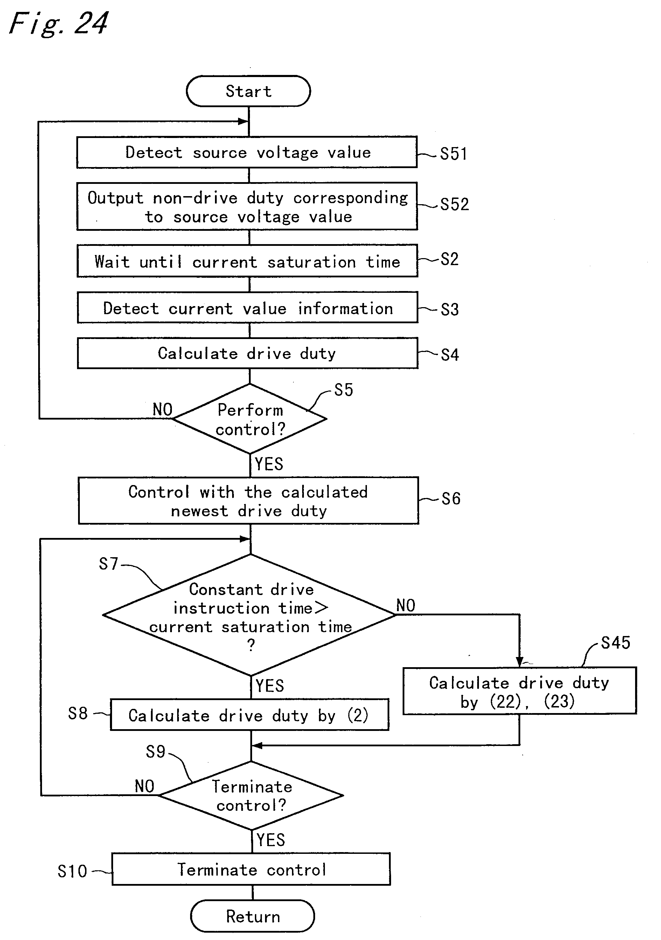

Fig. 23 is a flowchart showing an operation example of the apparatus illustrated in Fig. 23. The operation example of the current control apparatus in the seventh embodiment is described in the following in conjunction with Fig. 24. In Fig. 24, duty instructor 5 is changed into duty instructor 121, and current control apparatus 1 is changed into current control apparatus 120 with this change. The same processing as in Fig. 3 with these changes is denoted by the same symbols, and their descriptions are omitted here, and only points different from Fig. 3 are described in the following.

The flowchart of Fig. 24 differs from the one of Fig. 3 in the following points. The processing of step S1 in Fig. 3 is replaced by the processing of steps S51 and S52. If the judgement result in step S5 is NO, then the operation returns to step S51. Step S21 is added between steps S7 and S9 in Fig. 3. Duty instructor 5 is changed into duty instructor 121, and current control apparatus 1 is changed into current control apparatus 120 with this change. The processing of step S45 in Fig. 24 is the same as step S45 of Fig. 21 with the replacement of duty instructor 101 with duty instructor 121.

First, in step S51 of Fig. 24, duty instructor 121 monitors source voltage to detect the voltage value of the power supply. In step S52, duty instructor 121 gives a corrected non-drive duty corresponding to the detected source voltage to pulse generator 3, which outputs a pulse signal of the drive duty into driver 2. Then, the operation proceeds with the processing from step S2 to step S7 in Fig. 3. If current control is not performed with activated inductive load 8 (NO), then the operation returns to step S51.

Next, in step S7, if constant instruction time does not exceed current saturation time (NO), then the operation proceeds with step S45. In step S45, duty instructor 121 corrects the drive duty for changes in source voltage using the equation (22) and corrects the drive duty for changes in the load resistance value using the equation (23). Then the operation proceeds with step S9 on in Fig. 3.

A series of operation described above is periodically performed with a predetermined period, and effects similar to the first embodiment are obtained. Further, if source voltage varies during the time when a non-drive current is applyed in inductive load 8 with a constant non-drive duty, the above series of operation is periodically performed with a predetermined period. Also, inductive load 8 is activated by the newest computation results in activating inductive load 8 and starting current control. Therefore, the accuracy in the current value of the current flowing in inductive load 8 is improved for a target value.

Further, a drive duty can also be determined from time to time during current control time, as described above. If constant drive instruction time is longer than current saturation time, then the drive duty is calculated and renewed by the same method as during non-control time when current control is not performed. Therefore, the operation for calculating the drive duty in the current control apparatus can be simplified. If constant drive instruction time is not longer than current saturation time, and if changes in the source voltage value of the power supply and the load resistance value of the inductive load occur, the accuracy of the detected current value of the current flowing in the inductive load for the calculated drive duty can be maintained. Therefore, errors in the current flowing in inductive load 8 are eliminated. Consequently, the accuracy in the current value of the current flowing in inductive load 8 is improved for a target value.

EIGHTH EMBODIMENT

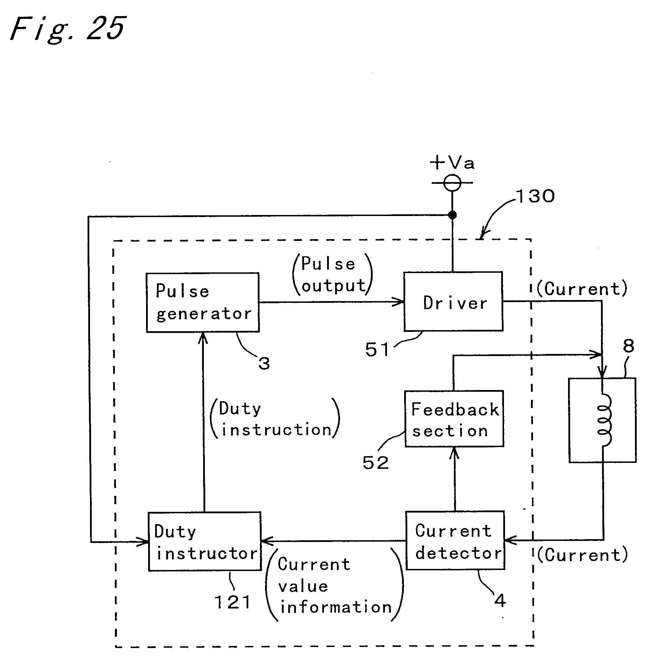

In the current control apparatus of the second embodiment, when a non-drive current is made to flow in the inductive load with a constant non-drive duty, the value of the non-drive current changes as source voltage changes. Therefore, the detection accuracy of the current flowing in the inductive load varies with source voltage. Therefore, as in the seventh embodiment, source voltage may be monitored, and the value of the non-drive duty may be made small if the source voltage value is large, and the value of the non-drive duty may be made large if the source voltage value is small. An eighth embodiment in the current control apparatus of pulse-width modulation in accordance with the present invention realizes these modifications. Fig. 25 is a block diagram illustrating the configuration of the eight embodiment. In Fig. 25, the same components as in Figs. 8 and 23 are denoted by the same symbols, and their descriptions are omitted here. Only those points different from Fig. 8 are described in the following.

The current control apparatus of Fig. 25 differs from that of Fig. 8 as follows. Duty instructor 5 of Fig. 8 is changed into duty instructor 121, and current control apparatus 50 is changed into 130 with this change. Duty instructor 121 is connected to the plus terminal +Va of the DC power supply (not illustrated), so that the voltage value of the DC power supply Va is monitored by duty instructor 121.

In Fig. 25, current control apparatus 130 comprises a driver 51, a pulse generator 3, a current detector 4, a feedback section 52, and a duty instructor 121.

A flowchart showing an operation example of the apparatus illustrated in Fig. 25 is the same as the flowchart shown in Fig. 24 with the modification that driver 2 is changed into driver 51. Therefore, its description is omitted here.

As described above, similar effects as of the seventh embodiment are obtained in the current control apparatus of the eighth embodiment.

NINTH EMBODIMENT

In the current control apparatus of the third embodiment, source voltage may be monitored, by the same reasons as in the seventh and eighth embodiments, and the value of the non-drive duty may be made small if the source voltage value is large, and the value of the non-drive duty may be made large if the source voltage value is small, and the value of the non-drive duty may be made small if the source voltage value is large. A ninth embodiment in the current control apparatus of pulse-width modulation in accordance with the present invention realizes these modifications. A block dia-

EP 0 779 631 A2

gram illustrating the configuration of the ninth embodiment is the same as Fig. 20 with the modifications that duty instructor 101 of Fig. 20 is changed into duty instructor 141, and current control apparatus 100 is changed into current control apparatus 140 with this change. Therefore, only those points different from Fig. 11 are described in the following in conjunction with Fig. 20.

The current control apparatus of the ninth embodiment differs from that of Fig. 11 as follows. Duty instructor 72 of Fig. 11 is connected to the plus terminal +Va of the DC power supply (not illustrated), so that the voltage value of the DC power supply Va is monitored by duty instructor 72. Duty instructor 72 of Fig. 11 is changed into duty instructor 141, and current control apparatus 70 is changed into 140 with this change.

Current control apparatus 140 comprises a driver 2, a pulse generator 71, a feedback section 6, a current detector 4, and a duty instructor 141 that monitors the voltage value of the DC power supply, corrects the non-drive duty depending on the changes in the voltage value to give to pulse generator 71, detects the timing for receiving the current value from current detector 4 based on pulse signal information from pulse generator 71 and the non-drive duty given to pulse generator 71, receives current value information about the detected current value from current detector 4, and calculates, during current control time, a duty cycle of the pulse signal output from pulse generator 71 so that the value of the current flowing in inductive load 8 becomes a target current value. Duty instructor 141 is a duty instructing means.

Duty instructor 141 monitors source voltage, gives a non-drive duty to pulse generator 71 during non-control time, and instructs pulse generator 71 to output a pulse signal of the non-drive duty into driver 2. Here, when giving the non-drive duty to pulse generator 71, duty instructor 141 corrects the non-drive duty, if the monitored source voltage is smaller than a predetermined value, by making the drive duty larger in proportion to the difference between the monitored value and the predetermined value. If the monitored source voltage is larger than a predetermined value, then duty instructor 141 makes the drive duty smaller in proportion to the difference between the monitored value and the predetermined value.

Pulse generator 71 outputs a pulse signal of the given drive duty into driver 2 so that a non-drive current is made to flow thereby in inductive load 8. Pulse generator 71 also measures, using a pulse timer, pulse signal information about the pulse signal output to driver 2, that is, the elapsed time from the time when the pulse signal of the non-drive duty output from pulse generator 71 into driver 2 is detected to become at "H" level, to output the measured time into duty instructor 141.

Next, duty instructor 141 detects the timing for receiving the current value information about the detected current value from current detector 4, that is, the period when a current flows in inductive load 8 by driver 2. Duty instructor 141 then receives the current value information from current detector 4, during the period, at the saturation time when changes in the average value of the current flowing in inductive load 8 per unit time become small within a predetermined value. Duty instructor 141 then calculates a drive duty, which is a duty cycle for applying a desired current into inductive load 8 during current control time by driver 2, from the current value information and the non-drive duty. Duty instructor 141 then gives the calculated drive duty to pulse generator 71 during current control time. Pulse generator 71 outputs a pulse signal of the duty cycle given by duty instructor 141 into driver 2. Driver 2 performs drive control of inductive load 8 based on the pulse signal.

Further, duty instructor 141 also determines a drive duty during current control time. If constant drive instruction time exceeds current saturation time, then duty instructor 141 calculates and renews the drive duty for current control time by the above equation (7). If constant drive instruction time does not exceed current saturation time, then duty instructor 141 corrects the drive duty for changes in source voltage using the above equation (22) and corrects the drive duty for changes in the load resistance value of inductive load 8 using the above equation (23).

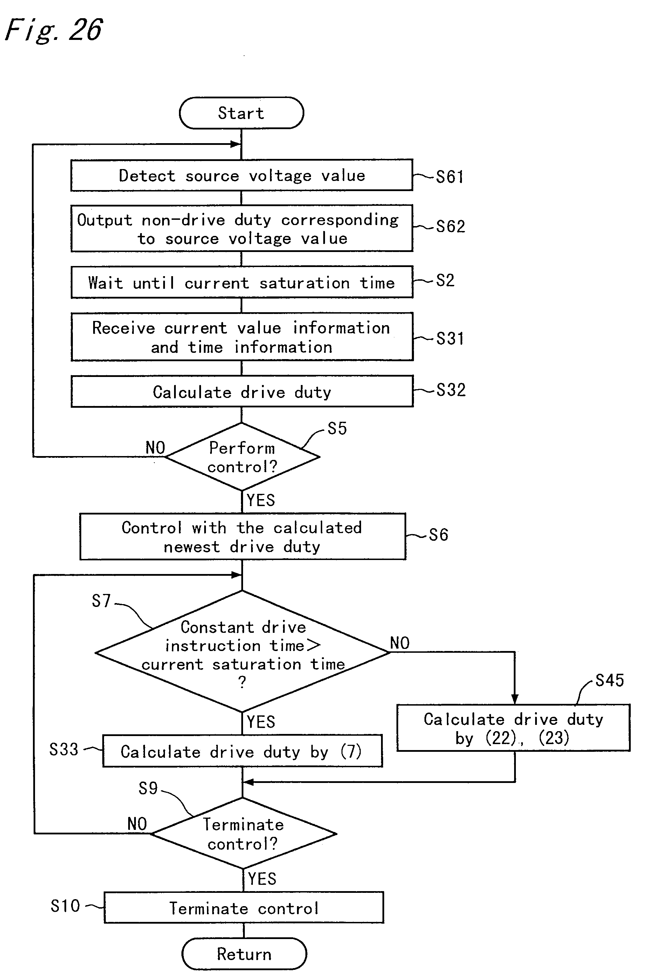

Fig. 26 is a flowchart showing an operation example of current control apparatus 140. The operation example of the current control apparatus in the ninth embodiment of the present invention is described in the following in conjunction with Fig. 26. In the change from the third embodiment to the ninth embodiment, duty instructor 72 is changed into duty instructor 141, and current control apparatus 70 is changed into current control apparatus 140 with this change. The same processing as in Fig. 12 with these changes is denoted by the same symbols, and its description is omitted here, and only those points different from Fig. 12 are described in the following.

The flowchart of Fig. 26 differs from the one of Fig. 12 in the following points. The processing of step S1 in Fig. 12 is replaced by the processing of steps S61 and S62. If the judgement result of S5 is NO, then the operation returns to step S61. The processing of step S45 in Fig. 21 is added between steps S7 and S9. Duty instructor 72 is changed into duty instructor 141, and current control apparatus 70 is changed into current control apparatus 140 with this change. The processing of step S45 in Fig. 26 is the step S45 of Fig. 21 with the modification that duty instructor 101 is changed into duty instructor 141.

In Fig. 26, first in step S61, duty instructor 141 monitors source voltage to measure the voltage value. In step S62, duty instructor 141 gives to pulse generator 71 a non-drive duty that is corrected depending on the detected voltage value. Pulse generator 71 outputs a pulse signal of the non-drive duty into driver 2. Then the operation proceeds with steps S2 to S7 in Fig. 12. If the judgment result in step S5 is NO, that is, if current control is not performed with activated inductive load 8, then the operation returns to step S61.

In step S7, if constant drive instruction time does not exceed current saturation time (NO), then duty instructor 141 corrects the drive duty for changes in source voltage using the above equation (22) and corrects the drive duty for changes in the load resistance value of inductive load 8 using the above equation (23). Then the operation proceeds with step S9 on in Fig. 12.

A series of operation described above is periodically performed with a predetermined period, and effects similar to those of the third embodiment are obtained. Further, if source voltage varies during the time when a non-drive current is applyed in inductive load 8 with a constant non-drive duty, the above series of operation is periodically performed with a predetermined period. Also, inductive load 8 is activated by the newest computation results in activating inductive load 8 and starting current control. Therefore, the accuracy in the current value of the current flowing in inductive load 8 is improved for a target value.

Further, a drive duty can also be determined from time to time during current control time, as described above. If constant drive instruction time is longer than current saturation time, then the drive duty is calculated and renewed by the same method as during non-control time when current control is not performed. Therefore, the operation for calculating the drive duty in the current control apparatus can be simplified. If constant drive instruction time is not longer than current saturation time, and if changes in the source voltage value of the power supply and the load resistance value of the inductive load occur, the accuracy of the detected current value of the current flowing in the inductive load for the calculated drive duty can be maintained. Therefore, errors in the current flowing in inductive load 8 are eliminated. Consequently, the accuracy in the current value of the current flowing in inductive load 8 is improved for a target value.

TENTH EMBODIMENT

In the current control apparatus of the fourth embodiment, source voltage may be monitored, from the same reasons as in the seventh to ninth embodiments, and the value of the non-drive duty may be made large if the source voltage value is small, and the value of the non-drive duty may be made small if the source voltage value is large. A tenth embodiment in the current control apparatus of pulse-width modulation in accordance with the present invention realizes these modifications. A block diagram illustrating the configuration of the tenth embodiment is the same as Fig. 22 with the modifications that duty instructor 101 of Fig. 22 is changed into duty instructor 141, and current control apparatus 110 is changed into current control apparatus 150 with this change. Therefore, only those points different from Fig. 17 are described in the following in conjunction with Fig. 22.

The current control apparatus of the tenth embodiment differs from that of Fig. 17 as follows. Duty instructor 72 of Fig. 17 is changed into duty instructor 141 of the ninth embodiment, and current control apparatus 90 is changed into 150 with this change. Duty instructor 141 is connected to the plus terminal +Va of the DC power supply (not illustrated), so that the voltage value of the DC power supply Va is monitored by duty instructor 141.

Current control apparatus 150 comprises a driver 51, a pulse generator 71, a current detector 4, a feedback section 52, and a duty instructor 141.

A flowchart showing an operation example of current control apparatus 150 is the same as the flowchart shown in Fig. 26 with the modification that driver 2 is changed into driver 51. Therefore, its description is omitted here.

As described above, similar effects as of the ninth embodiment are obtained in the current control apparatus of the tenth embodiment.

ELEVENTH EMBODIMENT.

In Fig. 13 that shows a circuit example of the current control apparatus in the third embodiment, the detection time $T_{spl}$ and the detected voltage value $V_{spl}$ are sampled a plurality of times and their averages are used to calculate a drive duty. However, if source voltage changes during the sampling, and if the drive duty is calculated using the equations (11) and (12), then errors in the current flowing in inductive load 8 occur. Therefore, the source voltage value may be monitored during the sampling, and only the sampling values having fluctuations within a predetermined range may be used to obtain the average values.

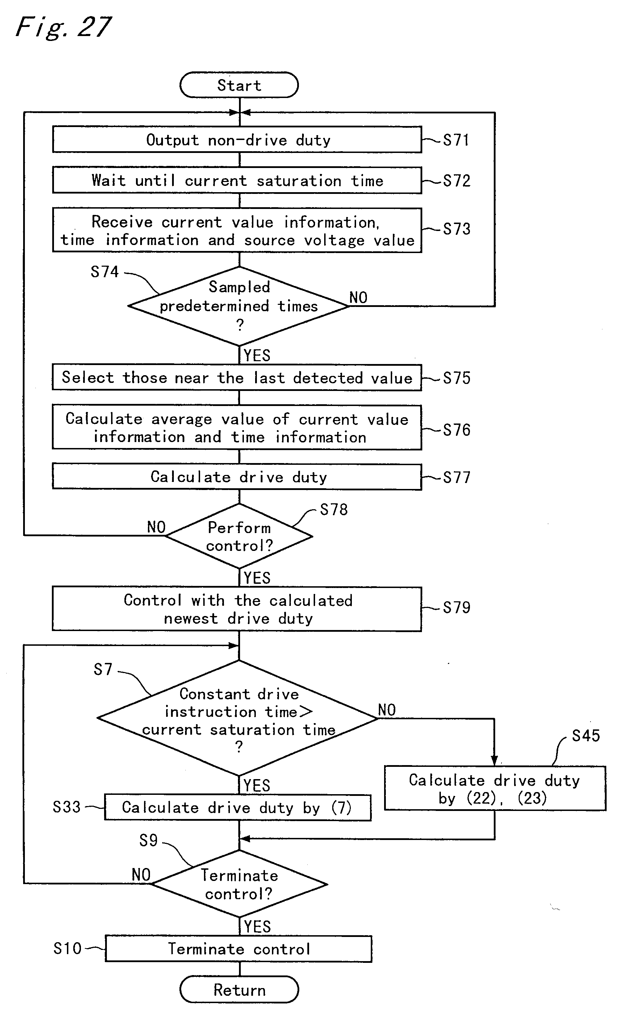

A block diagram illustrating the configuration of the tenth embodiment is the same as Fig. 22, so that it is omitted here. An operation example of the current control apparatus in the eleventh embodiment is described in conjunction with the flowchart of Fig. 27. The same processing as in Fig. 21 is denoted by the same symbols, and their descriptions are omitted here.

In Fig. 27, first in step S71, duty instructor 141 gives a preset non-drive duty to pulse generator 71. Pulse generator 71 outputs a pulse signal of the non-drive duty into driver 2. Next in step S72, driver 2 performs drive control of inductive load 8 based on the pulse signal input from pulse generator 71. Duty instructor 141 waits for a predetermined time until changes in the average current value of the current flowing in inductive load 8 become small within a predetermined value to be in the saturation state.

Next in step S73, after the predetermined time, duty instructor 141 monitors source voltage to detect the voltage value. Duty instructor 141 also measures, using a pulse timer, pulse signal information about the pulse signal input from pulse generator 71, that is, the elapsed time from the time when the pulse signal of the non-drive duty output into driver 51 is detected to become at "H" level. Duty instructor 141 identifies, from the measured time information and the non-drive duty, a period when a current flows in inductive loads 8 by driver 2 and a period when a current flows by the counter electromotive force induced in inductive load 8. Duty instructor 141 then receives, during a period when a current flows in inductive loads 8 by driver 2, the detected current value from current detector 4 as current value information.

Next, in step S74, duty instructor tests whether the current value information and the source voltage value have been sampled predetermined times. If the sampling has not been made the predetermined times (NO), then the operation returns to step S71. If the sampling has been made the predetermined times (YES), then the operation proceeds with step S75. In step S75, duty instructor 141 selects, from the current value information sampled the predetermined times, those sampled values that are sampled at source voltage values within a predetermined rage from the voltage value at the last sampling. Next in step S76, duty instructor 141 calculates the average values of the selected current value information and the time information. Then the operation proceeds with step S77.

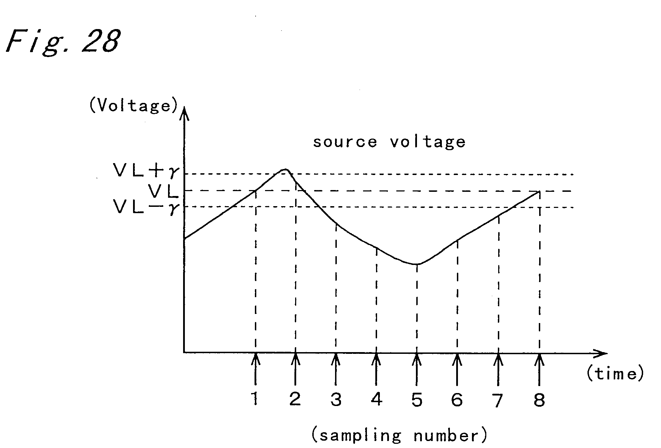

Fig. 28 is graph showing examples of timing in the source voltage and the sampling during a period when the sampling number is 8. The method of selecting and averaging sampled values for changes in source voltage is described in conjunction with Fig. 28.

In Fig. 28, $VL$ denotes the source voltage value at the last sampling time that is the eighth time. In this example, the voltage values at the first, second, and eighth sampling are within a predetermined range $VL + \gamma$, where $\gamma$ is a positive predetermined value. Therefore, the current value information and the time information at the first, second, and eighth are selected, and their averages are calculated.

Returning to Fig. 27, in step S77, duty instructor 141 calculates a drive duty for control time when inductive load 8 is activated and current control is performed, using the above equation (9) or (10), from the non-drive duty, the average value of the current value information about the detected current values, and the average value of the detection time when the current value information was detected. Then in step S78, duty instructor 141 judges whether current control should be performed with activated inductive load 8 or not. If current control should be performed with activated inductive load 8 (YES), then the operation proceeds with step S79.

In step S79, duty instructor 141 obtains a duty cycle corresponding to a desired current to be applyed in inductive load 8 from the calculated newest drive duty and the current value information about the current value detected by current detector 4, and gives the duty cycle to pulse generator 71. Pulse generator 71 outputs a pulse signal of the duty cycle given by duty instructor 141 into driver 2, which performs current control. Then the processing from step S7 on in Fig. 21 is performed. If in step S7, current control should not be performed with activated inductive load 8 (NO), then the operation returns to S71.

As described above, in the current control apparatus of the present eleventh embodiment, if source voltage changes during the sampling of the detected voltage value $V_{spl}$ and detection time $T_{spl}$, then errors in the current flowing in inductive load 8 do not occur, even if the drive duty is calculated using the equations (11) and (12). The above series of operation is periodically performed with a predetermined period, and inductive load 8 is activated by the newest computation results in activating inductive load 8 and starting current control.

Further, a drive duty can also be determined from time to time during current control time, as described above. If constant drive instruction time is longer than current saturation time, then the drive duty is calculated and renewed by the same method as during non-control time when current control is not performed. Therefore, the operation for calculating the drive duty in the current control apparatus can be simplified. If constant drive instruction time is not longer than current saturation time, and if changes in the source voltage value of the power supply and the load resistance value of the inductive load occur, then the accuracy of the detected current value of the current flowing in the inductive load for the calculated drive duty can be maintained. Therefore, errors in the current flowing in inductive load 8 are eliminated. Consequently, the accuracy in the current value of the current flowing in inductive load 8 is improved for a target value.

Further, in Fig. 18, which illustrates a circuit example of the current control apparatus in the above fourth embodiment, if the detection time $T_{spl}$ and the detected voltage value $V_{spl}$ are sampled a plurality of times, and if the averages of these values are used for calculating a drive duty from the equation (16), then the modified case is similar to the eleventh embodiment, so that its description is omitted here.

Further, in each of the above embodiments, the driver controls the current provided from the +Va terminal of the DC power supply Va so that a current flows in the inductive load if the level of the signal input from the pulse generator is "H," and a current does not flow in the inductive load if the level of the signal input from the pulse generator is "L." However, a current provided from the +Va terminal of the DC power supply may be made to flow in the inductive load if the level of the signal input from the pulse generator is "L," and a current may be made not to flow in the inductive load if the level of the signal input from the pulse generator is "H." In this way, although the present invention has been fully described in connection with the preferred embodiments thereof and the accompanying drawings, it is to be noted that various changes and modifications are apparent to those skilled in the art. Such changes and modifications are to be understood as included within the scope of the present invention as defined by the appended claims unless they depart therefrom.

**Claims**

1. A current control apparatus that performs current control for an inductive load with pulse-width modulation comprising:

   a pulse generating means that generates and outputs a pulse signal,
   a duty instructing means that gives a duty cycle of said pulse signal to said pulse generating means,
   a drive means that drives an inductive load with said pulse signal output from said pulse generating means,
   a feedback means that feeds back the current generated by the counter electromotive force that occurs in said inductive load, and
   a current detecting means that detects current value information about the value of the current flowing in said inductive load,

   wherein, during the non-drive time of said inductive load, said duty instructing means gives to said pulse generating means a non-drive duty, which is a duty cycle for applying a current by which said inductive load does not operate actively, and calculates a drive duty, which is a duty cycle for applying a desired current to said inductive load during the drive time of said inductive load, based on said current value information from said current detecting means and said non-drive duty.

2. The current control apparatus of pulse-width modulation defined in claim 1 wherein, during non-control time when current control is not performed, said duty instructing means gives said non-drive duty to said pulse generating means and calculates said drive duty for current control time based on said non-drive duty and said current value information from said current detecting means about the saturation current flowing in said inductive load by the pulse signal of said non-drive duty.

3. The current control apparatus of pulse-width modulation defined in one of claims 1 and 2 wherein said current detecting means comprises a circuit that converts current into voltage and a low-pass filter circuit.

4. A current control apparatus of pulse-width modulation defined in one of claims 1 and 2 wherein said duty instructing means gives said drive-duty to said pulse generating means during current control time and, if the period during which the duty cycle is constant is longer than the period taken by the current flowing in said inductive load to be in the saturation state, further calculates and renews a drive duty based on said drive duty and the current information value about the saturation current flowing in said inductive load by the pulse signal of said drive duty.

5. A current control apparatus that performs current control for an inductive load with pulse-width modulation comprising:

   a pulse generating means that generates and outputs a pulse signal and outputs signal information about said pulse signal,
   a duty instructing means that gives a duty cycle of said pulse signal to said pulse generating means,
   a drive means that drives an inductive load with the pulse signal output from said pulse generating means,
   a feedback means that feeds back the current generated by the counter electromotive force that occurs in said inductive load, and
   a current detecting means that detects current value information about the value of the current flowing in said inductive load,

   wherein during the non-drive time of said inductive load, said duty instructing means gives to said pulse generating means a non-drive duty, which is a duty cycle for applying a current by which said inductive load does not operate actively, and calculates a drive duty, which is a duty cycle for applying a desired current into said inductive load during the drive time of said inductive load, based on the signal information from said pulse generating means about the output pulse signal of said non-drive duty, said current value information from said current detecting means, and said non-drive duty.

6. The current control apparatus of pulse-width modulation defined in claim 5 wherein during non-control time when current control is not performed, said duty instructing means gives to said pulse generating means a non-drive duty, which is a duty cycle for applying a current by which said inductive load does not operate actively, and calculates said drive duty for current control time from said signal information for identifying, during one period of the pulse signal output from said pulse generating means, a period when a current flows in said inductive load by said drive means and a period when a current flows in said inductive load by the counter electromotive force induced in said inductive load, said current value information from said current detecting means at the saturation time when changes in the average current value of the current flowing in said inductive load by the pulse signal of said non-drive duty become small within a predetermined value, and said non-drive duty.

7. The current control apparatus of pulse-width modulation defined in one of claims 5 and 6 wherein said feedback means is installed so that the feedback current by said feedback means is not detected by said current detecting means; said signal information is time information that expresses the elapsed time from the time when the level of the pulse signal of said non-drive duty changes so that a current starts to flow in said inductive load; and said duty instructing means detects, from said time information and said non-drive duty, a period when a current flows in said inductive load by said drive means, receives said current value information at said saturation time during said period from said current detecting means, calculates the average value of the current flowing in said inductive load during said period, from said current value information, said time information, and said non-drive duty, and calculates said drive duty for current control time from the average current value and said non-drive duty.

8. The current control apparatus of pulse-width modulation defined in one of claims 5 and 6 wherein said feedback means is installed so that the feedback current by said feedback means is not detected by said current detecting means; said signal information is time information that expresses the elapsed time from the time when the level of the pulse signal of said non-drive duty changes so that a current starts to flow in said inductive load; and said duty instructing means detects, from said time information and said non-drive duty, a period when a current flows in said inductive load by said drive means, receives a plurality of times said current value information at said saturation time during said period from said current detecting means, receives, from said pulse generating means, said time information corresponding to said current value information, calculates the average value of said current value information and the average value of said time information, calculates the average value of the current flowing in said inductive load during said period, from said average value of said current value information, said average value of said time information, and said non-drive duty, and calculates said drive duty for current control time from the average current value and said non-drive duty.

9. The current control apparatus of pulse-width modulation defined in claim 8 wherein said duty instructing means monitors the source voltage value and calculates said average current value by giving weightings to the received current value information, if said source voltage value fluctuates during the time when said current value information is received from said current detecting means.

10. The current control apparatus of pulse-width modulation defined in one of claims 7 and 8 wherein said duty instructing means detects, from said time information, during one period of said pulse signal, the elapsed time from the time when a current starts to flow in said inductive load by said drive means to the time when said current value information is received, calculates the ratio of said elapsed time to the period when a current flows in said inductive load by said drive means during one period of said pulse signal, calculated from said non-drive duty, and calculates said average current value by correcting the received current value information based on said ratio.

11. The current control apparatus of pulse-width modulation defined in one of claims 5 and 6 wherein said feedback means is installed so that the feedback current by said feedback means is also detected by said current detecting means; said signal information is time information that expresses the elapsed time from the time when the level of the pulse signal of said non-drive duty changes so that a current starts to flow in said inductive load; and said duty instructing means receives said current value information at said saturation time from said current detecting means, receives said time information from said pulse generating means, identifies the period to which the received current value information belongs either as a period when a current flows in said inductive load by said drive means or as a period when a current flows in said inductive load by the counter electromotive force induced in said inductive load, calculates the average value of the current flowing in said inductive load over the identified period, and calculates a drive duty for current control time from said average current value and said non-drive duty.

12. The current control apparatus of pulse-width modulation defined in one of claims 5 and 6 wherein said feedback means is installed so that the feedback current by said feedback means is also detected by said current detecting means; said signal information is time information that expresses the elapsed time from the time when the level of the pulse signal of said non-drive duty changes so that a current starts to flow in said inductive load; and said duty instructing means receives said current value information a plurality of times after said saturation time from said current detecting means with arbitrary timing, receives, from said pulse generating means, said time information corresponding to said current value information, classifies the received current value information, based on said time information and said non-drive duty, into the information during a period when a current flows in said inductive load by said driving means and the information during a period when a current flows in said inductive load by the counter electromotive force induced in said inductive load, calculates the average value of the received current value information and the average value of the time information for each period, calculates therefrom and from said non-drive duty the average value of the current flowing in said inductive load for each period, and calculates said drive duty for current control time, from the current value obtained by averaging the calculated average current values in both periods and from said non-drive duty.

13. The current control apparatus of pulse-width modulation defined in claim 12 wherein said duty instructing means monitors the source voltage value and calculates said average current value by giving weightings to the received current value information, if said source voltage value fluctuates during the time when said current value information is received from said current detecting means.

14. The current control apparatus of pulse-width modulation defined in claim 13 wherein said duty instructing means detects, from said time information, during one period of said pulse signal, the elapsed time from the beginning of the corresponding identified period to the time when said current value information is received, calculates the ratio of said elapsed time to the corresponding identified period, and calculates said average current value by correcting the received current value information based on the ratio.

15. The current control apparatus of pulse-width modulation defined in claim 5 wherein said duty instructing means monitors the source voltage value and corrects and gives said drive duty in proportion to the difference between the monitored source voltage value and a predetermined value.

16. The current control apparatus of pulse-width modulation defined in claim 5 wherein said duty instructing means monitors source voltage value, and during non-control time when current control is not performed, gives to said pulse generating means, the duty cycle of 1 for a time so that said inductive load does not operate, and calculates said drive duty for current control time from said signal information for identifying, in the pulse signal output from said pulse generating means, a period when a current flows in said inductive load by said drive means and a period when a current flows in said inductive load by the counter electromotive force induced in said inductive load, said current value information from said current detecting means, and the source voltage value at the time when said current value information was detected.

17. The current control apparatus of pulse-width modulation defined in claim 16 wherein said signal information is time information that expresses the elapsed time from the time when said pulse generating means outputs a pulse signal of the duty of 1 into said drive means, so that the level of said pulse signal changes and a current starts to flow in said inductive load; and said duty instructing means receives current value information from said current detecting means, receives said time information from said pulse generating means, identifies the period to which the received current value information belongs either as a period when a current flows in said inductive load by said drive means or as a period when a current flows in said inductive load by the counter electromotive force induced in said inductive load, based on said time information and the time when the duty of 1 was given, calculates the load resistance value of said inductive load during the identified period from said time information, the received current value information, and the source voltage value at the time of receiving said current value information, and calculates said drive duty for current control time.

18. The current control apparatus of pulse-width modulation defined in claim 5 wherein said current detecting means is a circuit that converts current into voltage.

19. The current control apparatus of pulse-width modulation defined in claim 5 wherein during current control time, said duty instructing means gives said drive-duty to said pulse generating means, if the period during which the duty cycle is constant is longer than the period taken by the current flowing in said inductive load to be in the saturation state, and further calculates and renews a drive duty from the signal information from said pulse generating means in a pulse signal of said drive duty, current value information about the saturation current flowing in said inductive load by the pulse signal of said drive duty, and said drive duty.

20. The current control apparatus of pulse-width modulation defined in claim 19 wherein during current control time, said duty instructing means monitors the source voltage value and corrects and gives the calculated newest drive duty in proportion to the difference between the monitored source voltage value and a predetermined value.

21. The current control apparatus of pulse-width modulation defined in claim 20 wherein said duty instructing means corrects and gives the calculated newest drive duty depending on the rate of change in the load resistance value of said inductive load during current control time.

**22.** The current control apparatus of pulse-width modulation defined in claim 21 wherein said duty instructing means monitors the source voltage value and calculates the rate of change in said load resistance value from currents having flowed in said inductive load by the drive duty calculated before correcting the drive duty, the time periods when currents flowed, and the average value of the source voltage values monitored at these time periods.

**23.** The current control apparatus of pulse-width modulation defined in claim 5 wherein said inductive load is a three-position switching electromagnetic valve that changes its position corresponding to the values of applied current and is used for switching pressurization, holding, and decompression of brake fluid in an ABS control apparatus of a vehicle.

**24.** The current control apparatus of pulse-width modulation defined in claim 5 wherein said pulse generating means and duty instructing means are consisting of a microcomputer having an A/D converter.

**25.** A current control method that perform current control for an inductive load with pulse-width modulation, being comprised of steps: in non-drive time of said inductive load,

generating a pulse signal of a non-drive duty that is a duty cycle for applying a current by which said inductive load does not operate actively;
applying a current by said pulse signal to said inductive load;
feeding back the current caused by the counter electromotive force induced in said inductive load;
detecting current value information about the current flowing in said inductive load; and
calculating a drive duty that is a duty cycle for applying a desired current into said inductive load during the drive time of said inductive load, from said non-drive duty and said current value information.

**26.** The current control method defined in claim 25 wherein during current control time, a drive duty is calculated and, renewed based on said drive duty and the current information value about the saturation current flowing in said inductive load by the pulse signal of said drive duty, if the period during which the duty cycle is constant is longer than the period taken by the current flowing in said inductive load to be in the saturation state.

**27.** A current control method that perform current control for an inductive load with pulse-width modulation, being comprised of steps: in non-control time when current control is not performed,

generating a pulse signal of a non-drive duty that is a duty cycle for applying a current by which said inductive load does not operate into said inductive load;
applying a current by said pulse signal into said inductive load;
feeding back the current caused by the counter electromotive force induced in said inductive load;
detecting current value information about the current flowing in said inductive load; and
calculating a drive duty, which is a duty cycle for applying a desired current into said inductive load during current control time, from said non-drive duty, signal information about the pulse signal of said non-drive duty, and said current value information.

**28.** The current control method defined in claim 27 wherein the feedback current is not detected; said signal information is time information that expresses the elapsed time from the time when the level of the pulse signal of said non-drive duty changes so that a current starts to flow in said inductive load; and said current control method detects, from said time information and said non-drive duty, a period when a current from a current source flows in said inductive load, receives said current value information during said period and at the saturation time when changes in the average current value of the current flowing in said inductive load by the pulse signal of said non-drive duty become small within a predetermined value, calculates the average value of the current flowing in said inductive load during said period, from said current value information, said time information, and said non-drive duty, and calculates said drive duty for current control time from the average current value and said non-drive duty.

**29.** The current control method defined in claim 27 wherein the feedback current is not detected; said signal information is time information that expresses the elapsed time from the time when the level of the pulse signal of said non-drive duty changes so that a current starts to flow in said inductive load; and said current control method detects, from said time information and said non-drive duty, a period when a current from a current source flows in said inductive load, receives a plurality of times said current value information, during said period, after the saturation time when changes in the average current value of the current flowing in said inductive load by the pulse signal of said non-drive duty become small within a predetermined value, receives said time information corresponding to said current value information, calculates the average value of said current value information and the average value of said time information, calculates the average value of the current flowing in said inductive load during said period, from said average value of said current value information, said average value of said time information, and said non-drive duty, and calculates said drive duty for current control time from the average current value and said non-drive duty.

30. The current control method defined in claim 29 wherein said current control method monitors the source voltage value and calculates said average current value by giving weightings to the received current information, if said source voltage value fluctuates during the time when said current value information is received.

31. The current control method defined in claim 28 wherein said current control method detects, from said time information, during one period of said pulse signal, the elapsed time from the time when a current from a current source starts to flow in said inductive load to the time when said current value information is received, calculates the ratio of said elapsed time to the period when a current from said current source flows in said inductive load during one period of said pulse signal, calculated from said non-drive duty, and calculates said average current value by correcting the received current value information based on said ratio.

32. The current control method defined in claim 27 wherein the feedback current is also detected as said current value information; said signal information is time information that expresses the elapsed time from the time when the level of the pulse signal of said non-drive duty changes so that a current from said current source starts to flow in said inductive load; and said current control method receives said current value information at the saturation time when changes in the average current value of the current flowing in said inductive load by the pulse signal of said non-drive duty become small within a predetermined value, receives said time information, identifies from said time information and non-drive duty, the period to which the received current value information belongs either as a period when a current from said current source flows in said inductive load or as a period when a current flows in said inductive load by the counter electromotive force induced in said inductive load, calculates the average value of the current flowing in said inductive load over the identified period, from said time information, said non-drive duty, and the received current value information, and calculates a drive duty for current control time from said average current value and said non-drive duty.

33. The current control method defined in claim 27 wherein the feedback current is also detected as said current value information; said signal information is time information that expresses the elapsed time from the time when the level of the pulse signal of said non-drive duty changes so that a current from said current source starts to flow in said inductive load; and said current control method receives, after the saturation time when changes in the average current value of the current flowing in said inductive load by the pulse signal of said non-drive duty become small within a predetermined value, said current value information a plurality of times from said current detecting means with arbitrary timing, receives said time information corresponding to said current value information, classifies the received current value information, based on said time information and said non-drive duty, into the information during a period when a current from said current source flows in said inductive load and the information during a period when a current flows in said inductive load by the counter electromotive force induced in said inductive load, calculates the average value of the received current value information and the average value of the time information for each period, calculates therefrom and from said non-drive duty the average value of the current flowing in said inductive load for each period, and calculates said drive duty for current control time, from the current value obtained by averaging the calculated average current values in both periods and from said non-drive duty.

34. The current control method defined in claim 33 wherein said current control method monitors the source voltage value and calculates said average current value by giving weightings to the received current information, if said source voltage value fluctuates during the time when said current value information is received.

35. The current control method defined in claim 27 wherein said current control method detects, from said time information, during one period of said pulse signal, the elapsed time from the beginning of the corresponding identified period to the time when said current value information is received, calculates the ratio of said elapsed time to the corresponding identified period, and calculates said average current value by correcting the received current value information based on said ratio.

36. The current control method defined in claim 27 wherein said current control method monitors the source voltage value and corrects and gives said drive duty in proportion to the difference between the monitored source voltage value and a predetermined value.

37. A current control methods that perform current control for an inductive load with pulse-width modulation, being comprised of steps: during non-control time when current control is not performed,

monitoring the source voltage value;
applying a current into said inductive load, for a time so that said inductive load does not operate, by a pulse signal of duty of 1;
feeding back the current caused by the counter electromotive force induced in said inductive load;
receiving current value information about the current flowing in said inductive load;
receiving signal information for identifying a period when a current from a current source flows in said inductive load by said drive means and a period when a current flows in said inductive load by the counter electromotive force induced in said inductive load, and
calculating from said signal information, said current value information, and the source voltage value at the time when said current value information was received, a drive duty that is a duty cycle for applying a desired current into said inductive load during current control time.

38. The current control method defined in claim 37 wherein said signal information is time information that expresses the elapsed time from the time when the level of said pulse signal of the duty 1 changes so that a current from said current source starts to flow in said inductive load; and said current control method receives said current value information, receives said time information, identifies, from said time information and the time during which a current from said current source flows in said inductive load by the pulse signal of the duty of 1, the period to which the received current value information belongs either as a period when a current from said current source flows in said inductive load or as a period when a current flows in said inductive load by the counter electromotive force induced in said inductive load, calculates the load resistance value of said inductive load during the identified period, from said time information, the received current value information, and the source voltage value at the time said received current value information was received, and calculates said drive duty for current control time.

39. The current control method defined in claim 37 wherein during current control time, if the period during which the duty cycle is constant is longer than the period taken by the current flowing in said inductive load to be in the saturation state, said current control method further calculates and renews a drive duty from said signal information in said pulse signal of said drive duty and the current information value about the saturation current flowing in said inductive load by the pulse signal of said drive duty.

40. The current control method defined in claim 37 wherein during current control time, said current control method monitors the source voltage value and corrects said drive duty in proportion to the difference between the monitored source voltage value and a predetermined value.

41. The current control method defined in claim 37 wherein during current control time, said current control method corrects the calculated newest drive duty depending on the rate of change in the load resistance value of said inductive load.

42. The current control method defined in claim 41 wherein said current control method monitors the source voltage value and calculates the rate of change in said load resistance value from currents having flowed in said inductive load by the drive duty calculated before correcting the drive duty, the time periods when currents flowed, and the average value of the source voltage values monitored at these time periods.

43. The current control method defined in claim 37 wherein said inductive load is a three-position switching electromagnetic valve for switching pressurization, holding, and decompression of brake fluid in an ABS control apparatus of a vehicle.

*Fig. 1*

$$\left(\begin{array}{c}\text{Load}\\\text{current}\\\text{value}\end{array}\right)$$

$$\left(\begin{array}{c}\text{Rise of load temperature}\\\text{or}\\\text{Fall of load temperature}\end{array}\right)$$

O     (Duty)     1

*Fig. 2*

1

+Va

8

6 — Feedback section

3

Pulse generator

$\left(\begin{array}{c}\text{Pulse}\\\text{output}\end{array}\right)$

Driver

2

(Current)

(Current)

$\left(\begin{array}{c}\text{Duty}\\\text{instruction}\end{array}\right)$

Duty instructor

5

$\left(\begin{array}{c}\text{Current}\\\text{value}\\\text{information}\end{array}\right)$

Current detector

4

## Fig. 3

```
                    ┌─────────────┐
                    │    Start    │
                    └──────┬──────┘
                           │
         ┌─────────────────┤
         │         ┌───────▼────────────────┐
         │         │  Output non-drive duty │──S1
         │         └───────┬────────────────┘
         │         ┌───────▼────────────────┐
         │         │   Wait until current   │──S2
         │         │    saturation time     │
         │         └───────┬────────────────┘
         │         ┌───────▼────────────────┐
         │         │  Detect current value  │──S3
         │         │      information       │
         │         └───────┬────────────────┘
         │         ┌───────▼────────────────┐
         │         │  Calculate drive duty  │──S4
         │         └───────┬────────────────┘
         │                 │            S5
         │      NO     ┌───▼────┐
         └─────────────│ Perform │
                       │ control?│
                       └───┬────┘
                           │ YES
                   ┌───────▼────────────────┐
                   │ Control with the calculated │──S6
                   │    newest drive duty    │
                   └───────┬────────────────┘
         ┌─────────────────┤
         │     S7      ┌───▼─────────────┐
         │             │  Constant drive │
         │             │ instruction time>│   NO
         │             │ current saturation time├────┐
         │             │        ?        │         │
         │             └───────┬─────────┘         │
         │    S8               │ YES               │
         │         ┌───────────▼────────────┐      │
         │         │ Calculated drive duty by (2)│ │
         │         └───────────┬────────────┘      │
         │     S9              │◄──────────────────┘
         │    NO         ┌─────▼──────┐
         └───────────────│  Terminate │
                         │  control?  │
                         └─────┬──────┘
                               │ YES
                   ┌───────────▼────────────┐
                   │    Terminate control   │──S10
                   └───────────┬────────────┘
                         ┌─────▼──────┐
                         │   Return   │
                         └────────────┘
```

*Fig. 4*

*Fig. 9*

## Fig. 5

Pulse output — High / Low

Load current value (A) — Inop

Monitored voltage value (V) Inop×Dnop×Rsns

## Fig. 14

Pulse output — High / Low

Load current value (A) — Inop

Inop×Rsns
Monitored voltage value (V) — 0

Fig. 6

EP 0 779 631 A2

*Fig. 7*

Start

Output non-drive duty —S15

Wait until current saturation time —S16

Detect current value information —S17

Calculate drive duty —S18

Detect wheel state —S19

S20 — Perform ABS control? — NO

YES

Perform ABS control with calculated newest drive duty —S21

S22 — Constant drive instruction time > current saturation time ? — NO

YES

S23 — Calculate drive duty by (2)

S24 — Terminate ABS control? — NO

YES

S25 — Terminate ABS control

Return

*Fig. 8*

*Fig. 10*

Pulse output — High / Low

Load current value (A) — Inop

Inop×Rsns
Monitored voltage value (V)

*Fig. 19*

Pulse output — High / Low

Load current value (A) — Inop

Inop×Rsns
Monitored voltage value (V)

*Fig. 11*

## Fig. 12

```
                    ( Start )
                        │
         ┌──────────────┤
         │    ┌─────────────────────────────┐
         │    │   Output non-drive duty     │──S1
         │    └─────────────────────────────┘
         │    ┌─────────────────────────────┐
         │    │ Wait until current saturation time │──S2
         │    └─────────────────────────────┘
         │    ┌─────────────────────────────┐
         │    │ Receive current value information │
         │    │      and time information   │──S31
         │    └─────────────────────────────┘
         │    ┌─────────────────────────────┐
         │    │    Calculate drive duty     │──S32
         │    └─────────────────────────────┘
         │                 │        S5
         │          NO  ◇ Perform ◇
         └────────────── control?
                           │ YES
         ┌─────────────────────────────┐
    S6 ──│  Control with the calculated │
         │       newest drive duty      │
         └─────────────────────────────┘
         ┌──────────────┤
         │              │            S7
         │         ◇ Constant drive ◇
         │           instruction time>        NO
         │           current saturation time ──────┐
         │                ?                         │
         │                │ YES                     │
         │    ┌─────────────────────────────┐       │
 S33 ────│    │ Calculated drive duty by (7) │       │
         │    └─────────────────────────────┘       │
         │                 │◄───────────────────────┘
         │            S9   │
         │         NO  ◇ Terminate ◇
         └────────────── control?
                           │ YES
         ┌─────────────────────────────┐
 S10 ────│     Terminate control       │
         └─────────────────────────────┘
                    ( Return )
```

*Fig. 13*

*Fig. 18*

Fig. 15

## Fig. 16

```
                    ( Start )
                        |
  +-------------------->|
  |     +--------------------------------+
  |     |     Output non-drive duty      |——S15
  |     +--------------------------------+
  |                     |
  |     +--------------------------------+
  |     | Wait until current saturation time |——S16
  |     +--------------------------------+
  |                     |
  |     +--------------------------------+
  |     | Receive current value information |——S35
  |     |       and time information      |
  |     +--------------------------------+
  |                     |
  |     +--------------------------------+
  |     |      Calculate drive duty      |——S36
  |     +--------------------------------+
  |                     |
  |     +--------------------------------+
  |     |       Detect wheel state       |——S19
  |     +--------------------------------+
  |                     |         S20
  |      NO      <  Perform         >
  +--------------<  ABS control?    >
                 <                  >
                        | YES
     +--------------------------------+
     |     Perform ABS control with    |——S21
     |    calculated newest drive duty |
     +--------------------------------+
                        |
  +-------------------->|          S22
  |              <   Constant drive    >
  |              <  instruction time>  >   NO
  |              < current saturation time >----+
  |              <         ?          >         |
  |                        | YES              |
  |  S37                                        |
  |     +--------------------------------+      |
  |     |   Calculate drive duty by (7)  |      |
  |     +--------------------------------+      |
  |                        |<-----------------+
  |                        |          S24
  |      NO       <    Terminate      >
  +--------------<    ABS control?    >
                 <                    >
                         | YES
     +--------------------------------+
 S25—|     Terminate ABS control      |
     +--------------------------------+
                         |
                    ( Return )
```

*Fig. 17*

+Va

90

71 Pulse generator

(Pulse output)

Driver

51

(Current)

8

(Pulse signal information)

(Duty instruction)

Feedback section

52

Duty instructor

(Current value information)

Current detector

(Current)

72

4

58

*Fig. 20*

EP 0 779 631 A2

## Fig. 21

Start

Output duty 1 for predetermined time — S41

Wait for predetermined time — S42

Receive current value information, time information, source voltage value — S43

Calculate drive duty — S44

S5 — Perform control? — NO

YES

Control with the calculated newest drive duty — S6

S7 — Constant drive instruction time > current saturation time ? — NO

YES

S33 — Calculated drive duty by (7)

S45 — Calculate drive duty by (22), (23)

S9 — Terminate control? — NO

YES

S10 — Terminate control

Return

*Fig. 22*

*Fig. 23*

*Fig. 24*

```
                    ┌─────────────┐
                    │    Start    │
                    └──────┬──────┘
                           │
         ┌─────────────────▼─────────────────┐
    ┌───►│     Detect source voltage value   │──S51
    │    └─────────────────┬─────────────────┘
    │    ┌─────────────────▼─────────────────┐
    │    │ Output non-drive duty corresponding│──S52
    │    │        to source voltage value     │
    │    └─────────────────┬─────────────────┘
    │    ┌─────────────────▼─────────────────┐
    │    │   Wait until current saturation time│──S2
    │    └─────────────────┬─────────────────┘
    │    ┌─────────────────▼─────────────────┐
    │    │   Detect current value information  │──S3
    │    └─────────────────┬─────────────────┘
    │    ┌─────────────────▼─────────────────┐
    │    │        Calculate drive duty         │──S4
    │    └─────────────────┬─────────────────┘
    │              ┌───────▼───────┐  S5
    │        NO    │    Perform    │
    └──────────────┤    control?   │
                   └───────┬───────┘
                           │ YES
         ┌─────────────────▼─────────────────┐
         │    Control with the calculated     │──S6
         │          newest drive duty          │
         └─────────────────┬─────────────────┘
                           │
    ┌──────────────────────▼─────────────────┐
    │       ┌──────────────────────┐          │
    │  S7──►│    Constant drive     │   NO
    └───────┤   instruction time >  ├─────────────┐
            │ current saturation time│            │
            │          ?             │            │
            └───────────┬───────────┘            │
                        │ YES                     ▼  S45
          ┌─────────────▼─────────────┐  ┌─────────────────┐
     S8──►│  Calculate drive duty by (2)│  │ Calculate drive duty │
          └─────────────┬─────────────┘  │    by (22), (23)     │
                        │                 └──────────┬──────────┘
                        │◄───────────────────────────┘
               ┌────────▼────────┐ S9
          NO   │    Terminate    │
    ┌──────────┤     control?    │
    │          └────────┬────────┘
    │                   │ YES
    │       ┌───────────▼───────────┐
    └──S10──┤    Terminate control  │
            └───────────┬───────────┘
                 ┌──────▼──────┐
                 │   Return    │
                 └─────────────┘
```

Fig. 25

## Fig. 26

```
                    ( Start )
                        │
         ┌──────────────┤
         │   ┌──────────────────────────────────┐
         │   │  Detect source voltage value      │──S61
         │   └──────────────────────────────────┘
         │   ┌──────────────────────────────────┐
         │   │ Output non-drive duty corresponding│──S62
         │   │      to source voltage value      │
         │   └──────────────────────────────────┘
         │   ┌──────────────────────────────────┐
         │   │  Wait until current saturation time│──S2
         │   └──────────────────────────────────┘
         │   ┌──────────────────────────────────┐
         │   │  Receive current value information │──S31
         │   │        and time information        │
         │   └──────────────────────────────────┘
         │   ┌──────────────────────────────────┐
         │   │       Calculate drive duty         │──S32
         │   └──────────────────────────────────┘
         │              │
         │        ┌─────┴─────┐  S5
         │   NO   │  Perform  │
         └────────│  control? │
                  └─────┬─────┘
                       YES
         ┌──────────────────────────────────┐
         │   Control with the calculated      │──S6
         │        newest drive duty           │
         └──────────────────────────────────┘
         ┌──────────────┤
         │       S7 ┌────┴────┐
         │          │ Constant drive       │
         │          │ instruction time >    │   NO
         │          │ current saturation time│──────┐
         │          │        ?              │      │
         │          └────┬────┘             │      │       S45
         │              YES              ┌────────────────────────┐
         │   ┌──────────────────────────┐│   Calculate drive duty  │
    S33──│   Calculate drive duty by (7) ││      by (22), (23)      │
         │   └──────────────────────────┘└────────────────────────┘
         │          │◄───────────────────────────┘
         │     S9 ┌──┴──┐
         │   NO   │Terminate│
         └────────│ control?│
                  └────┬────┘
                      YES
         ┌──────────────────────────────────┐
    S10──│         Terminate control          │
         └──────────────────────────────────┘
                        │
                    ( Return )
```

## Fig. 27

Start

Output non-drive duty ~S71

Wait until current saturation time ~S72

Receive current value information, time information and source voltage value ~S73

S74 — Sampled predetermined times ? — NO

YES

Select those near the last detected value ~S75

Calculate average value of current value information and time information ~S76

Calculate drive duty ~S77

NO — Perform control? ~S78

YES

Control with the calculated newest drive duty ~S79

S7 — Constant drive instruction time > current saturation time ? — NO

YES

S33 — Calculate drive duty by (7)

S45 — Calculate drive duty by (22), (23)

S9 — NO — Terminate control?

YES

S10 — Terminate control

Return

Fig. 28